Europäisches Patentamt

European Patent Office

Office européen des brevets

(19)

(11) Publication number: 0 366 324
A2

# (12) EUROPEAN PATENT APPLICATION

(21) Application number: 89310611.2

(22) Date of filing: 16.10.89

(51) Int. Cl.⁵: G06F 12/08

(30) Priority: 28.10.88 US 264058

(43) Date of publication of application:
02.05.90 Bulletin 90/18

(84) Designated Contracting States:
AT BE CH DE ES FR GB GR IT LI LU NL SE

(71) Applicant: APOLLO COMPUTER INC.
330 Billerica Road
Chelmsford Massachusetts 01824(US)

(72) Inventor: Mageau, Paul
7 Maplewood Drive
Townsend Massachusetts 01469(US)

(74) Representative: Arthur, Bryan Edward et al
Withers & Rogers 4 Dyer's Buildings Holborn
London EC1N 2JT(GB)

(54) Efficient cache write technique through deferred tag modification.

(57) An efficient cache write technique useful in digital computer systems wherein it is desired to achieve single cycle cache write access even when the processor cycle time does not allow sufficient time for the cache control to check the cache tag" for validity and to reflect those results to the processor within the same processor cycle. The novel method and apparatus comprising a two-stage cache access pipeline which embellishes a simple "write-thru with write-allocate" cache write policy.

## FIELD OF THE INVENTION

This invention relates to digital computer systems which incorporate data caching methods and apparatus.

## BACKGROUND OF THE INVENTION

Under ideal conditions, increased processor speed translates into an increased demand on memory per unit time. Processing elements often are capable of operating at rates that exceed those of dynamic random access memories (DRAM) which are most often used for primary storage. When system performance is paramount, an additional level of memory hierarchy, called a cache", whose performance is matched to that of the associated processor is incorporated.

Caches are small (when compared to the size of the primary storage), fast localized memory arrays which supply data at rates which do not impede the associated processor's performance. The viability of caches are based on the probabilities that programs tend to reference a particular piece of data many times before moving onto another (temporal locality), and that successive references made tend to be relatively close to the previous reference made (spatial locality). Cache designers capitalize on this by using the knowledge of the recent past (i.e., previous data reference patterns) to predict the near future in that they collect data relating to references made recently for subsequent use.

In processing systems which employ data caches, every cache reference made must be validated. Every cache entry must have associated with it a "tag" which describes which data in main memory is currently being represented by it and a "valid" bit which indicates the validity of the cache entry itself. A "cache hit" occurs when the desired data resides in the cache while a "cache miss" occurs when it is not. The actual transfer of data between the processor and the cache is often conditioned by the results of the cache tag lookup. This tends to increase effective cache access times which often leads to a proportional increased processor cycle times or system performance degradation.

Minimizing cache store latency is particularly challenging in that the processor must often stall until the cache access is validated since it is the source of the data. Additionally, all cache data modifications must be reflected in the state of the cache tag to maintain cache consistency.

A common cache store policy is to condition the cache update on the results of the cache tag lookup. When a cache hit occurs, the cache modification may then proceed. If a cache miss occurs, one of two actions may take place, cache write bypass or cache write allocation. Cache write bypass is not a general solution since this is not usable for virtual cache designs, but it does achieve single cycle cache access since no cache modification takes place. Simple cache write allocation would take two cache cycles: cache tag read and cache data/tag write. The serialization of the cache tag lookup to cache data modify increases the effective cache store access time by a factor of two, one cache tag read and one cache data and optionally tag write cycle. Since the processor is the source of the data, it must often stall until the cache tag check is completed.

Another approach which avoids this serialization penalty completely ignores the state of the cache tag. With this approach, every cache store operation bypasses the cache. To maintain cache consistency, the modified cache entry is invalidated without regard. The processor need only supply data for one cache (data) write cycle. This approach reduces the effective store cache access time, but not without significant losses in cache performance since these invalidations may purge useful data from the cache.

## SUMMARY OF THE INVENTION

The referred cache tag modification according to the present invention provides a simple, efficient, low-overhead cache write technique having a two-stage, overlapped, cache split-cycle access pipeline, which updates the data store in the first or ACC stage and defers any tag store modification until the state of the cache tag check was known. Since the processor is capable of issuing byte writes, a "valid" bit per byte of cache width is employed. If a write-hit is detected, no tag modification is necessary and the processor again

2

has the "illusion" of a single cycle cache access. If the tag matches but the proper valid bits are not set, the cache management function "schedules" a cache tag update for the cycle following the second or EXC stage of the write that missed.

The cache management function (CMF) is capable of merging the previous tag valid bit state of the cache with the valid bits that will be set as a result of this write operation. Additionally, if there is a write operation in the immediately following cache operation that is addressed to the same cache line, the bytes selected by this store are merged with the tag update state, thereby avoiding a potential back-to-back write miss. If the tag mismatches, the previous tag/valid bit state is discarded and the tag update state is changed and becomes the bytes being selected by the store in its EXC stage concatenated with the appropriate address tag information. If there is a write operation immediately following that is addressed to the same cache line, the bytes selected by this store, in its ACC stage, are merged with the tag update state. In either case, this cache write update policy is called "write-allocate", meaning space is allocated in the cache on a write-miss. Moreover, during a write-miss sequence, the processor need not be stalled since the data had been captured in the cache. Since the cache management function must regain control to service the cache miss, the processor need only stall if it needs to access the cache while the CMF is using it.

BRIEF DESCRIPTION OF THE DRAWINGS

These said further features of the present invention are better understood by reading the following detailed description taken together with the drawing, wherein:

Fig. 1 is a block diagram of a pipeline processor of incorporating one embodiment of the present invention;

Fig. 2 is a flow diagram showing the operation according to one embodiment of the present invention; and

Fig. 3 is a more detailed block diagram showing specific functional elements operative according to the flow chart of Fig. 2 in the implementation of Fig. 1.

Further details of one embodiment of the present invention are provided in Appendixes I and II.

DETAILED DESCRIPTION OF THE INVENTION

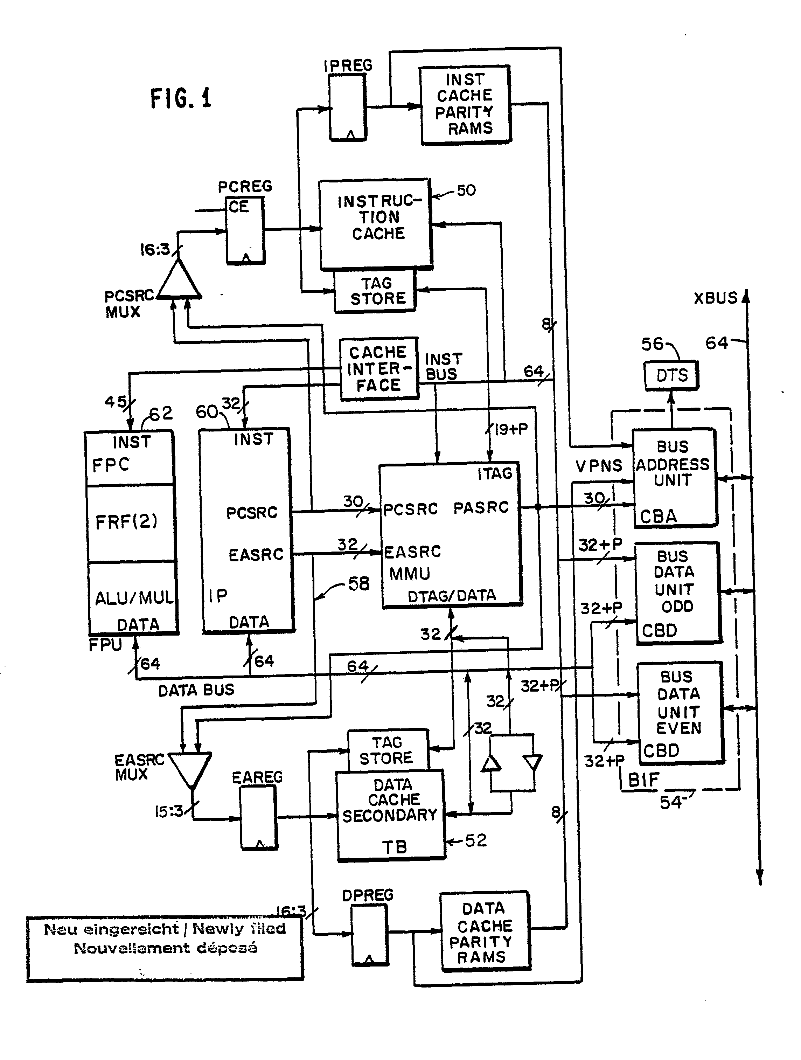

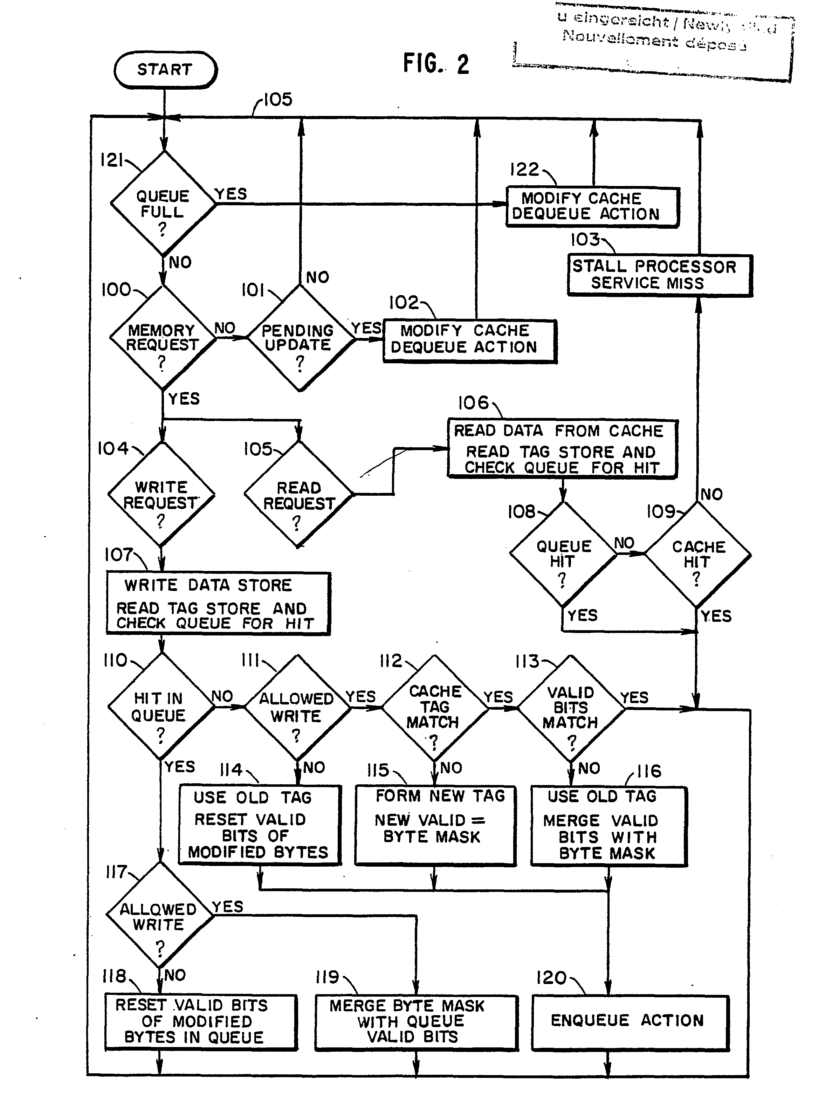

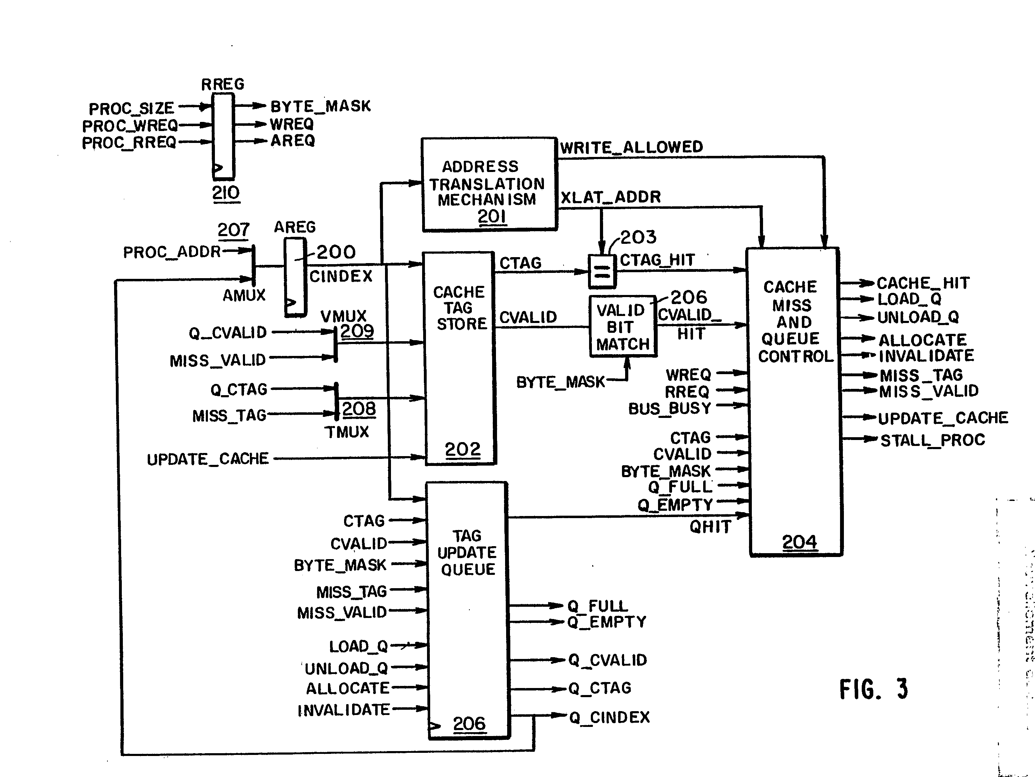

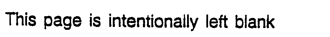

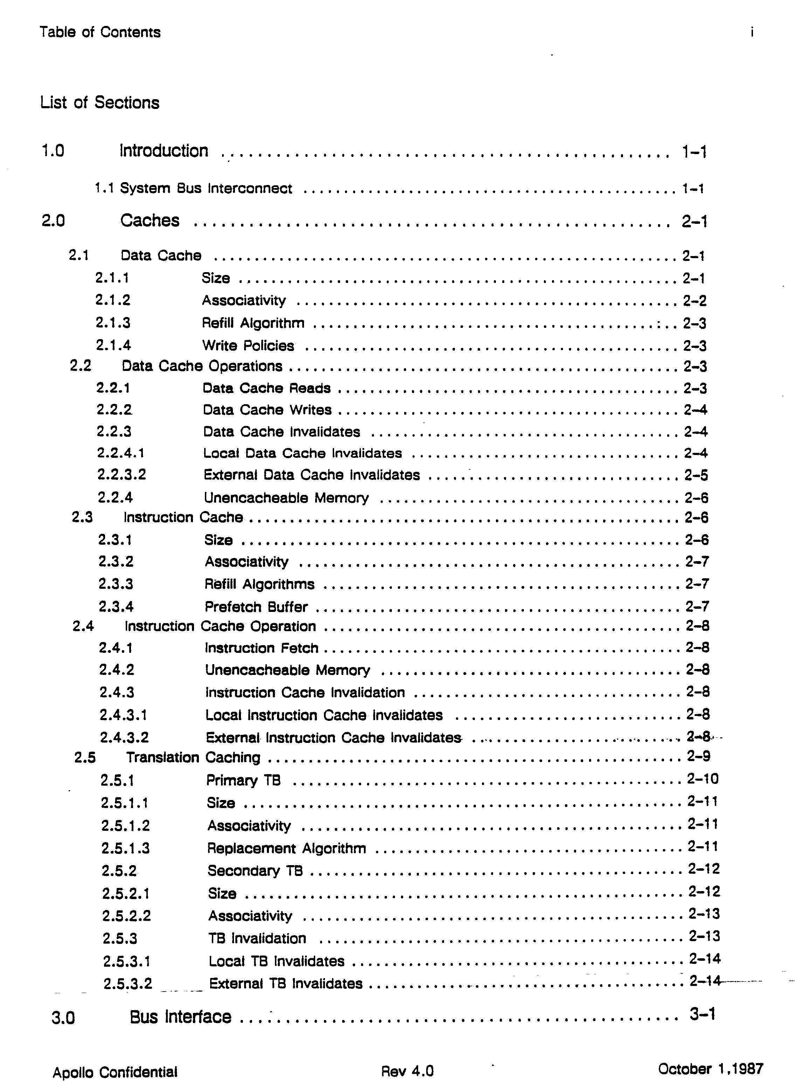

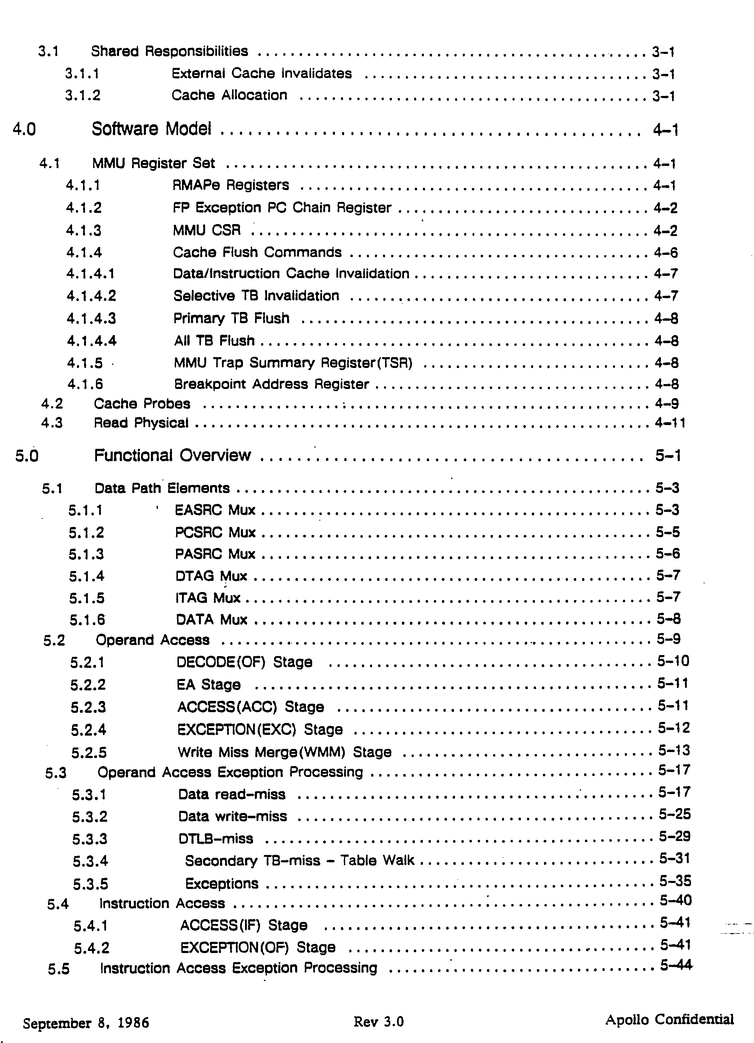

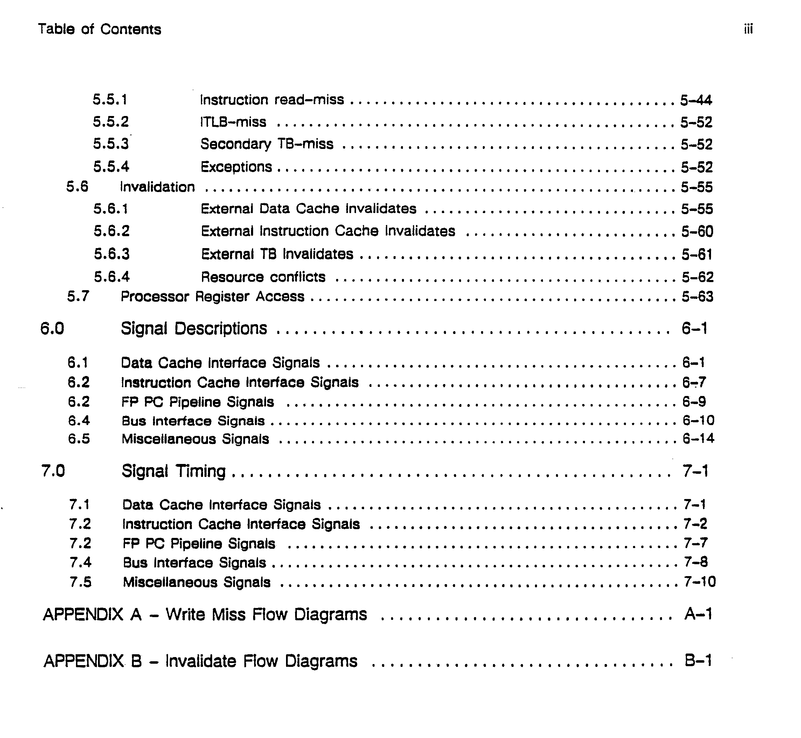

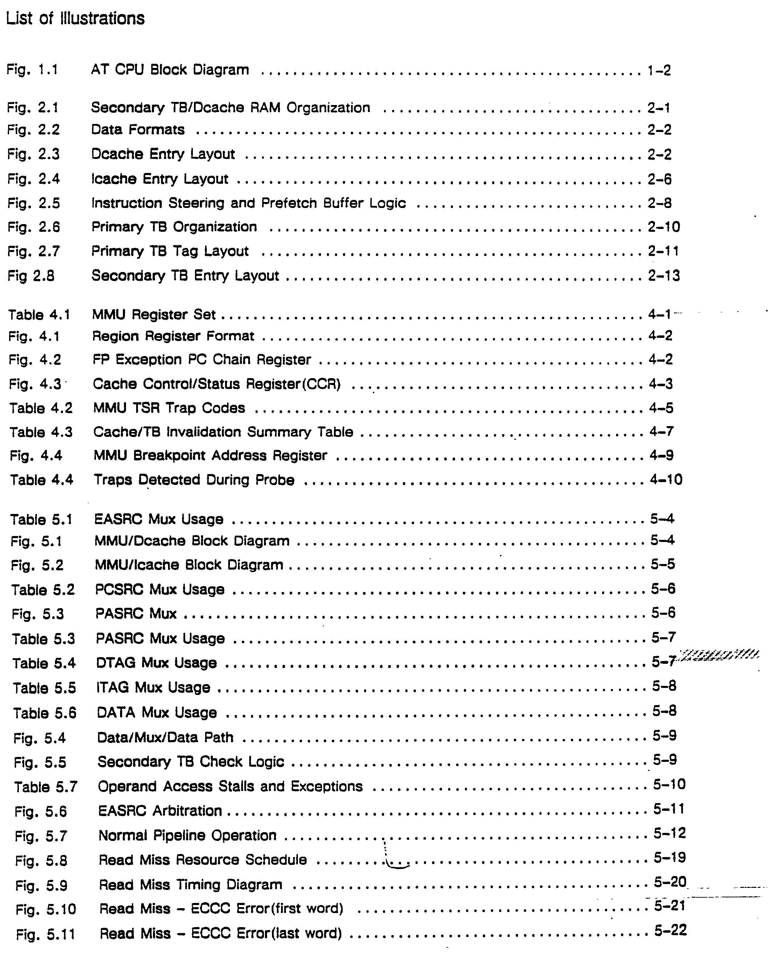

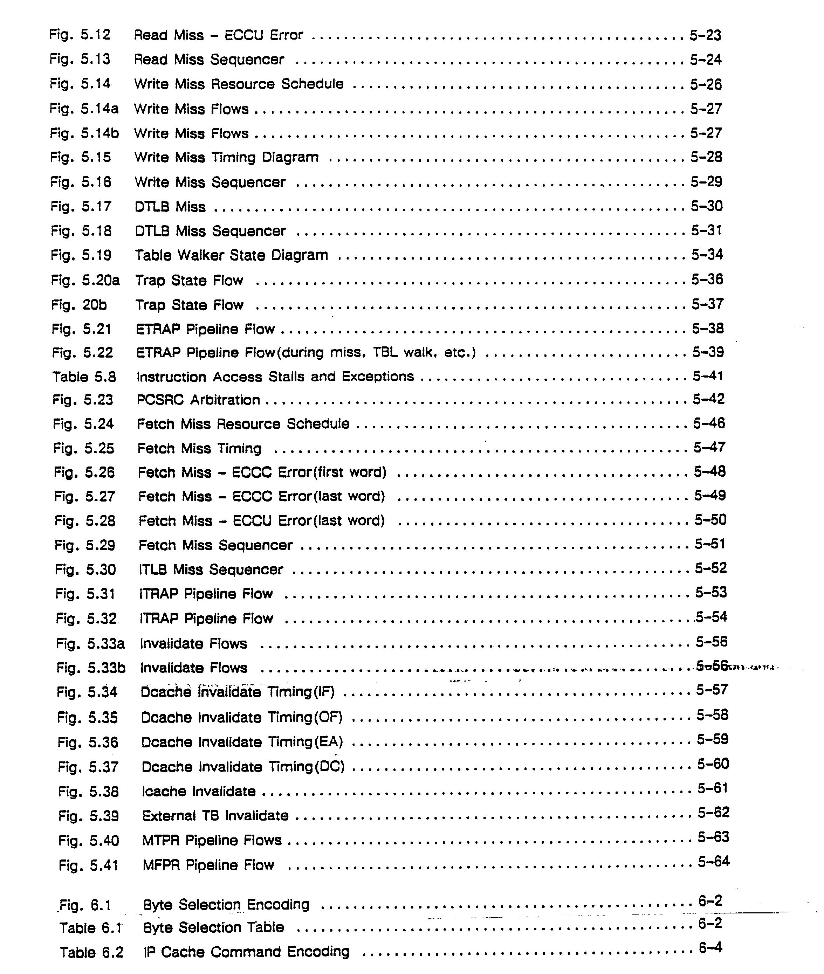

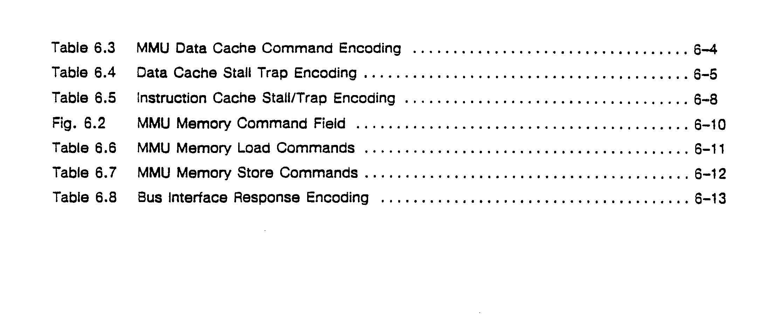

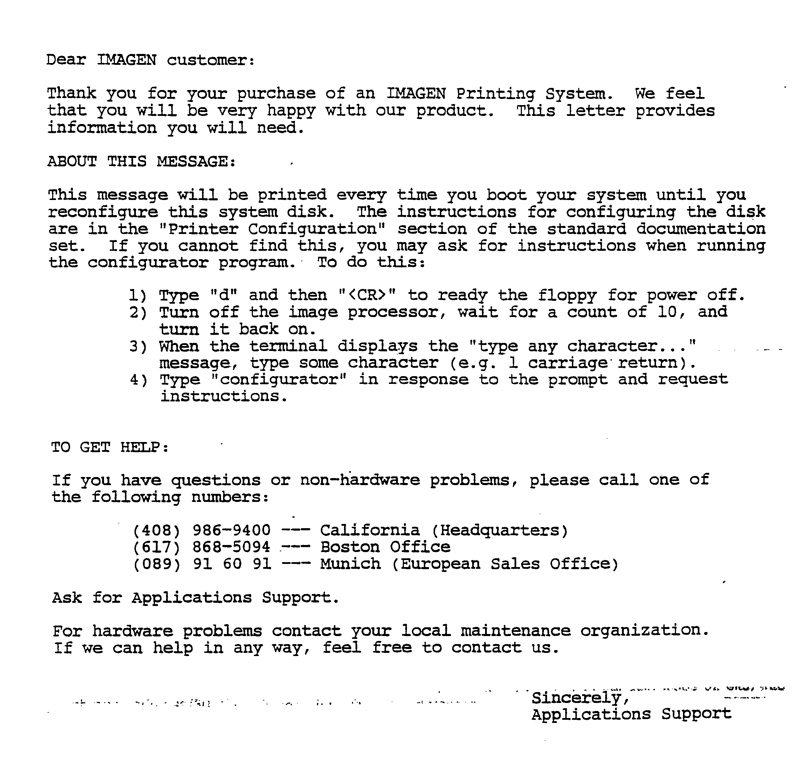

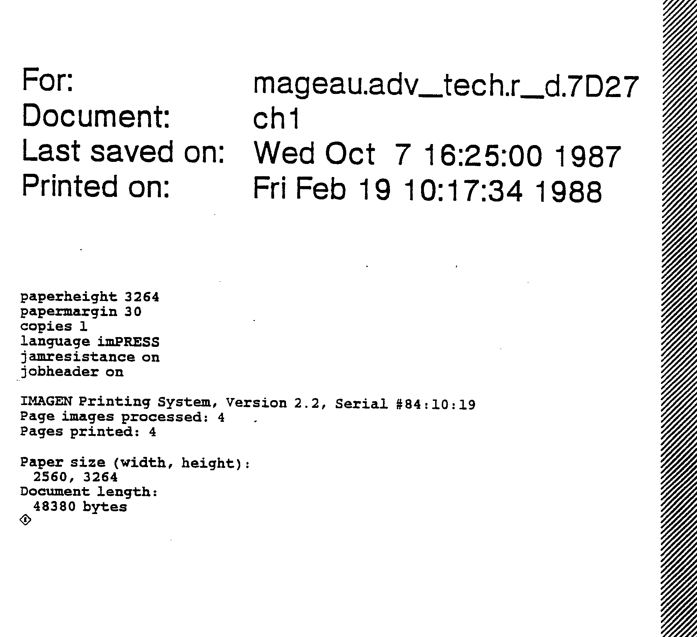

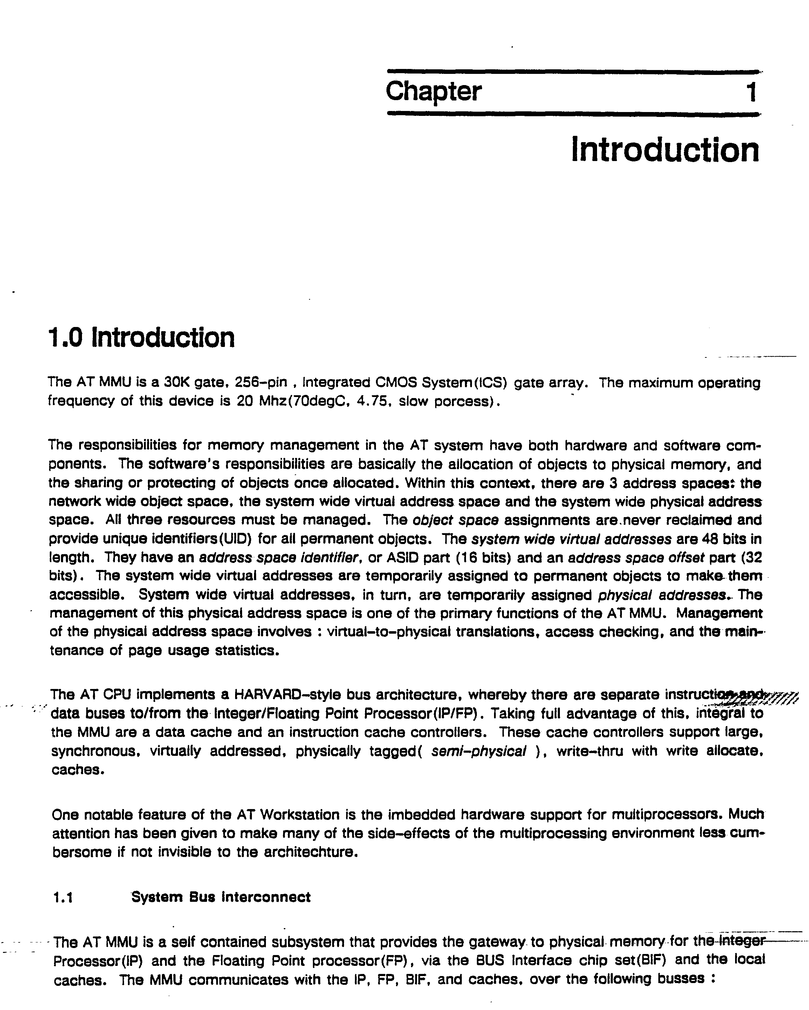

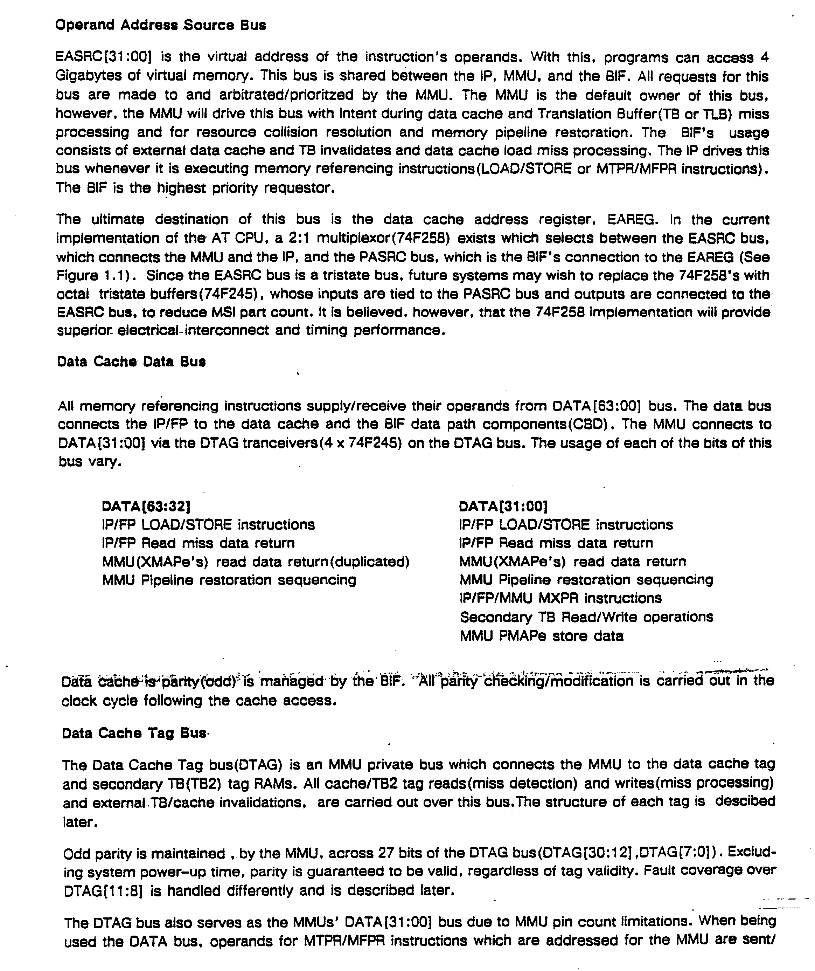

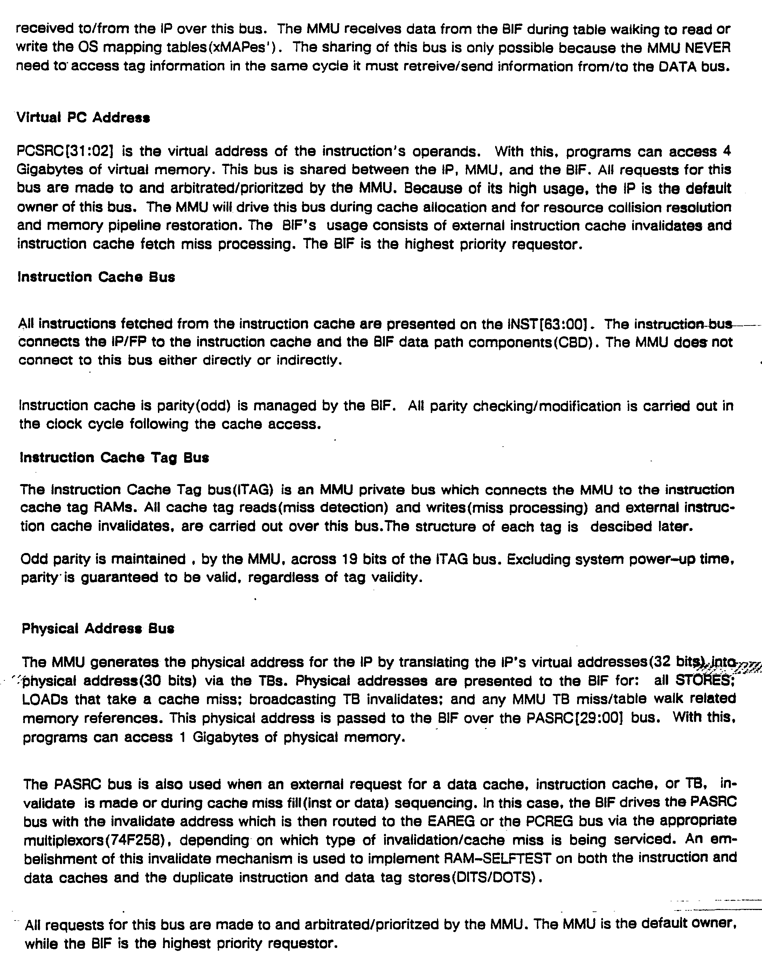

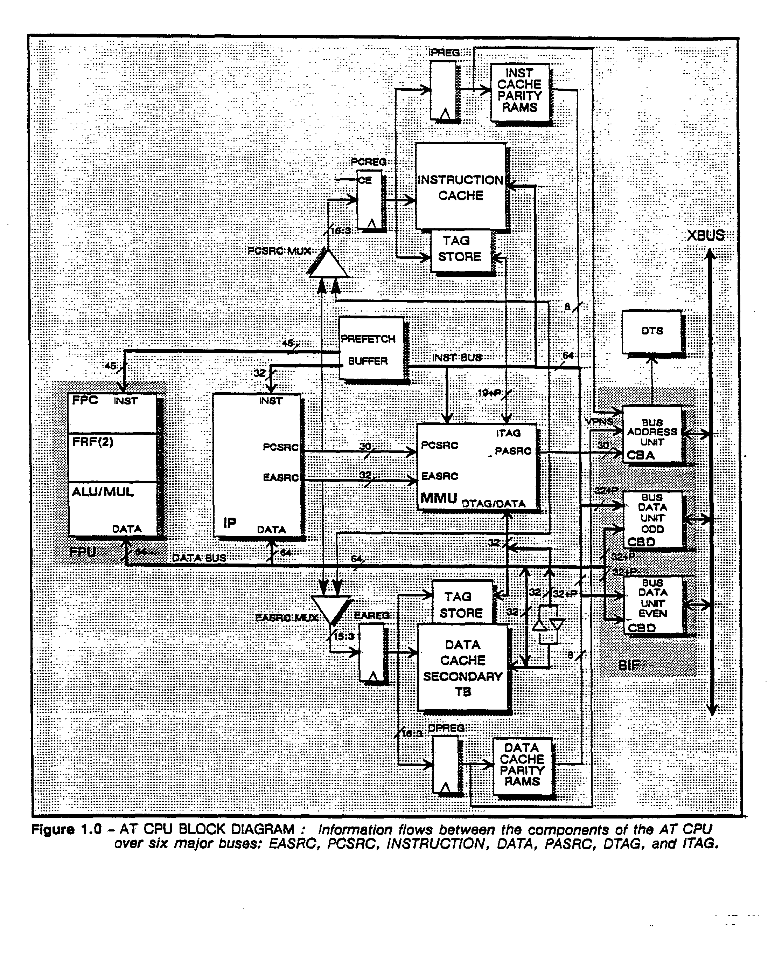

Referring to the process shown in the block diagram 50 of Fig. 1 for a read operation, the first cycle of cache access, herein called the ACCess (ACC) stage, involves transferring the requested cache data from the cache data store 52 to the processor 54. Additionally, the tag is transferred from the cache tag store 56 to the cache management function, in the Memory Management Unit (MMU) 60, which begins the cache tag comparison while other logic within the cache management function checks for non-cache related exceptions. Further details regarding exceptions are provided in APOLL-115XX, entitled DUPLICATE TAG STORE PURGE QUEUE, and in APOLL-119XX, entitled METHOD AND APPARATUS FOR DRAM MEMORY PERFORMANCE ENHANCEMENT, both filed concurrently herewith and incorporated by reference. By the end of the ACC stage, the data has been clocked into the processor 54 and cache tag compare is completed.

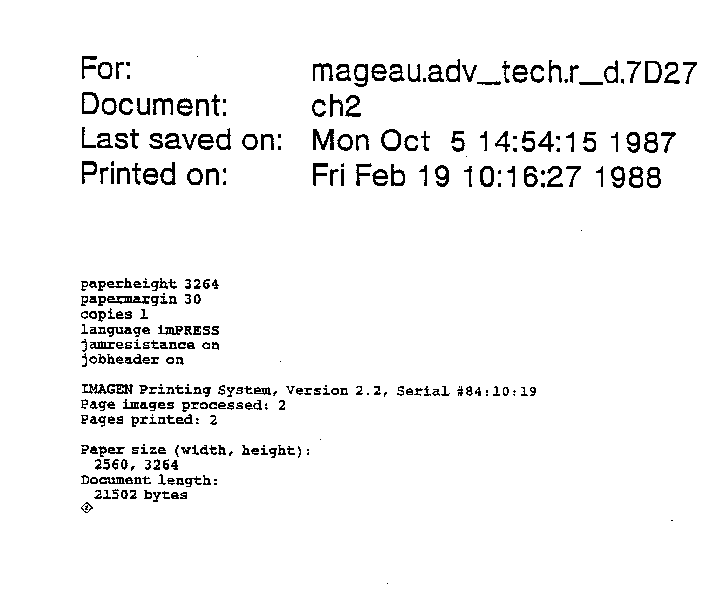

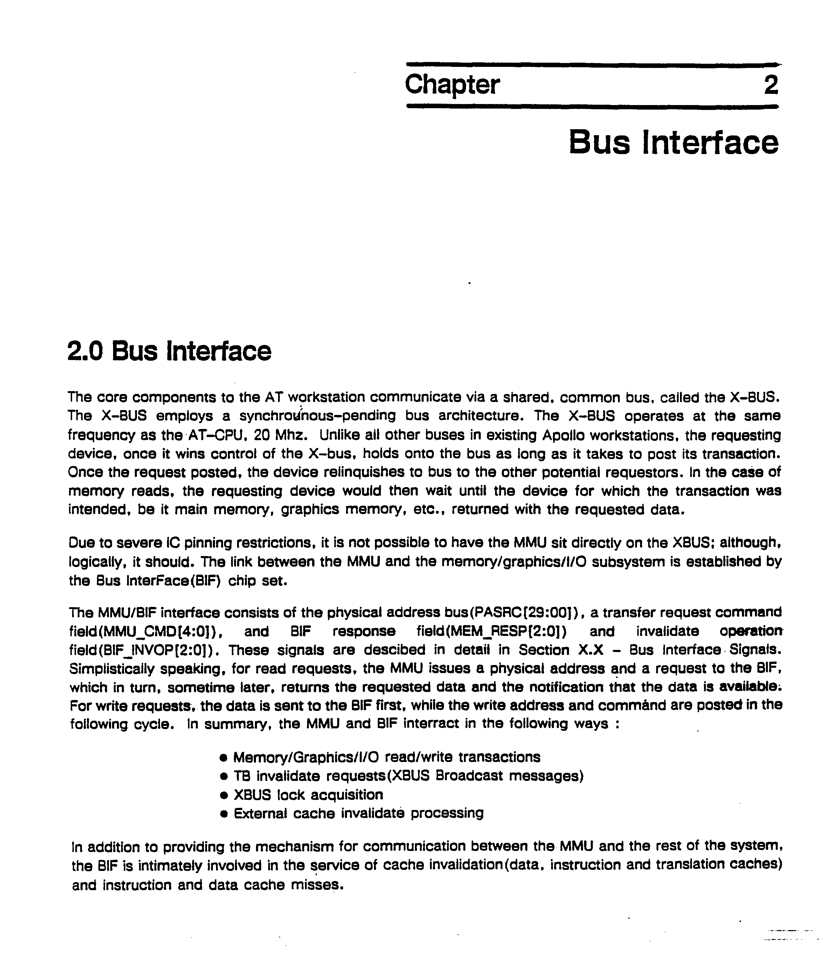

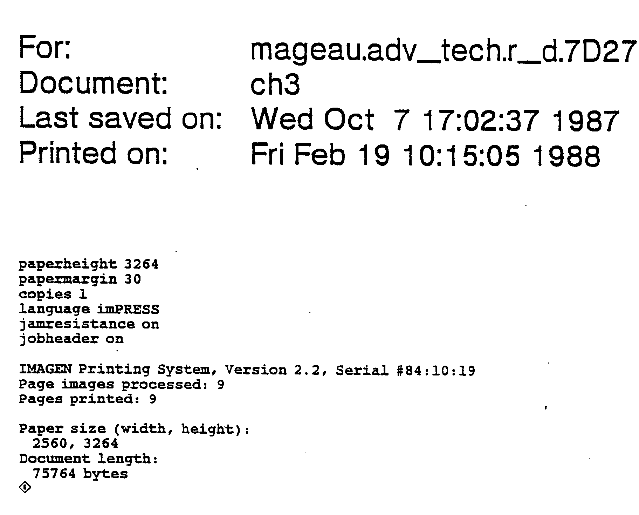

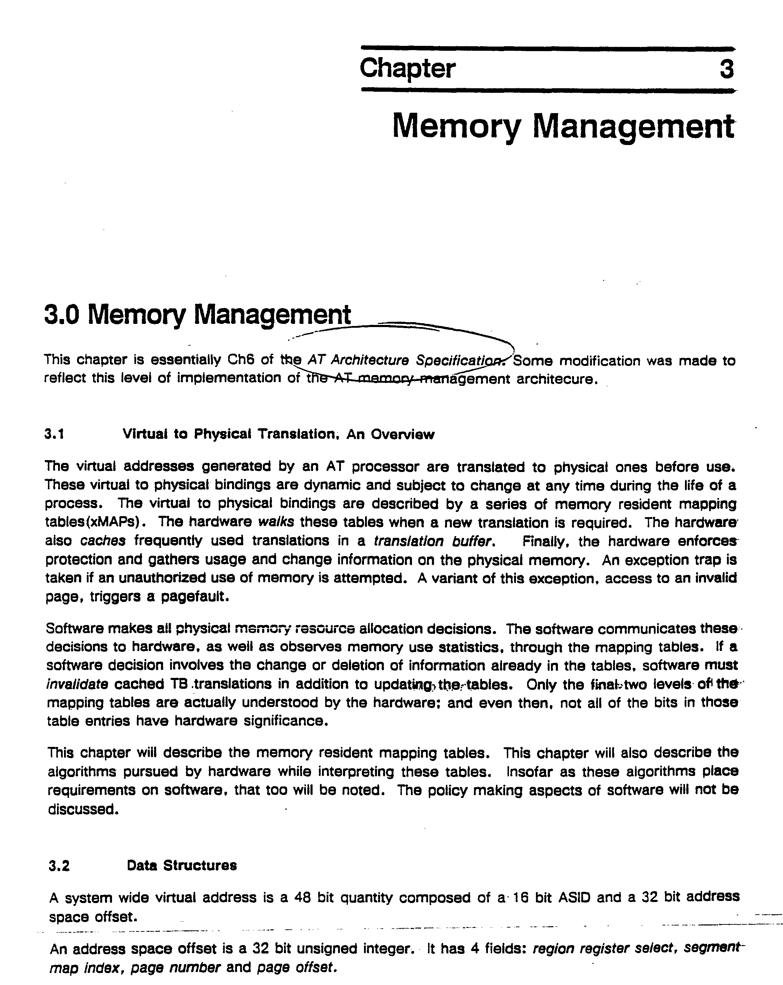

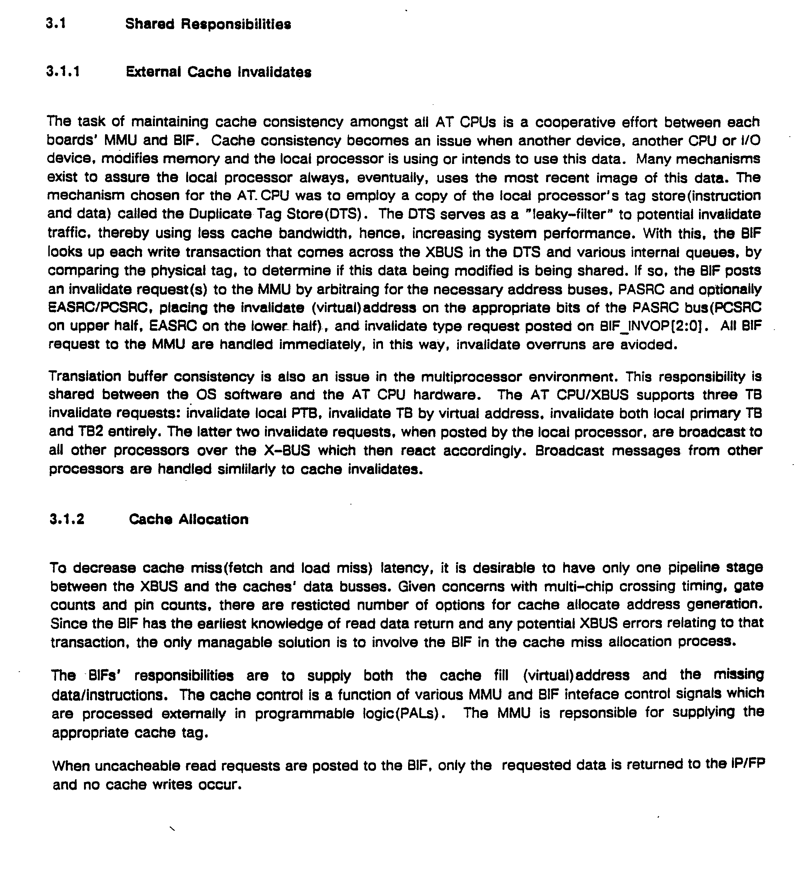

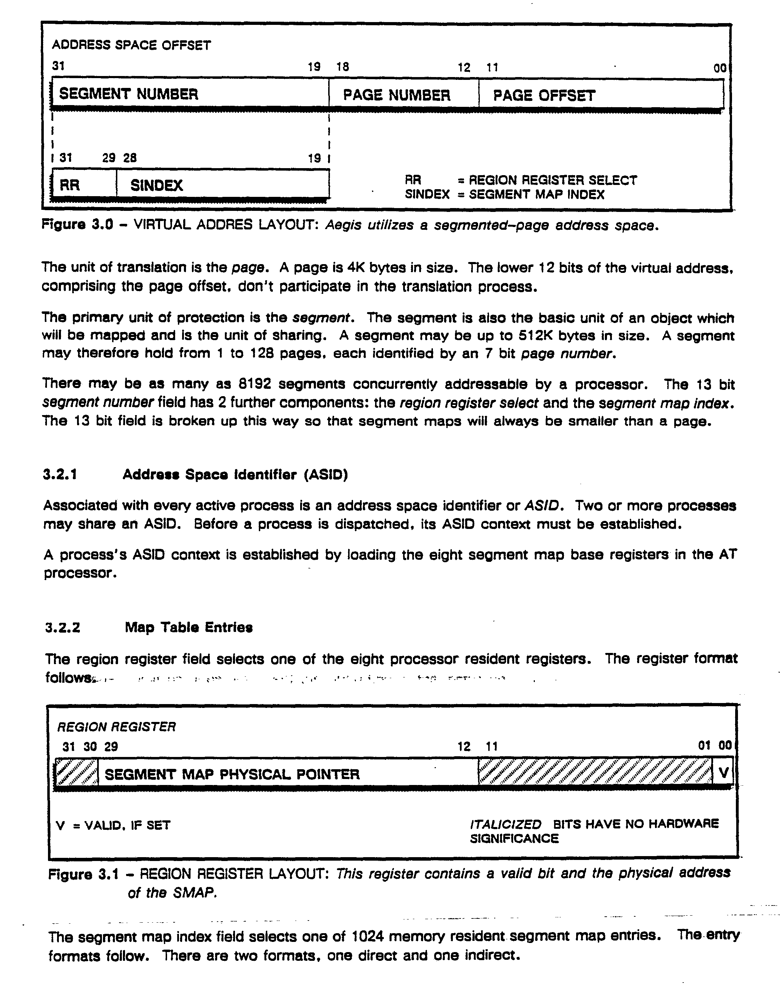

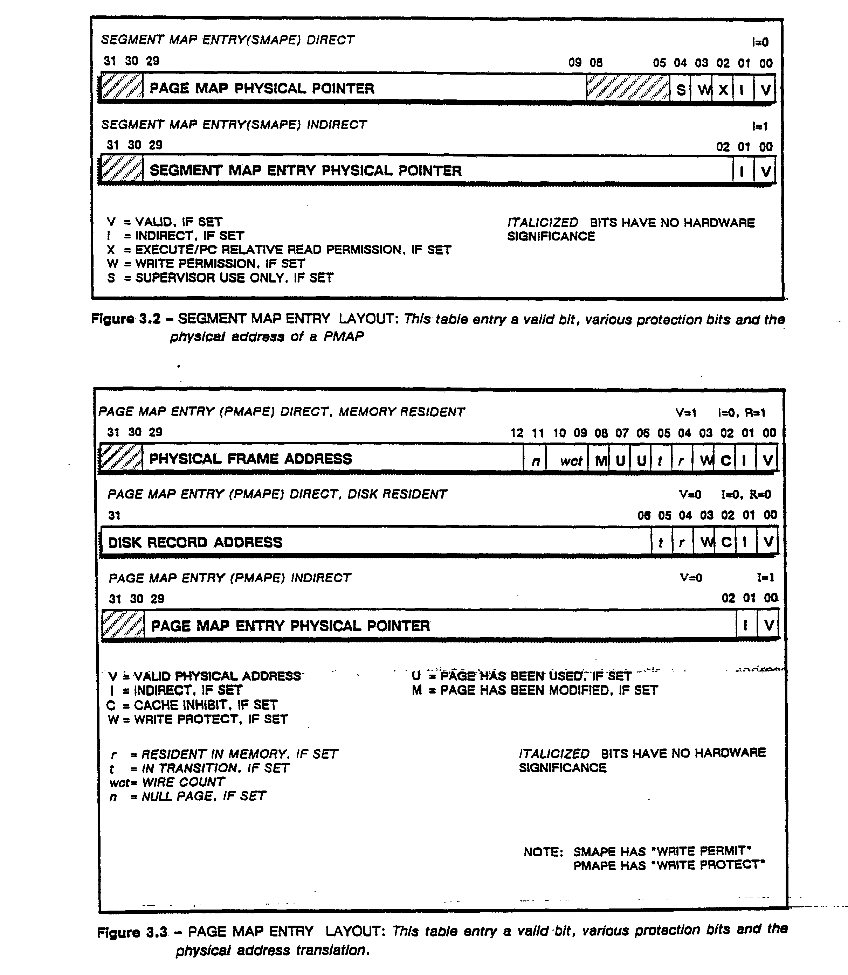

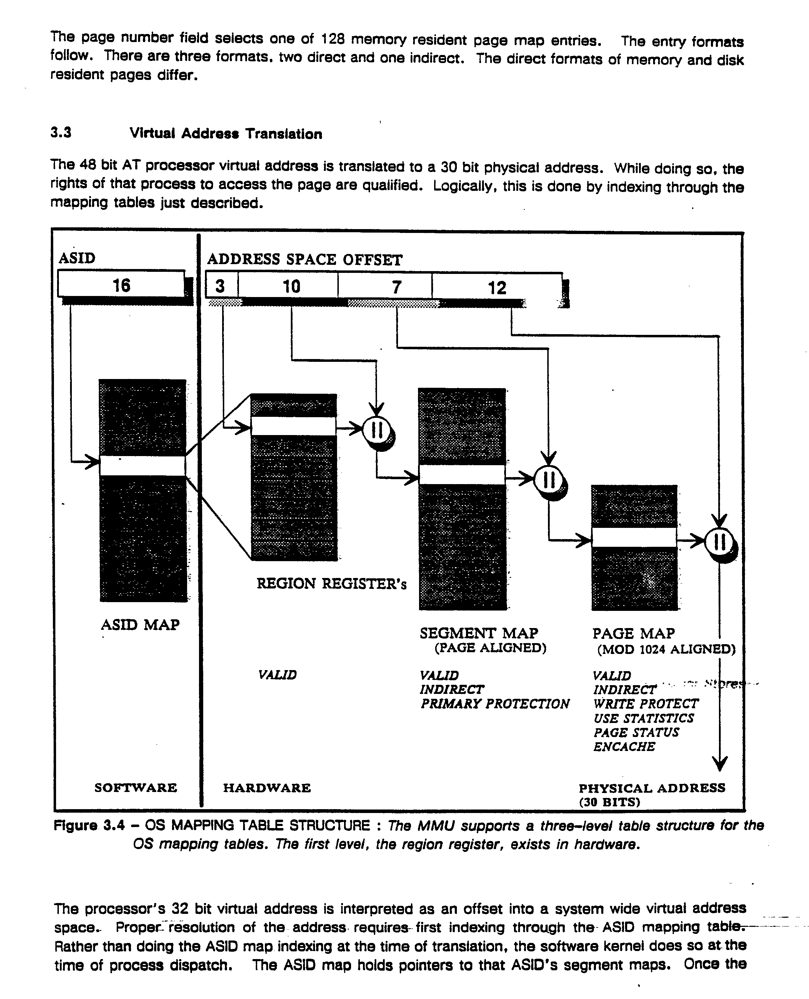

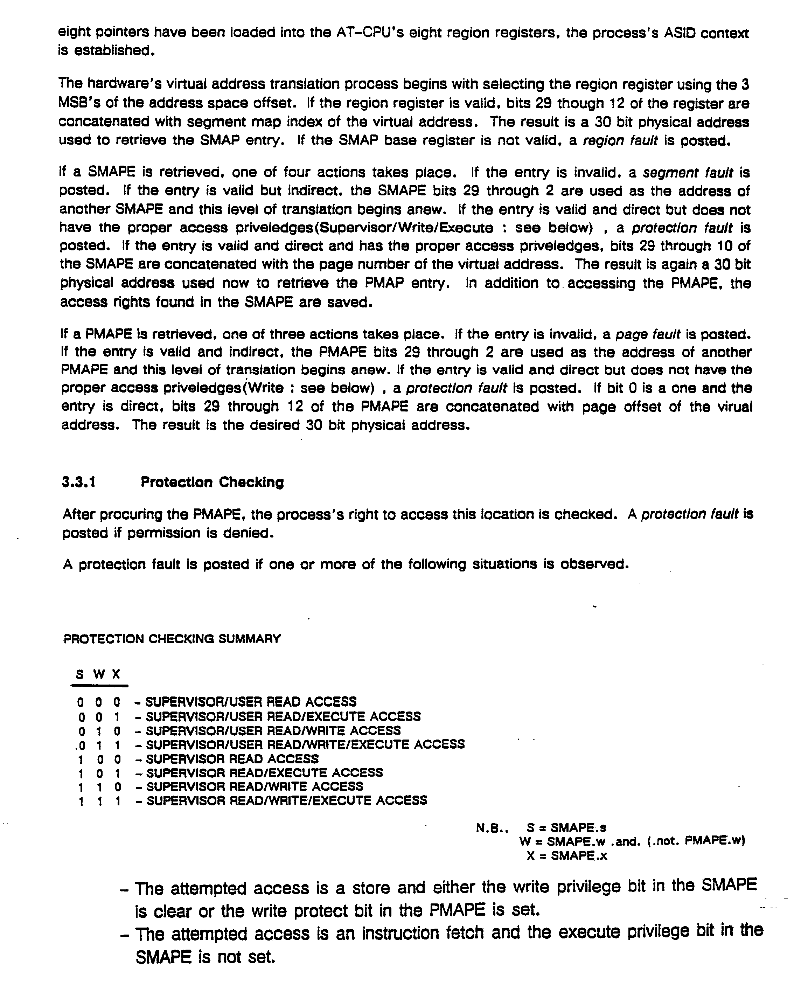

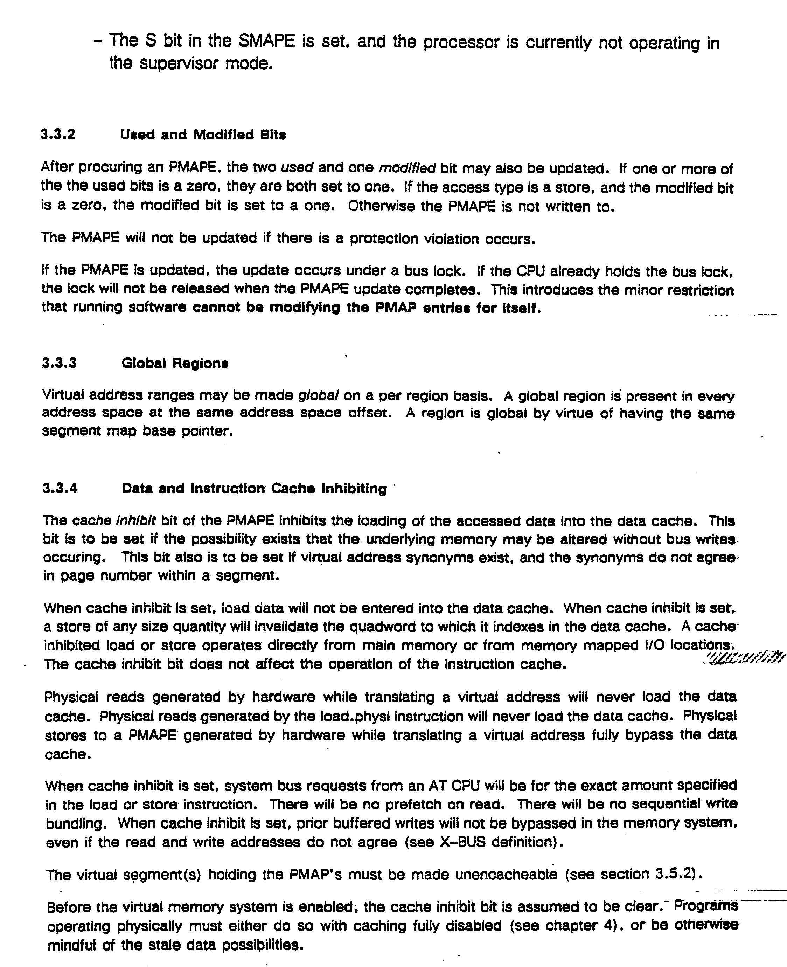

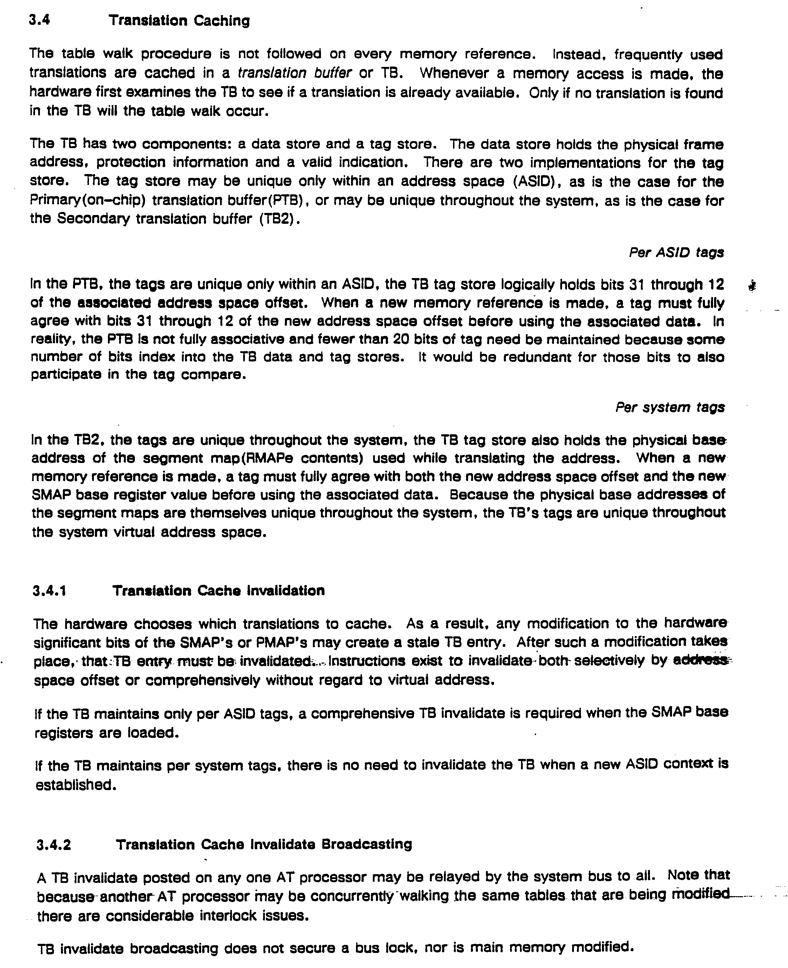

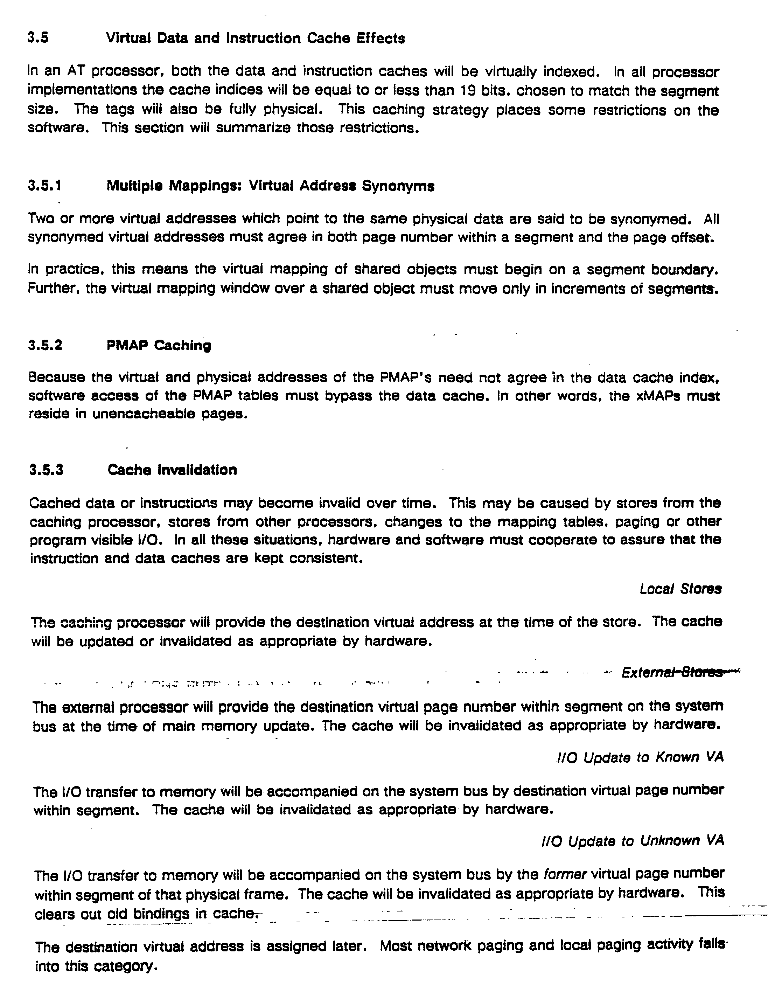

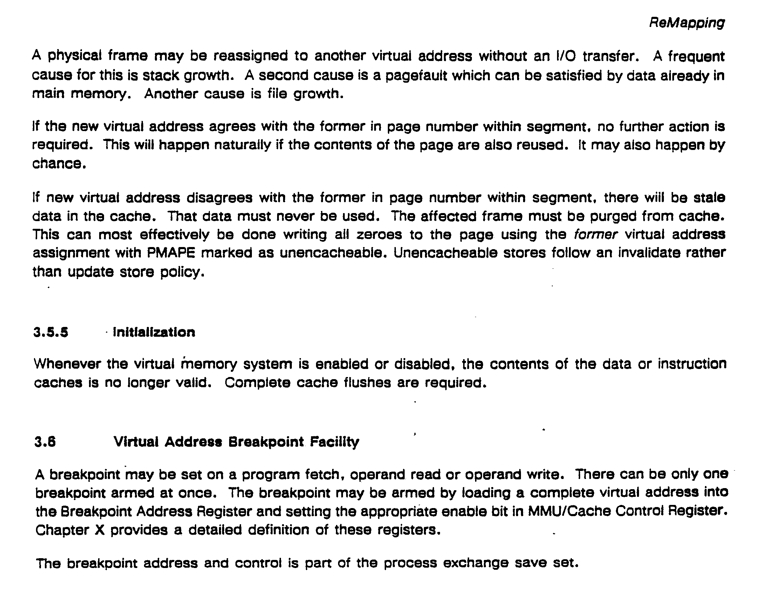

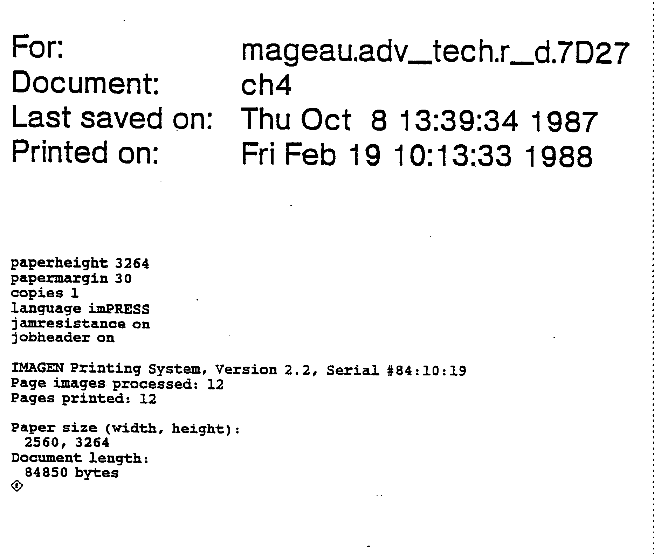

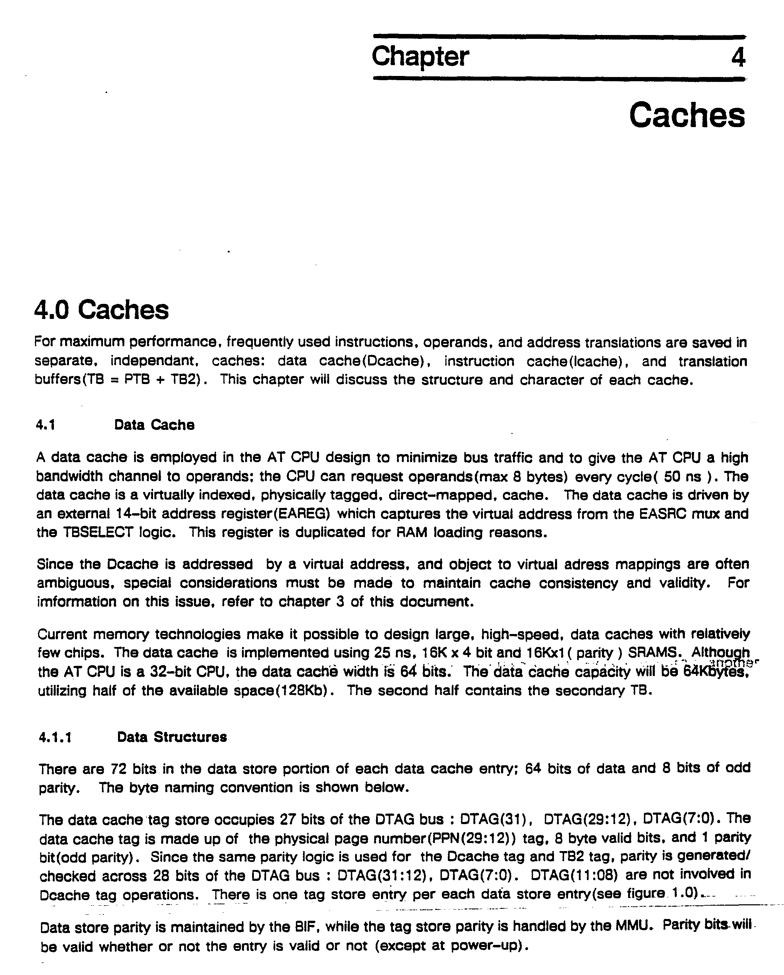

The present invention is described with respect to Figs. 2 and 3, wherein:

The method and apparatus of the present invention approaches the optimal solution which includes a means that neither destroys cache contents nor stalls the processor while the normal cache access is underway, achieving a single-cycle cache store access without a significant loss in system performance through deferred tag modification. Single-cycle cache store access is achieved by allowing the processor to modify cache data while the tag lookup is being performed. If a cache hit occurs, the processor proceeds uninterrupted. If a cache miss occurs, the tag must be modified to reflect the new contents of that cache entry, since the cache was modified before the status of the cache access was known. Tag modification must either result in the invalidation or the allocation of the modified cache entry. To increase cache performance, cache allocation should be adopted since it is always better to allocate data in a cache rather than purge some.

3

Typically, programs do not reference data in memory every cycle. This observation implies that there will always be unused cache bandwidth. It is the intention of this invention, through buffering, to defer tag modifications that result from cache write misses, to these "free" cache cycles so that processor stalls may be avoided. Tag modification deferment does imply that the cache is temporarily inconsistent. Subsequent cache accesses, to entries which have pending tag modifications, must validate their accesses against any pending tag updates scheduled in the tag modification buffer as well as the cache itself. Once the buffer is emptied, cache consistency is restored.

The number of deferred tag modifications is application dependent; this invention implies no conceptual limit. During short periods of time, programs tend to reference data that is physically close to one another. Given this, it is possible that successive deferred tag modifications may actually affect the same cache entry. If so, the tag modification operations may be "merged", thereby reducing the number of "free" cache cycles needed to update the cache and increasing the effectiveness of the tag modification buffer.

The primary concepts of this invention allowing single-cycle cache access are: to read/write the data cache data store now and to update the tag store later, if necessary; to defer tag modifications that result from write misses; to idle cache cycles to minimize the probability of processor stalls; to merge cache tag state, deferred tag state, and current reference state to achieve maximum performance.

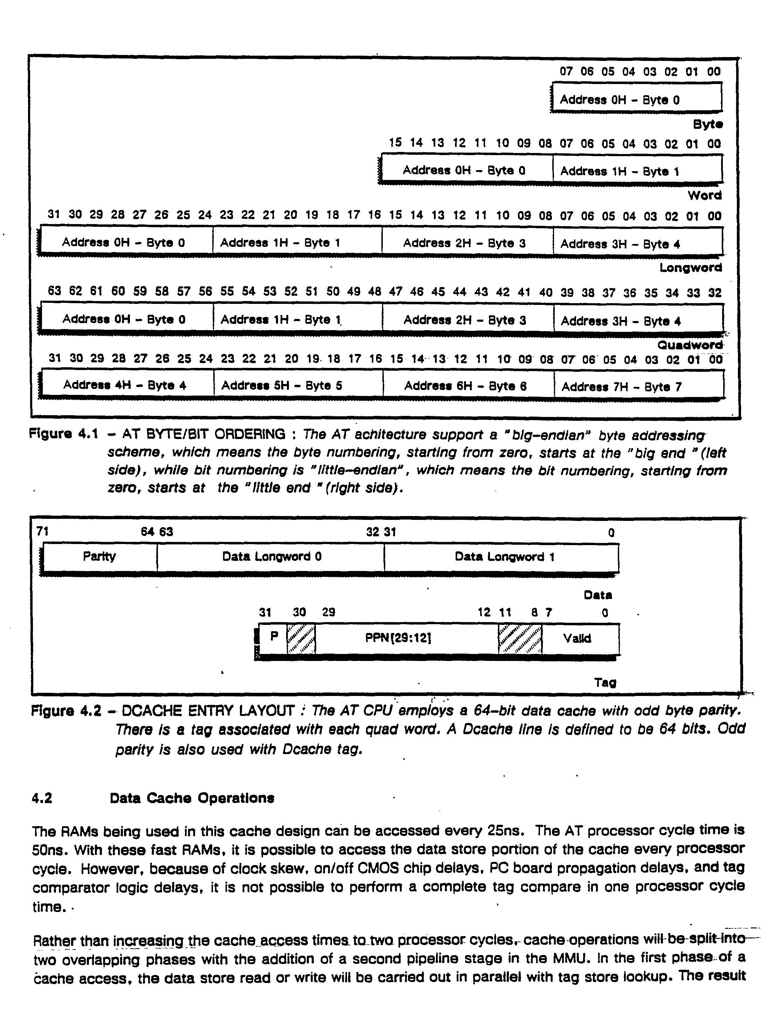

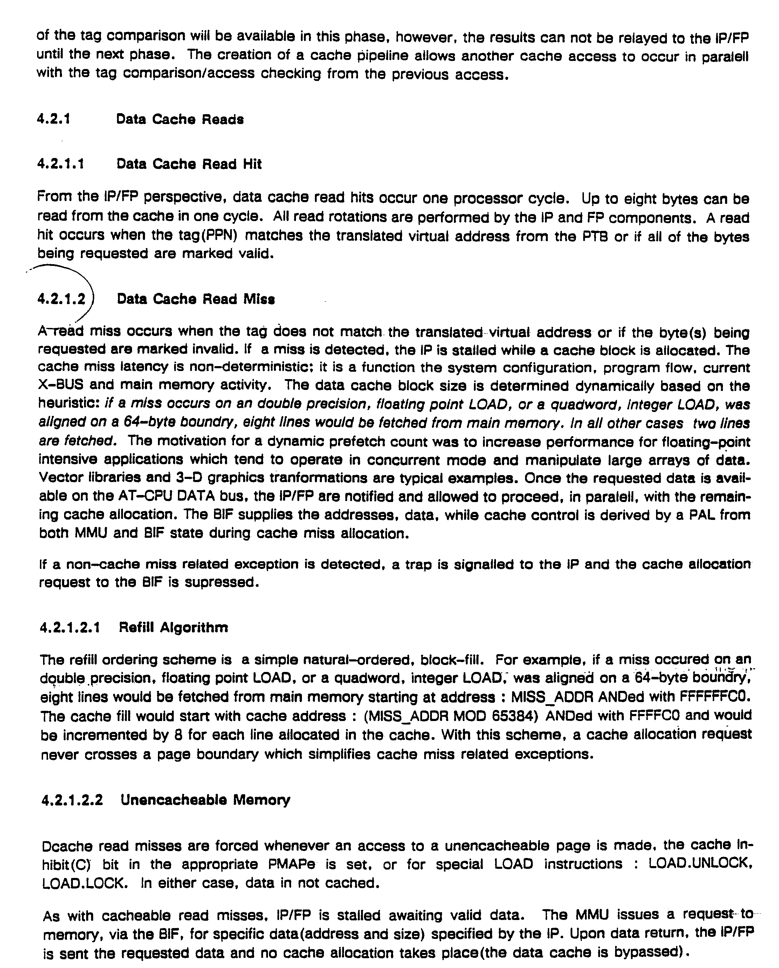

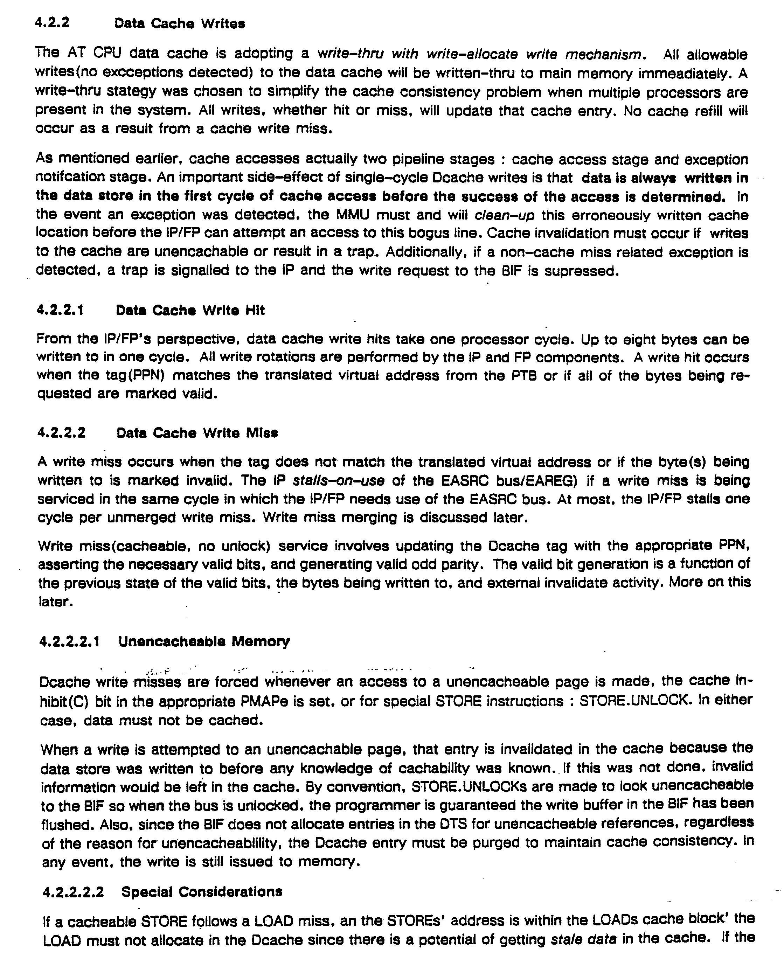

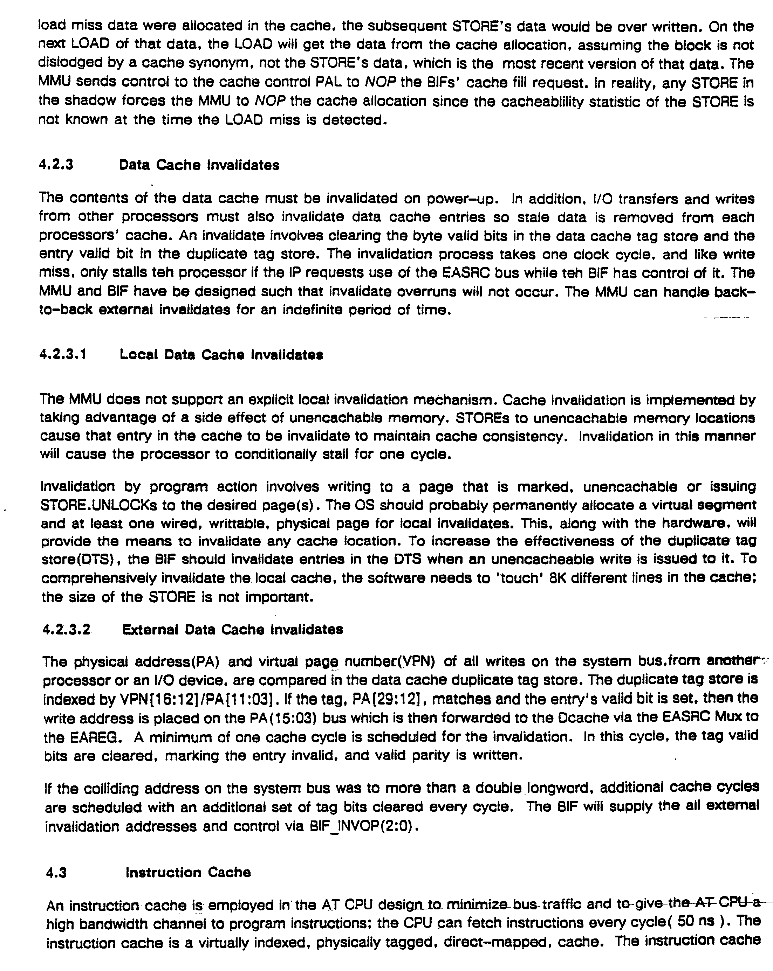

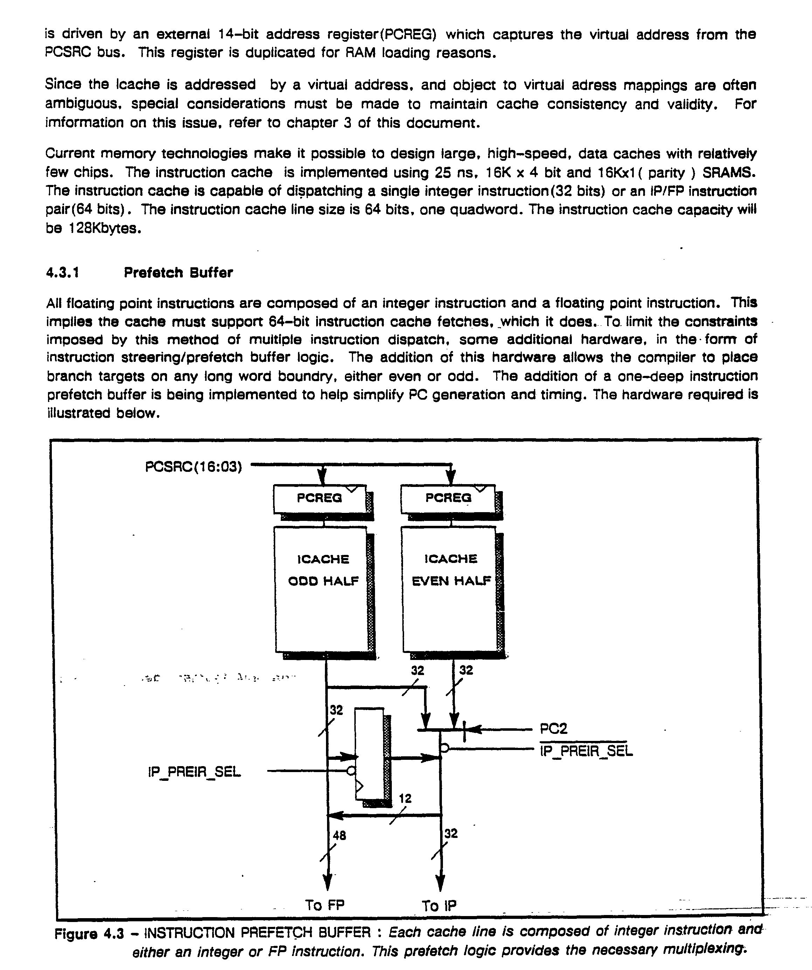

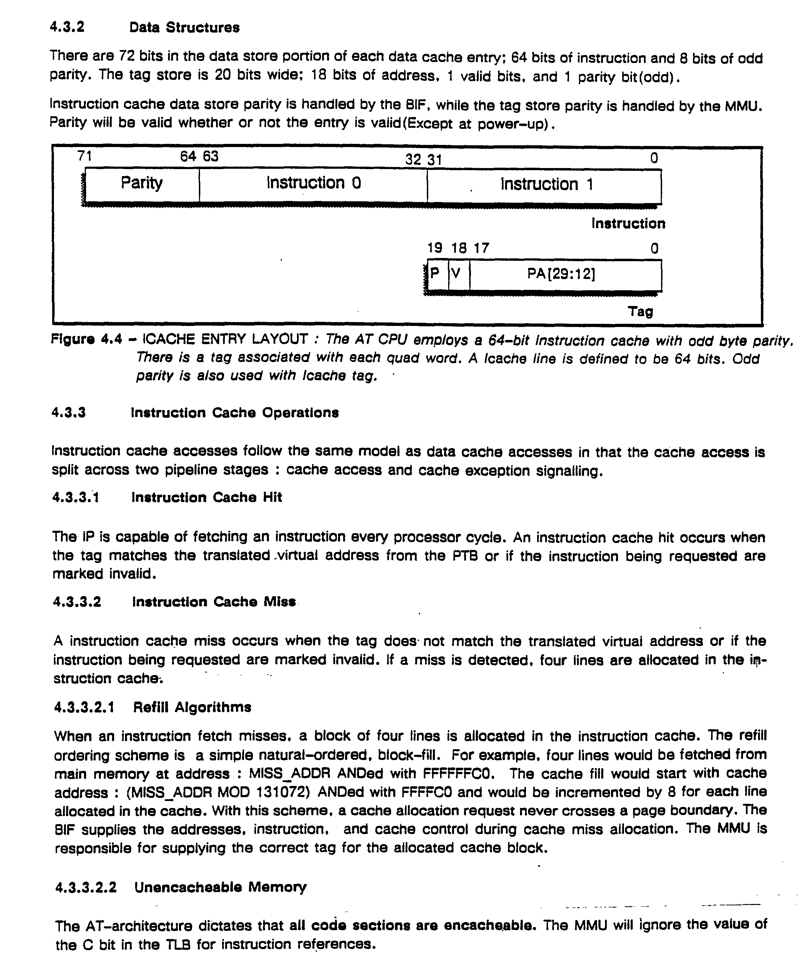

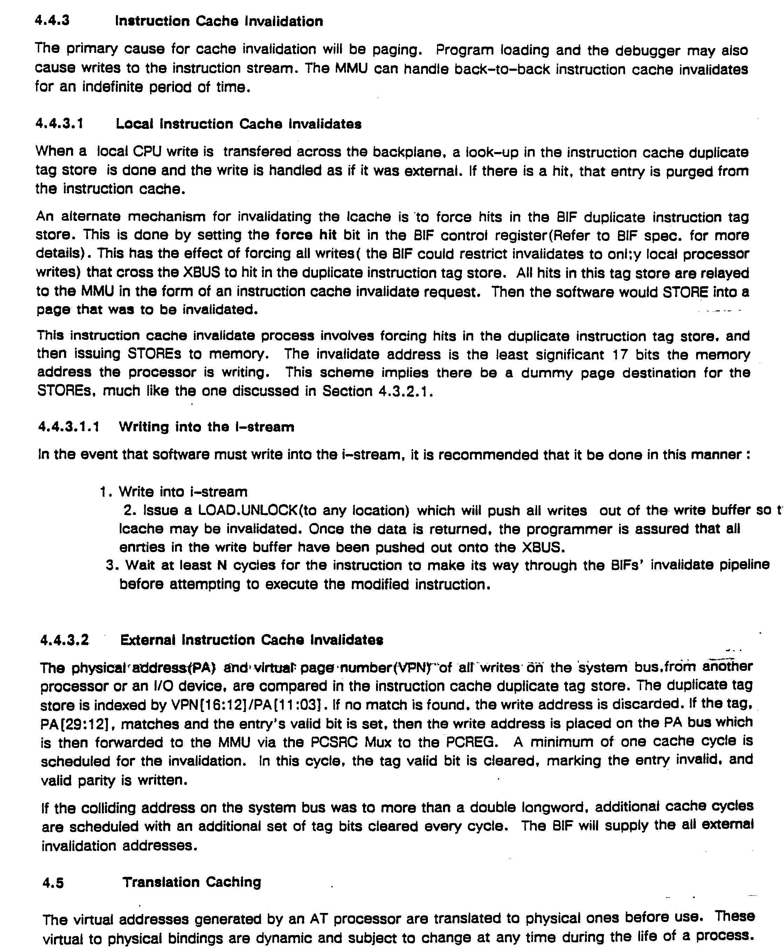

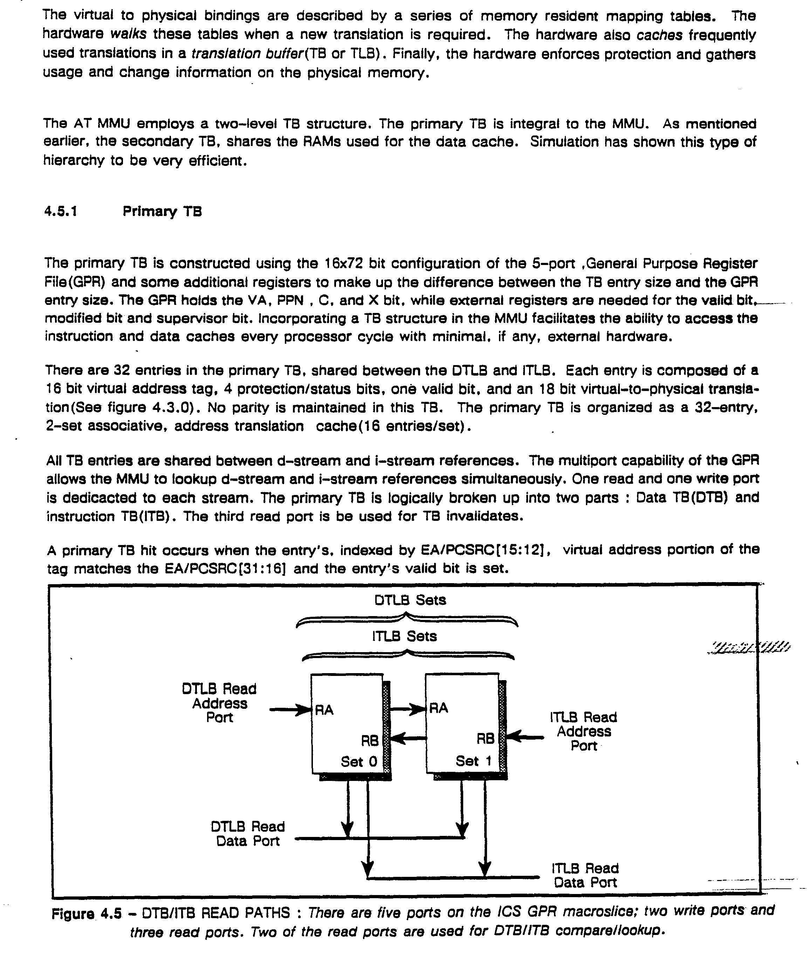

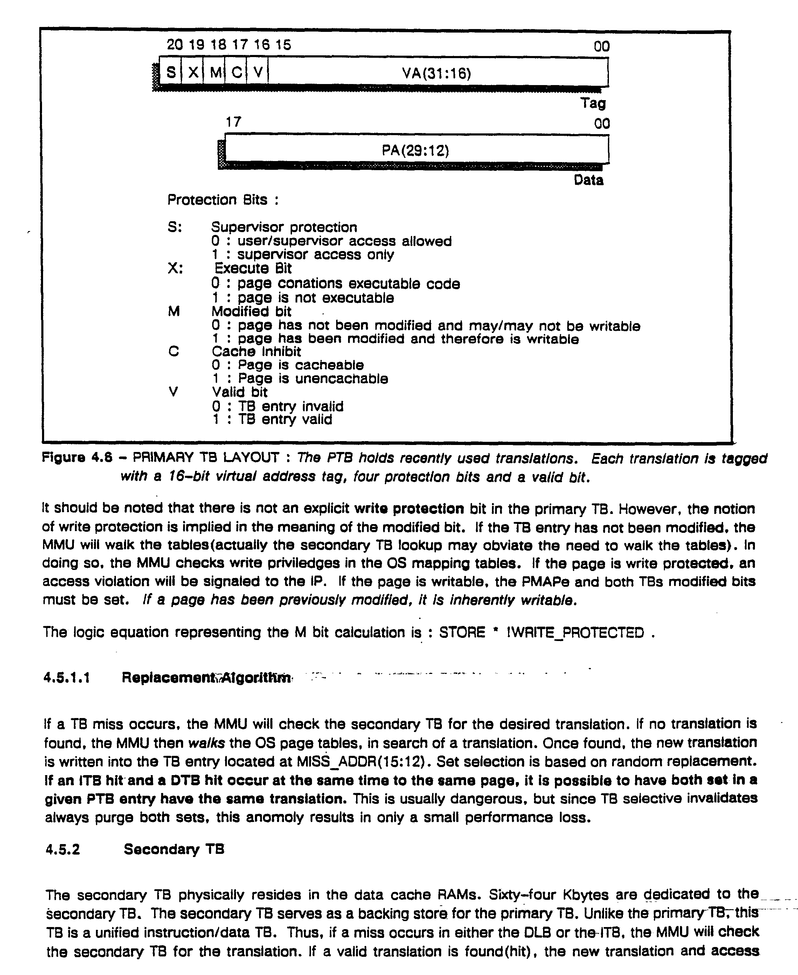

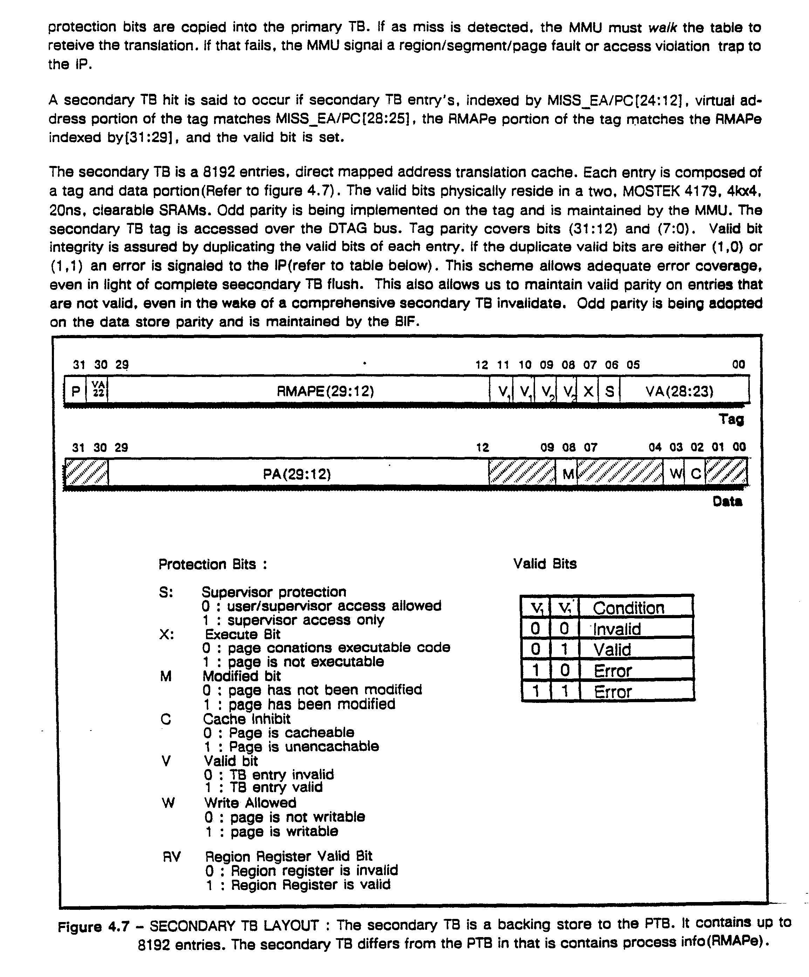

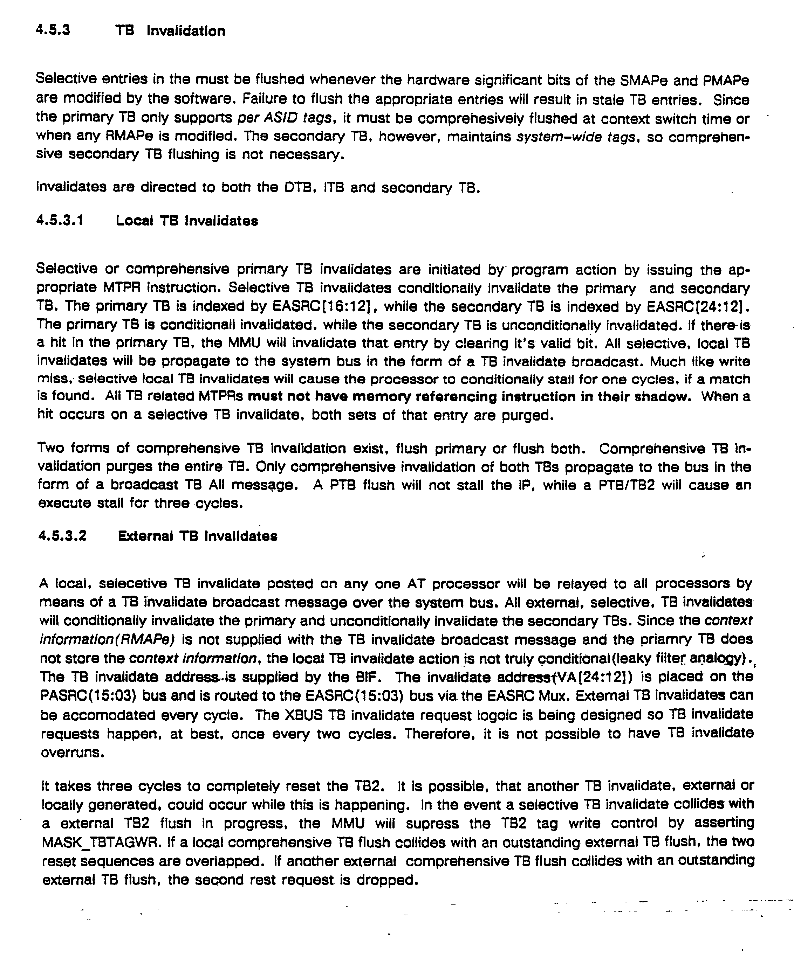

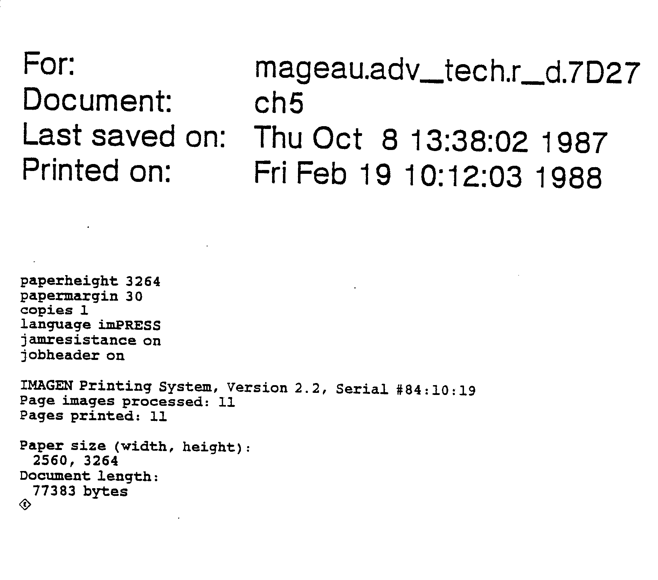

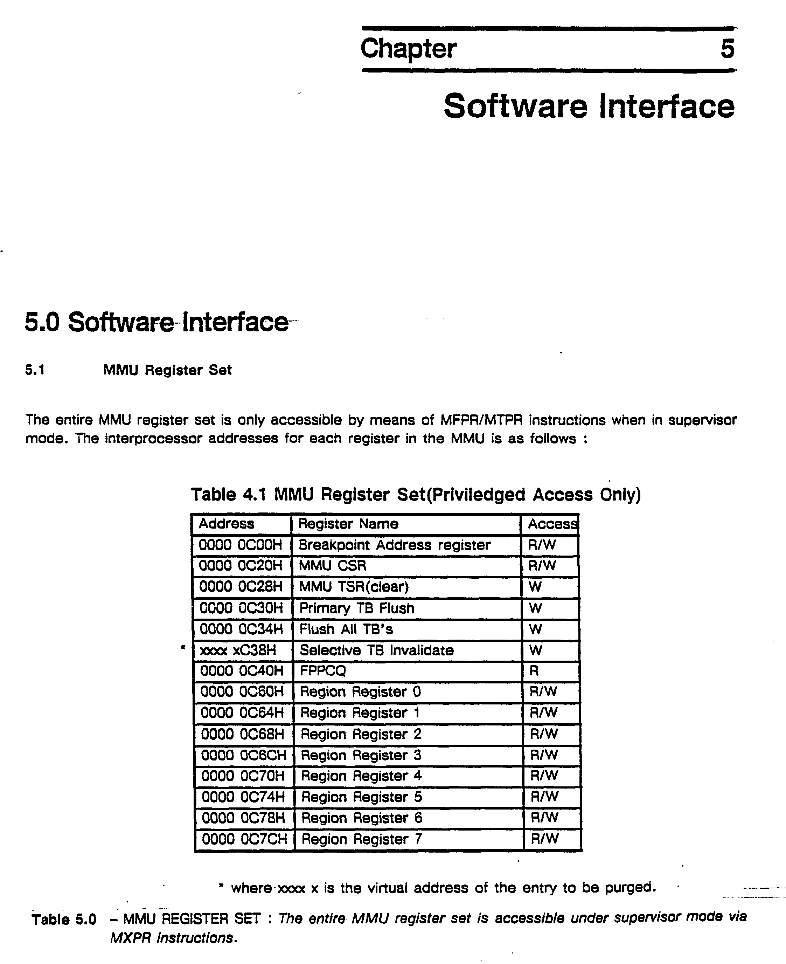

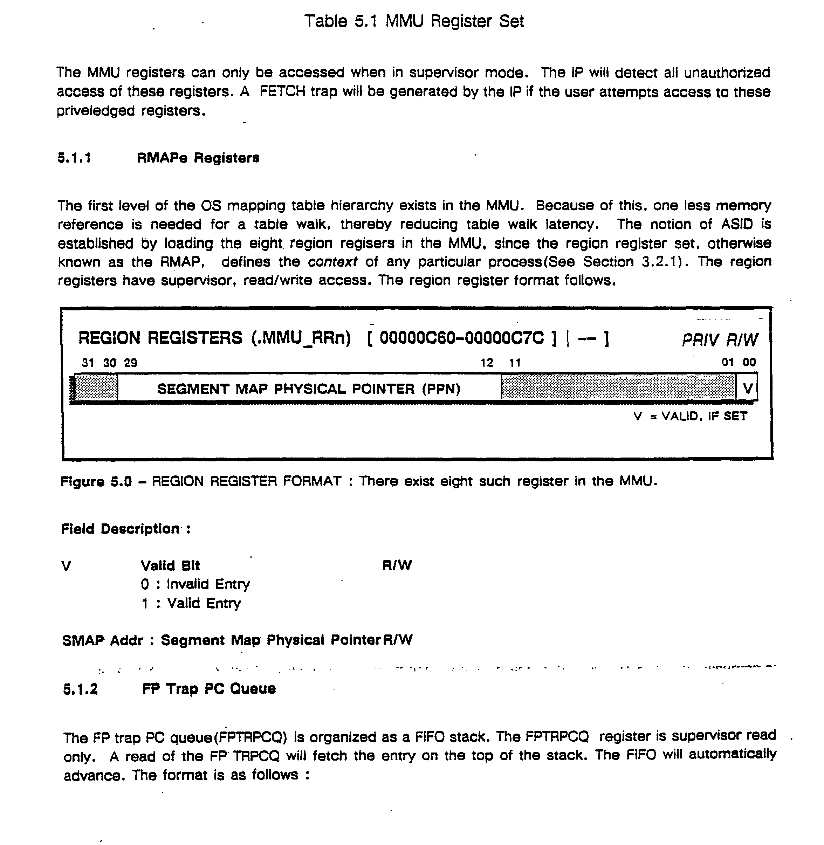

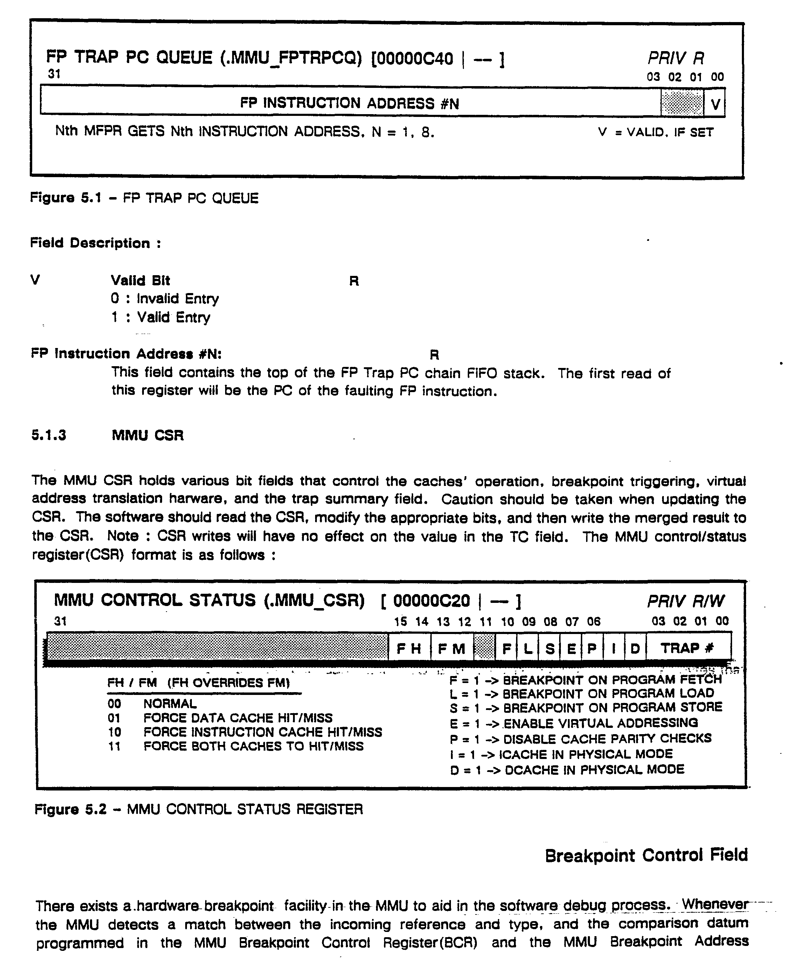

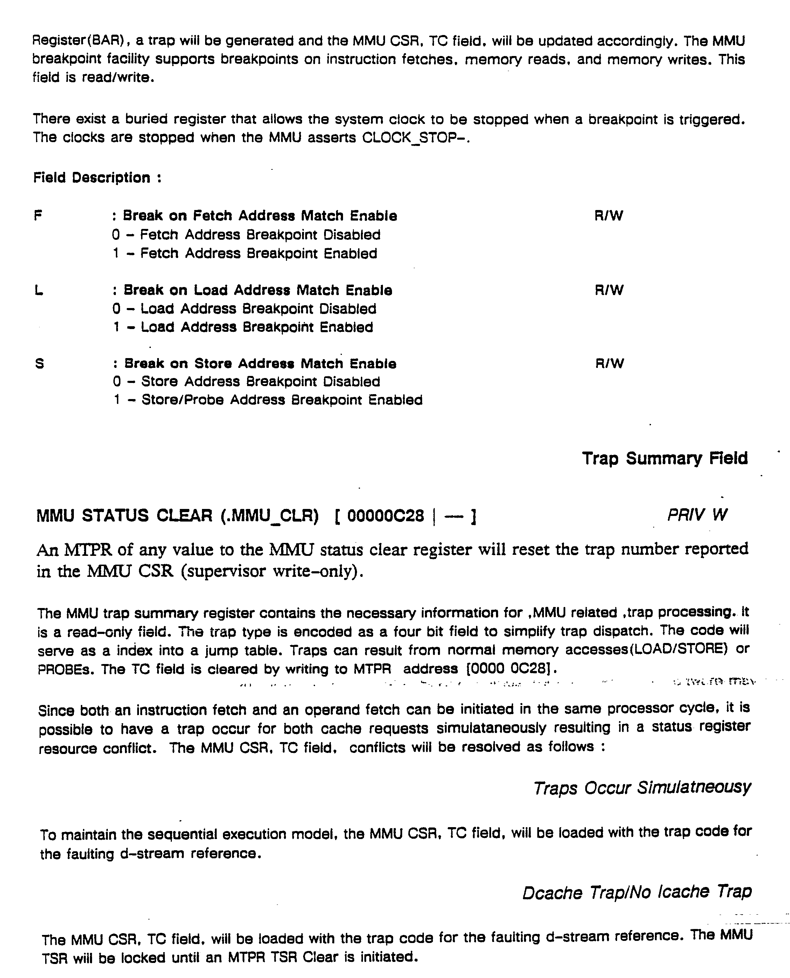

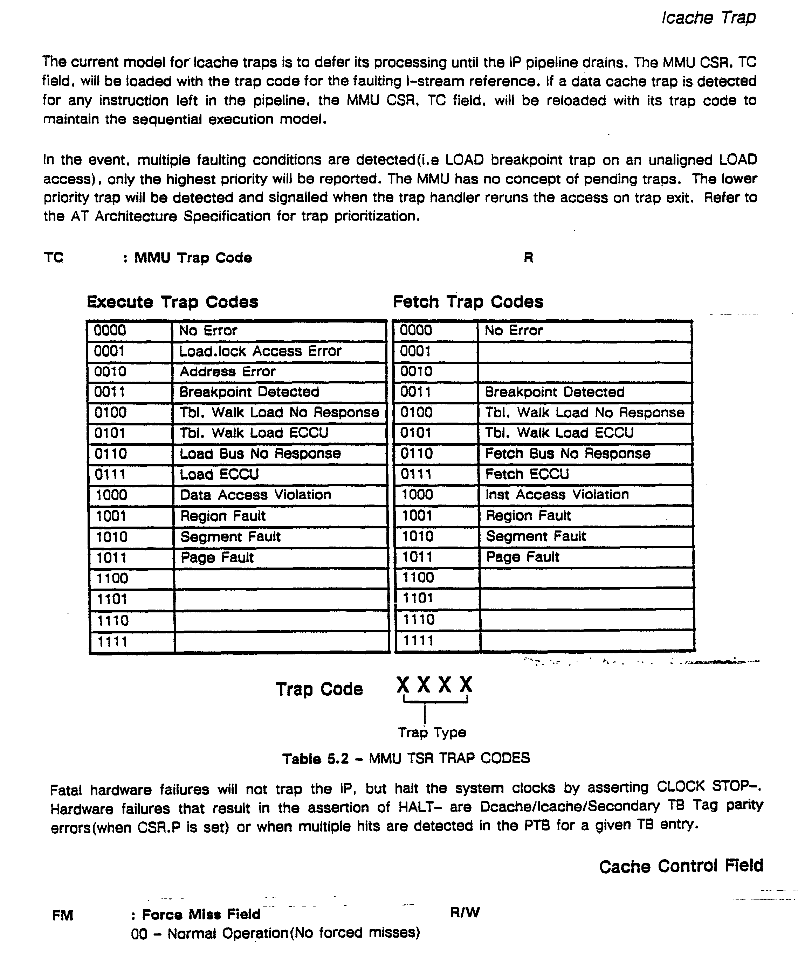

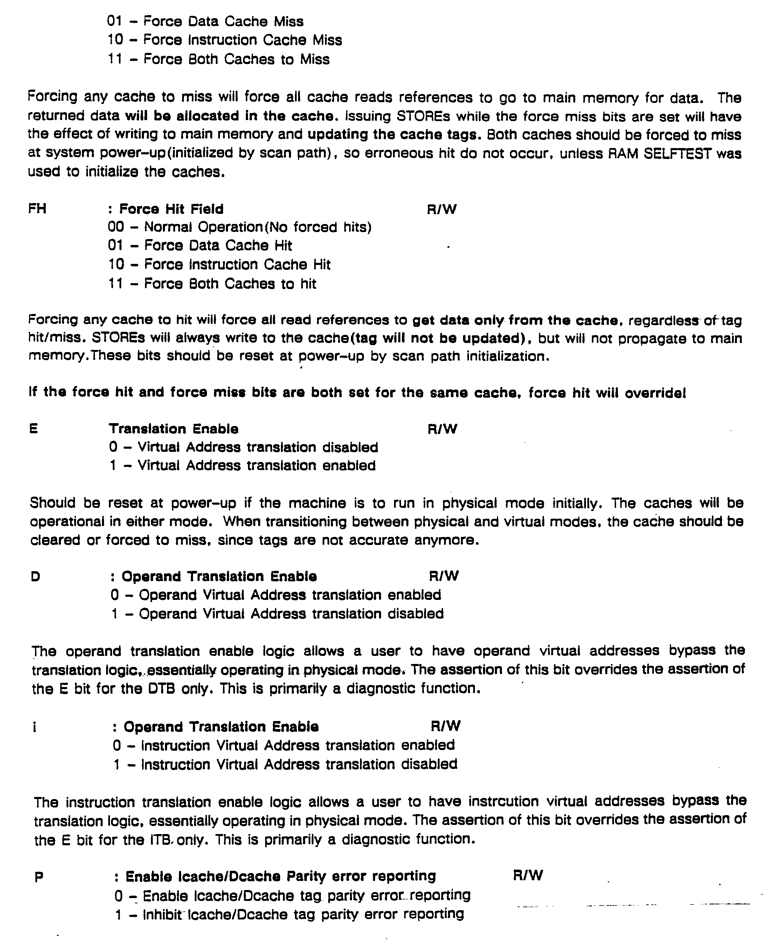

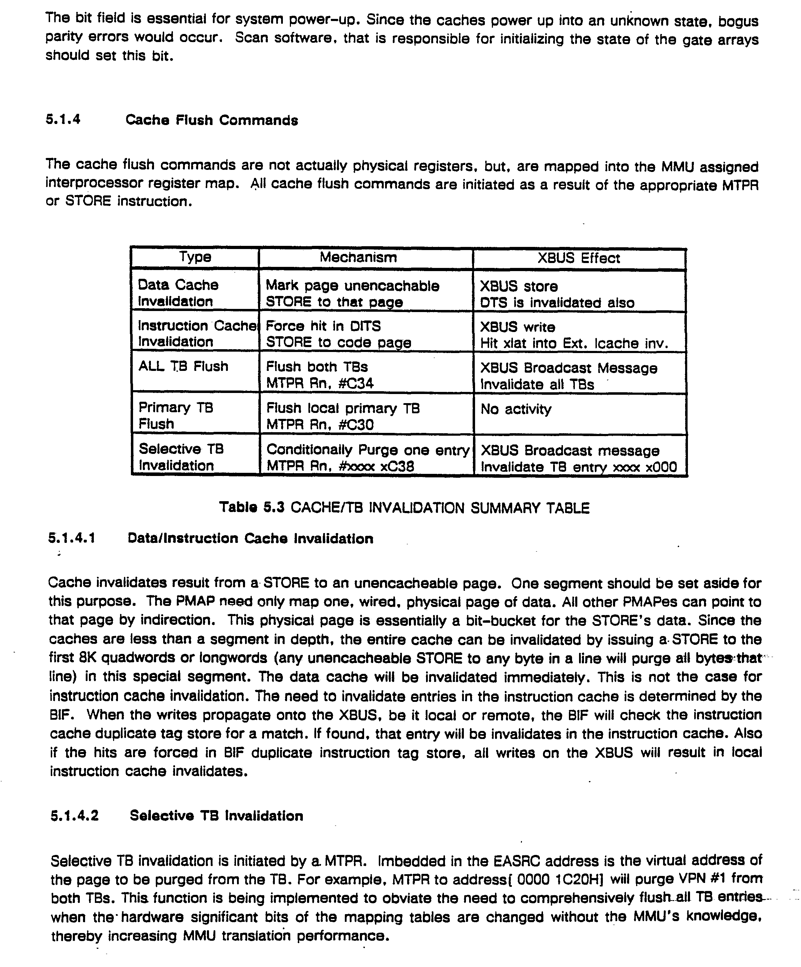

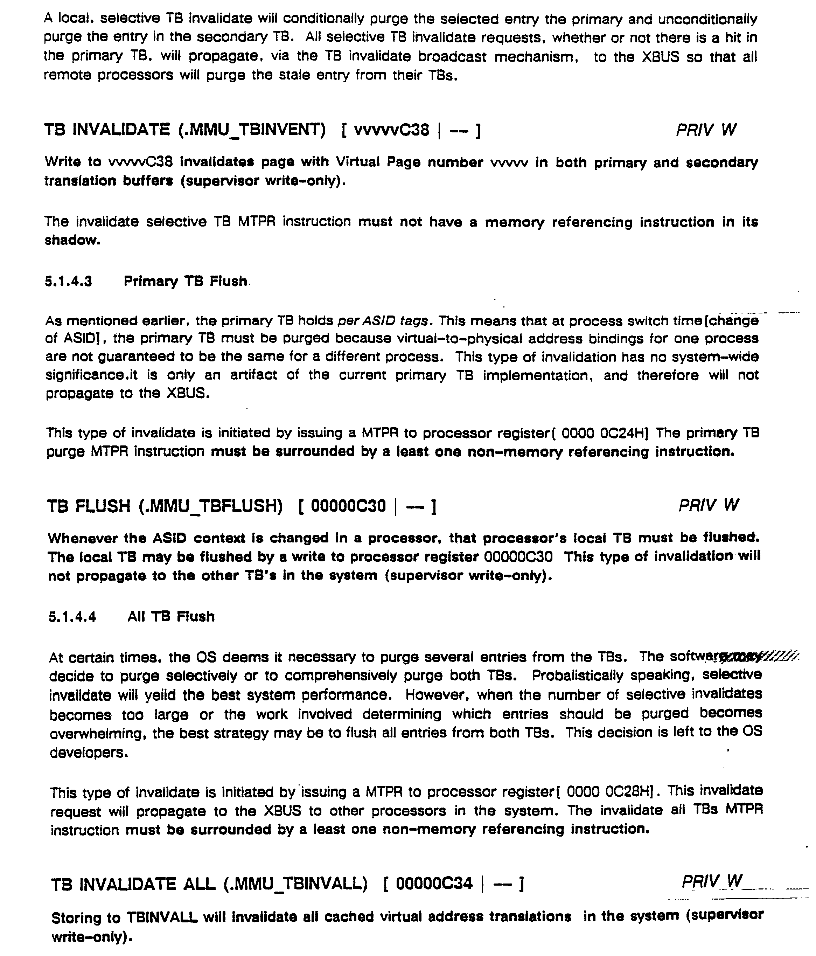

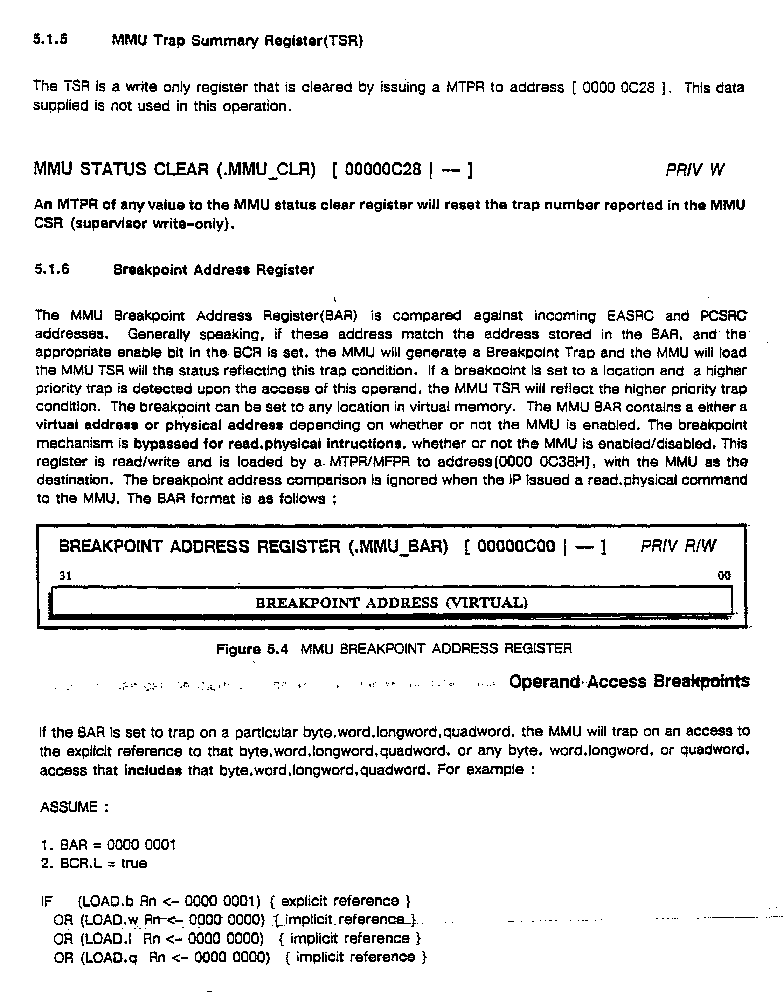

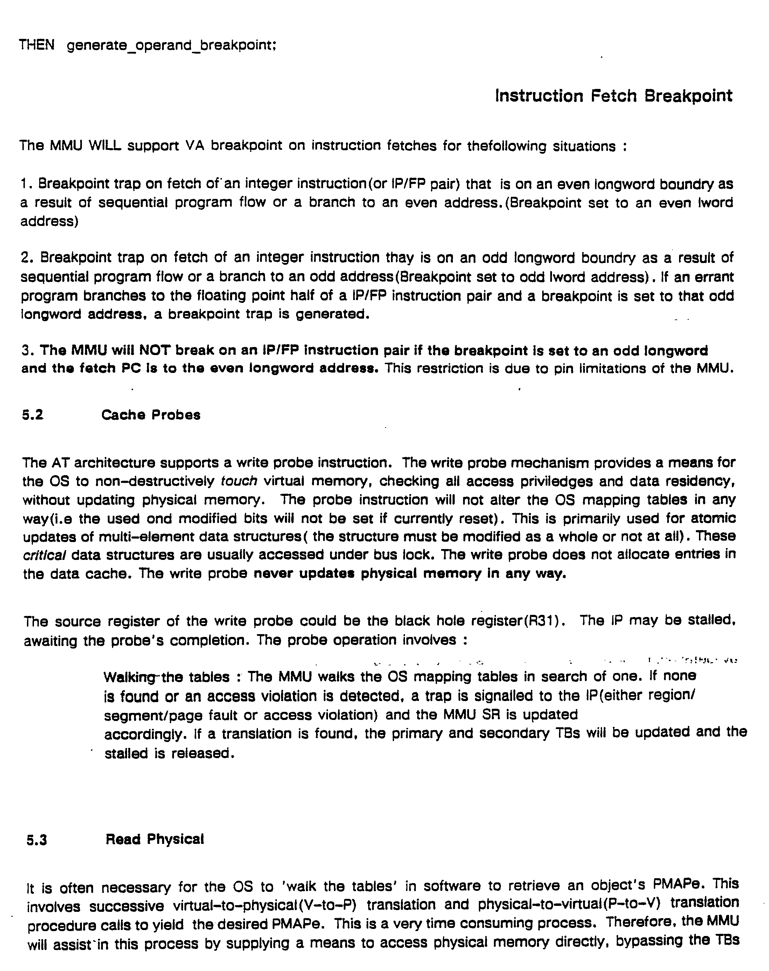

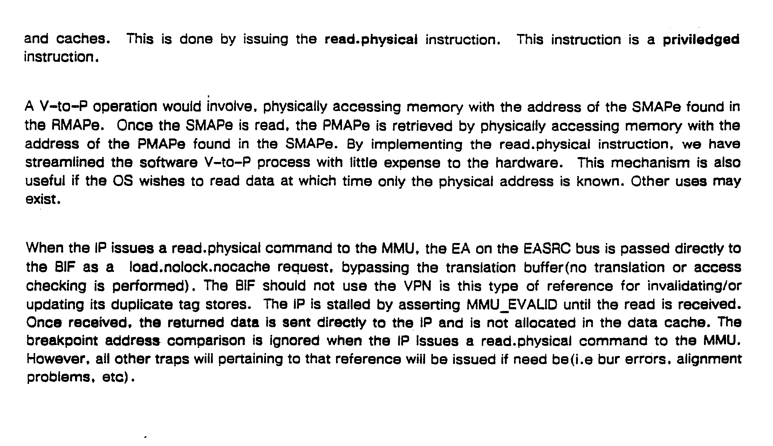

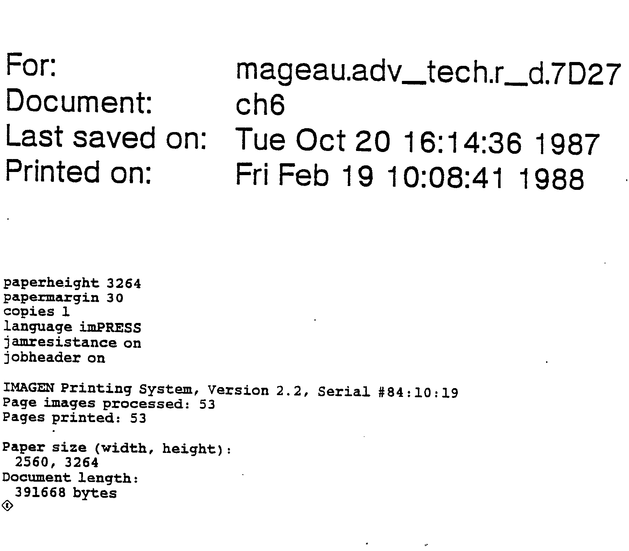

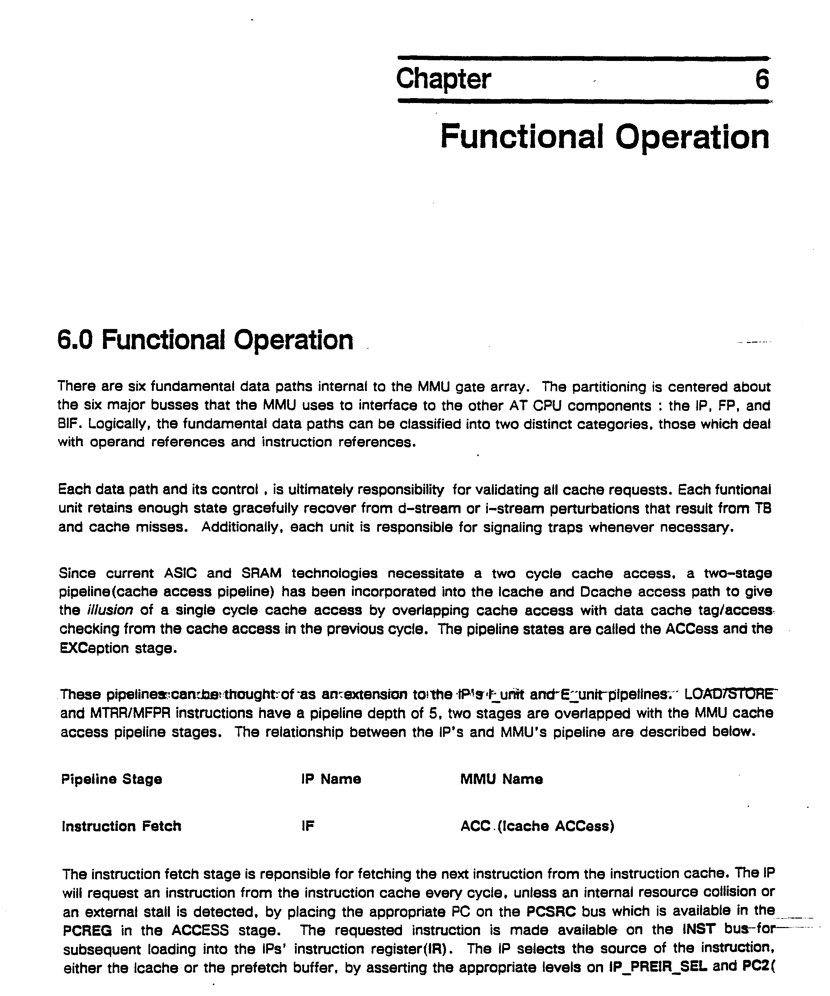

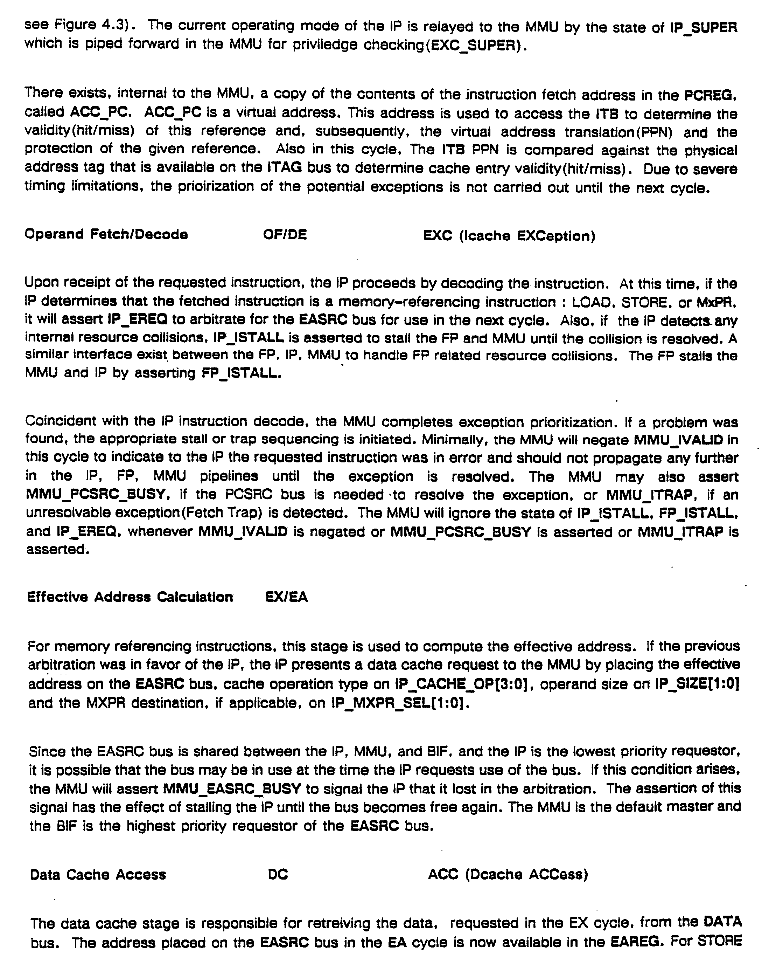

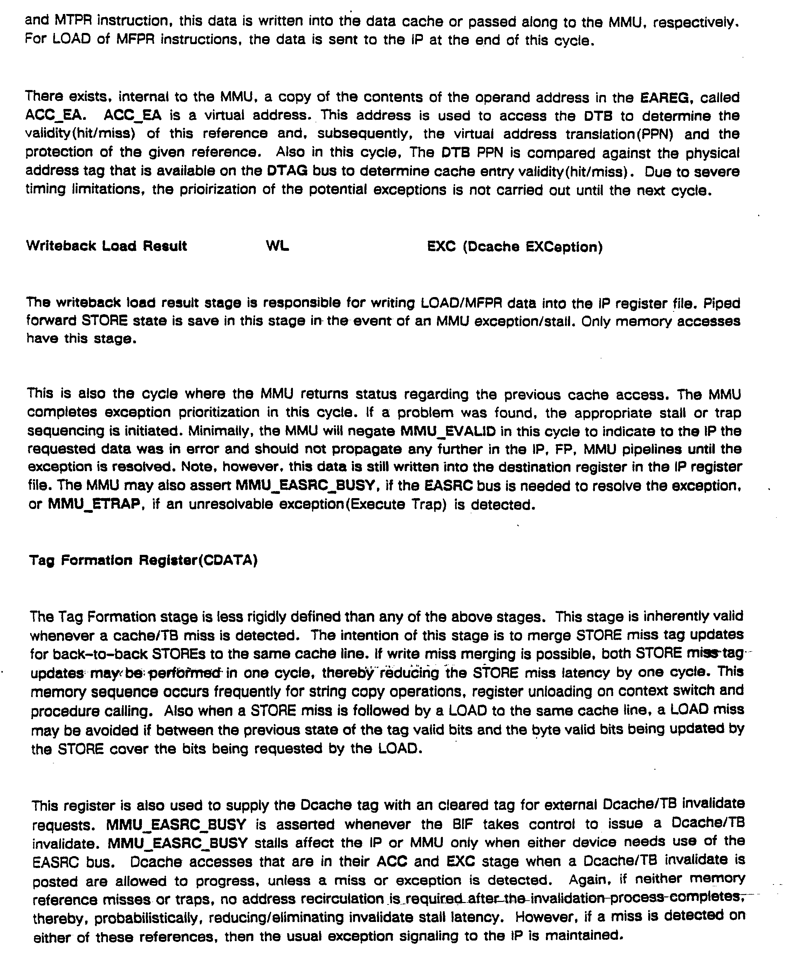

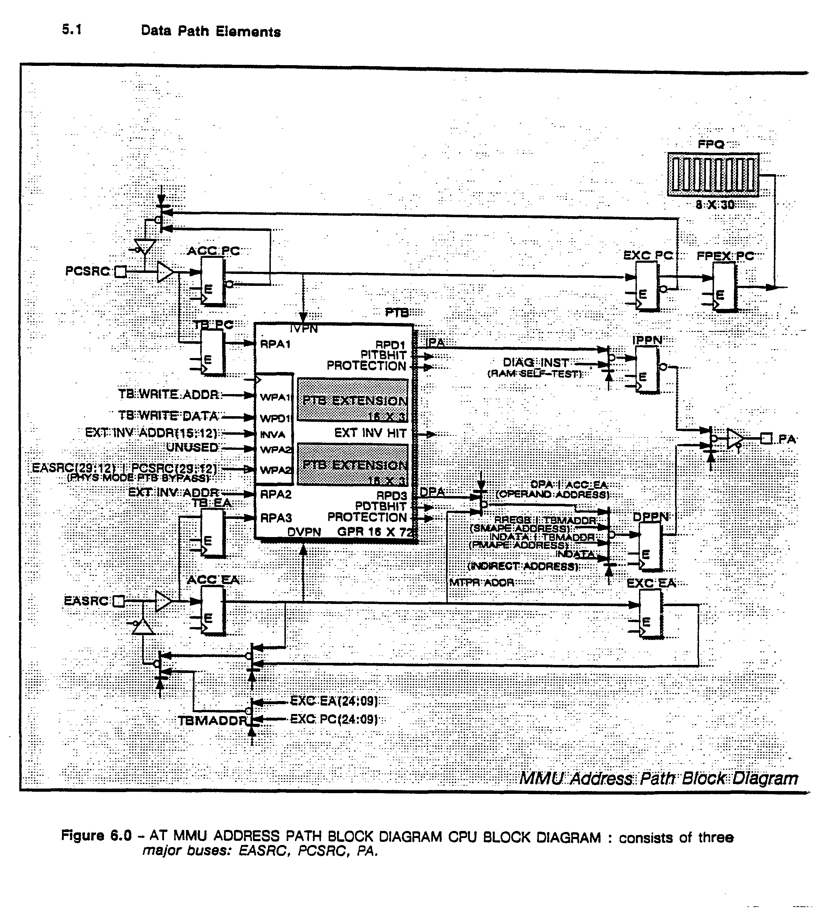

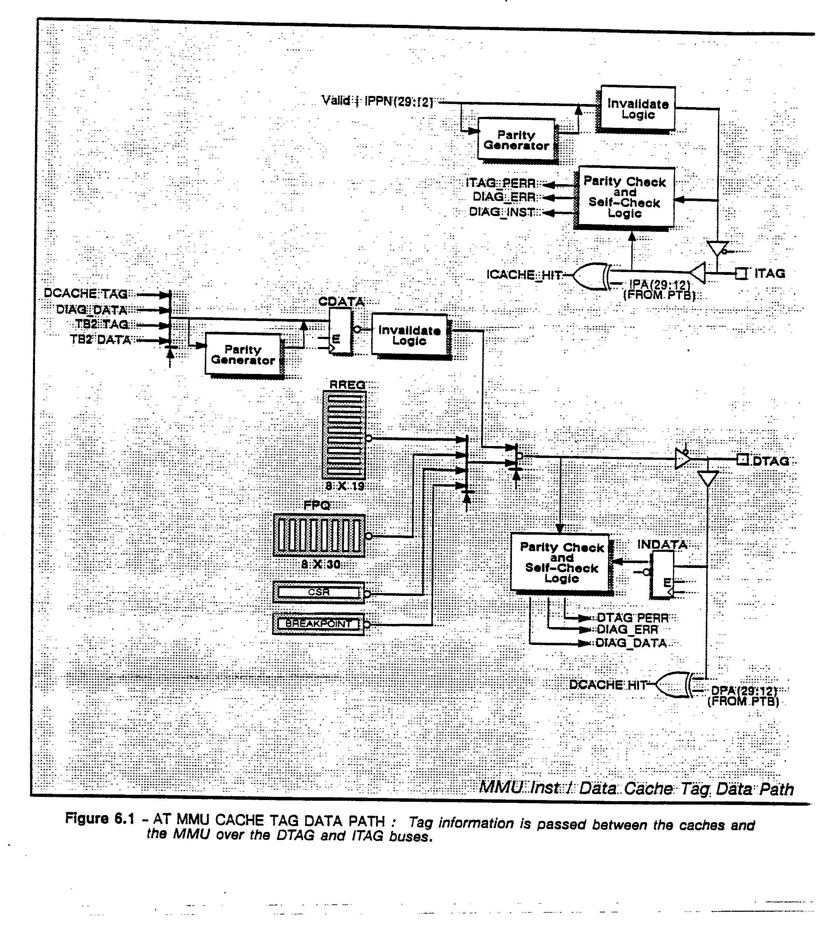

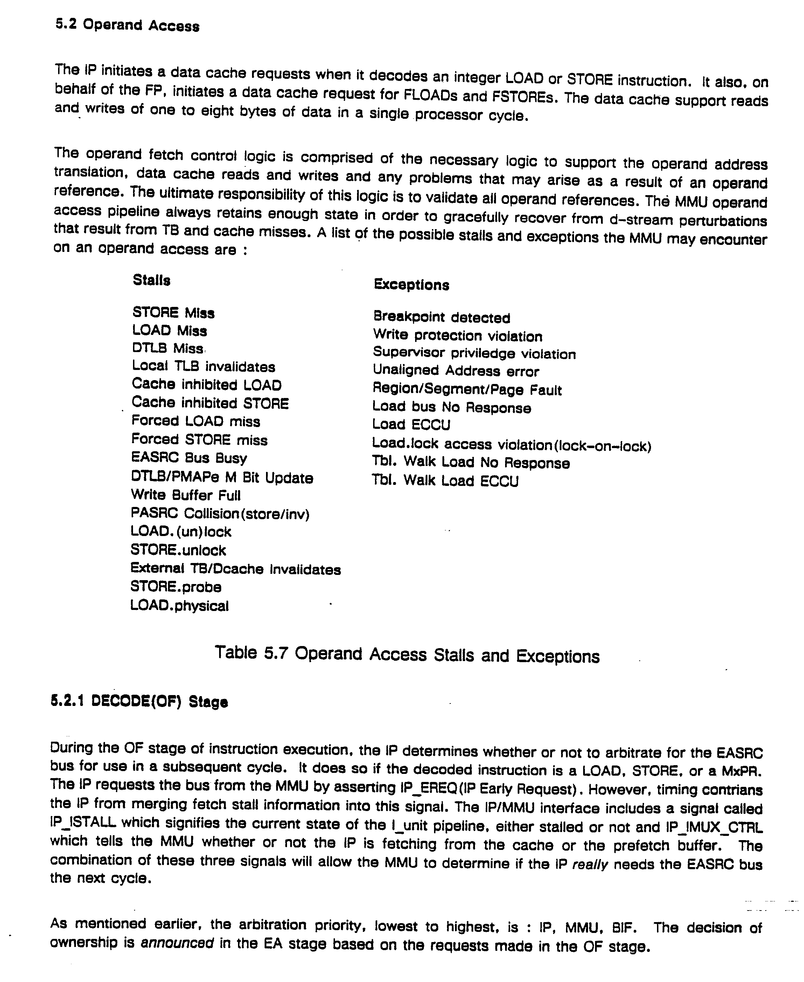

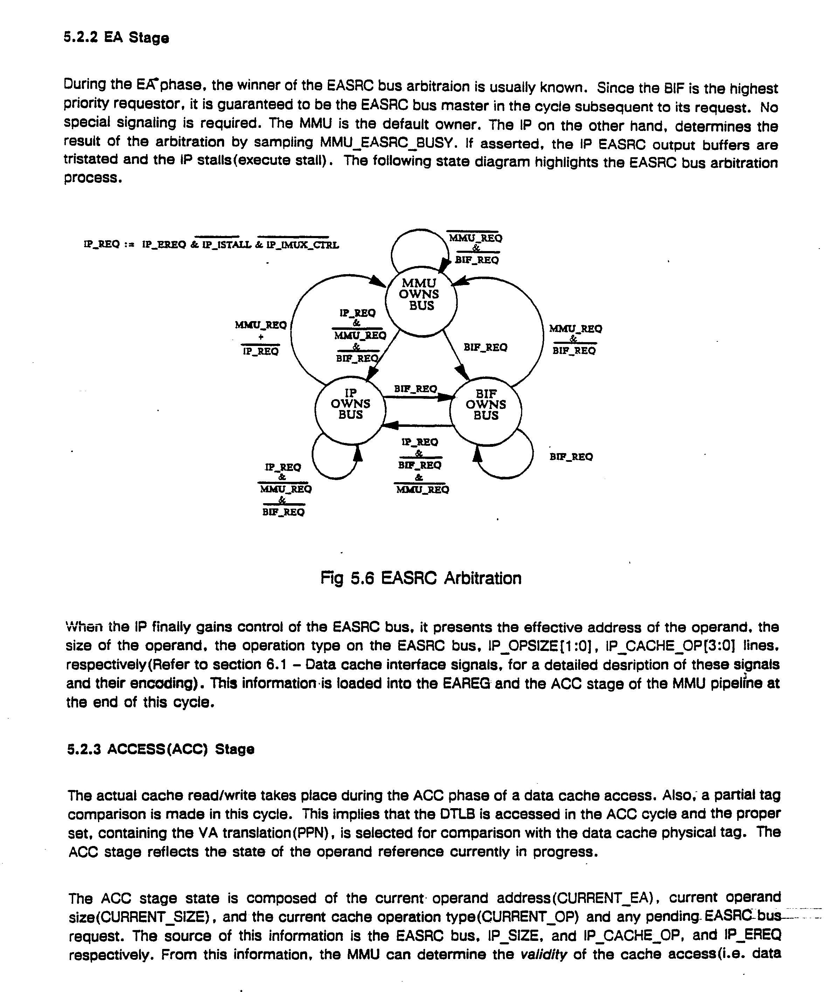

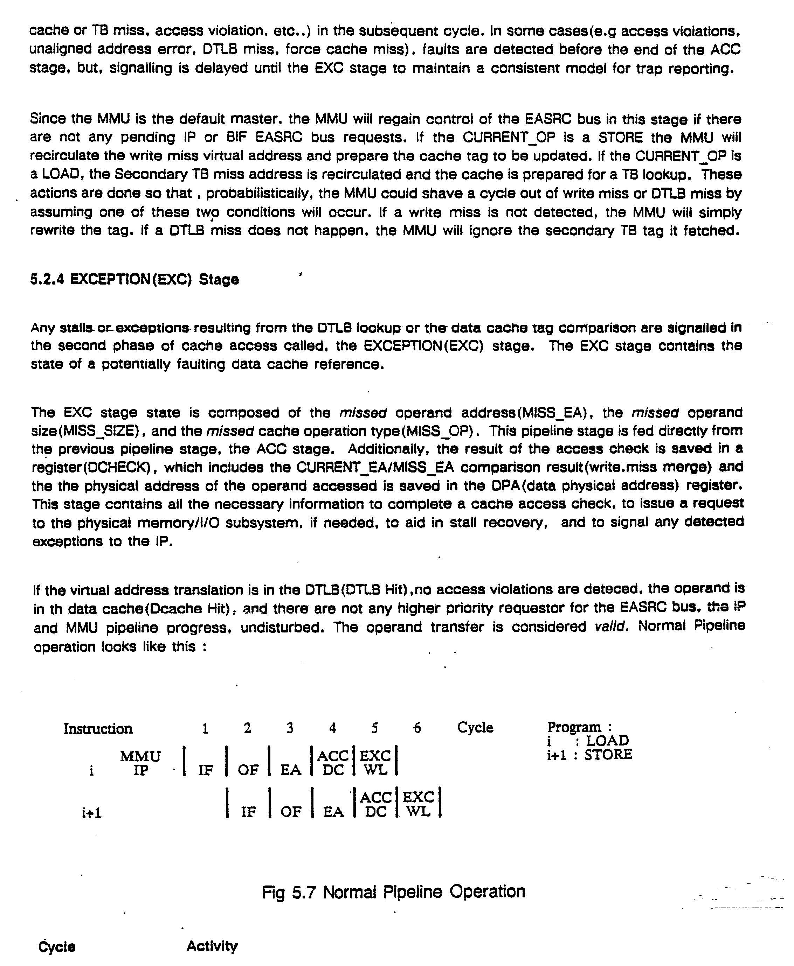

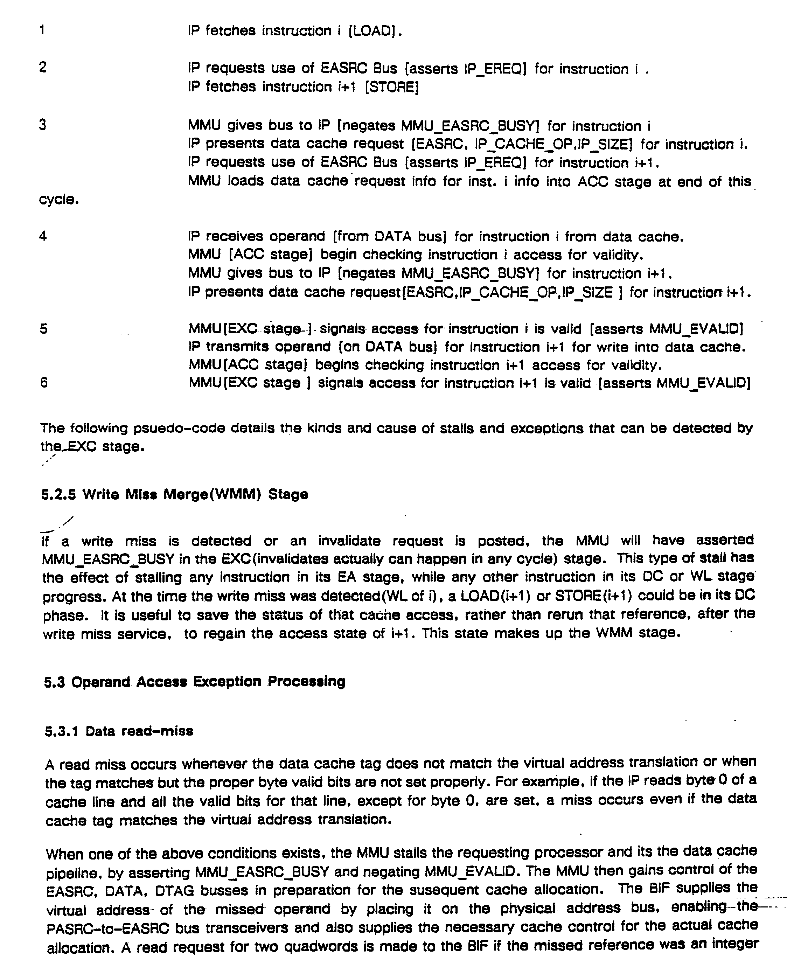

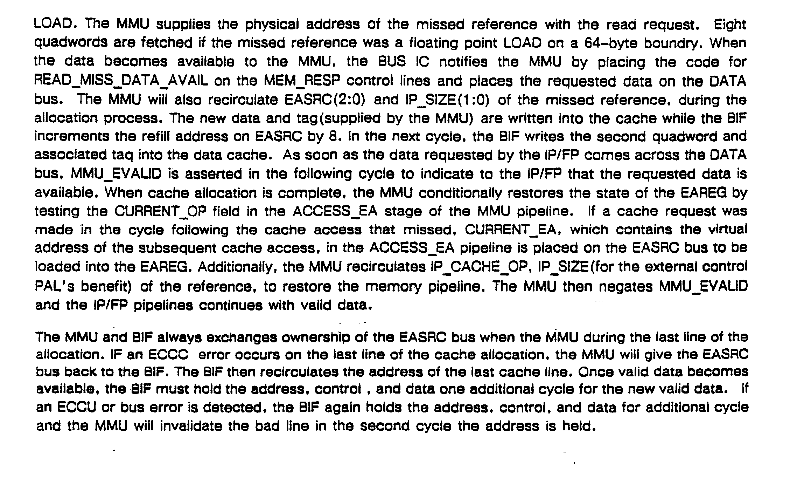

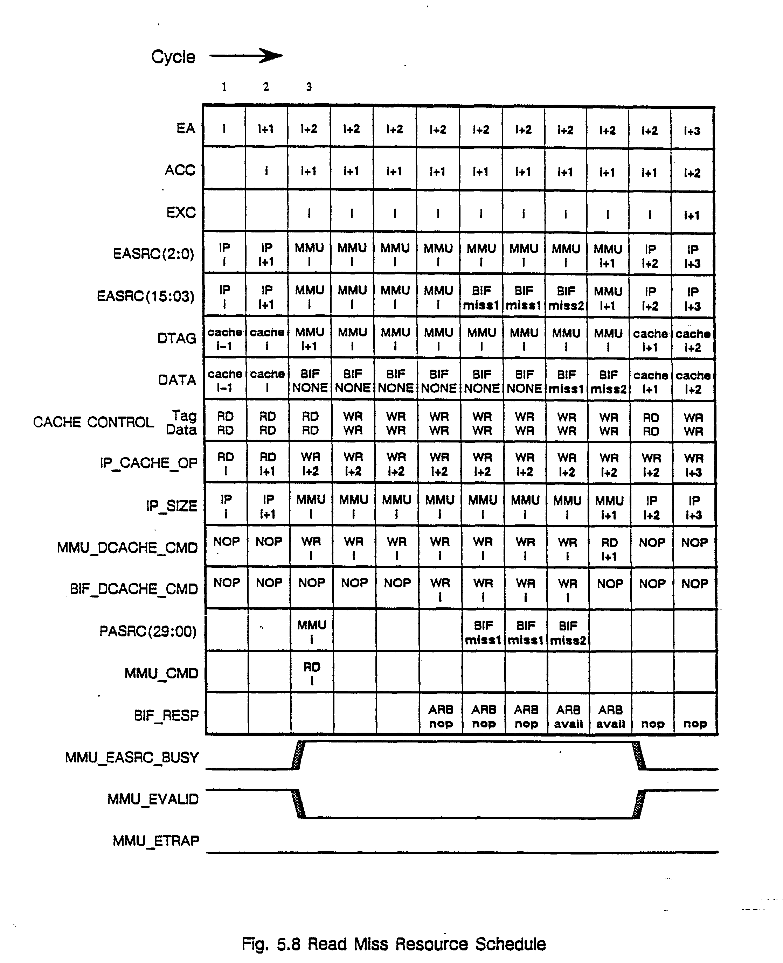

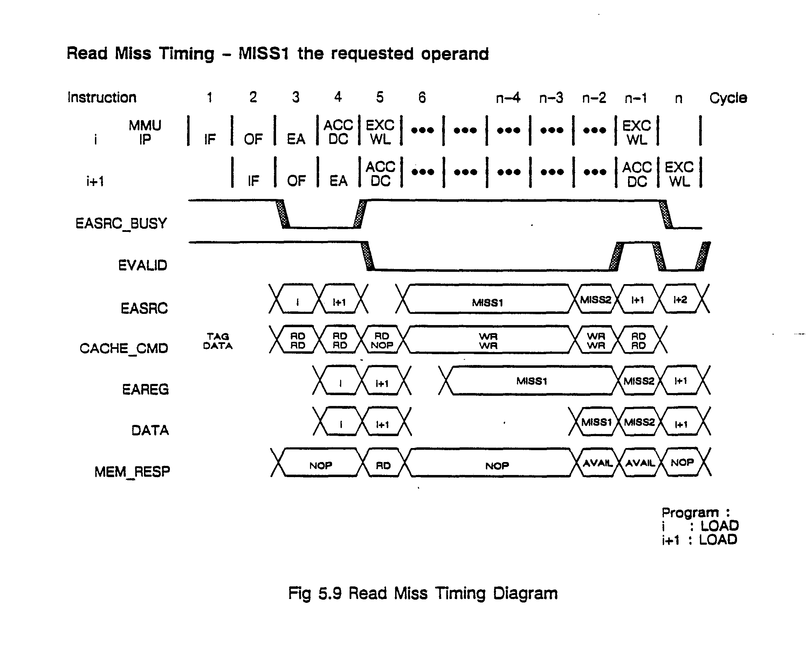

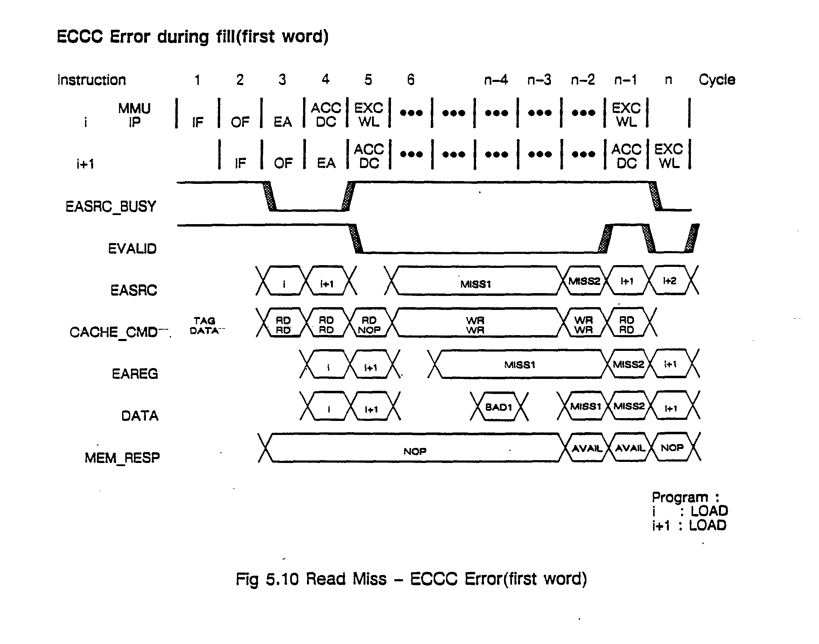

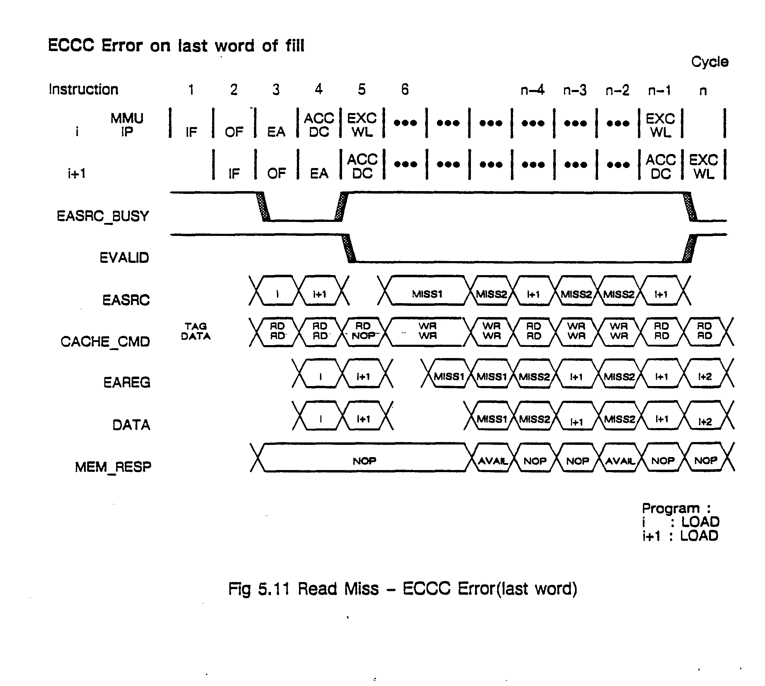

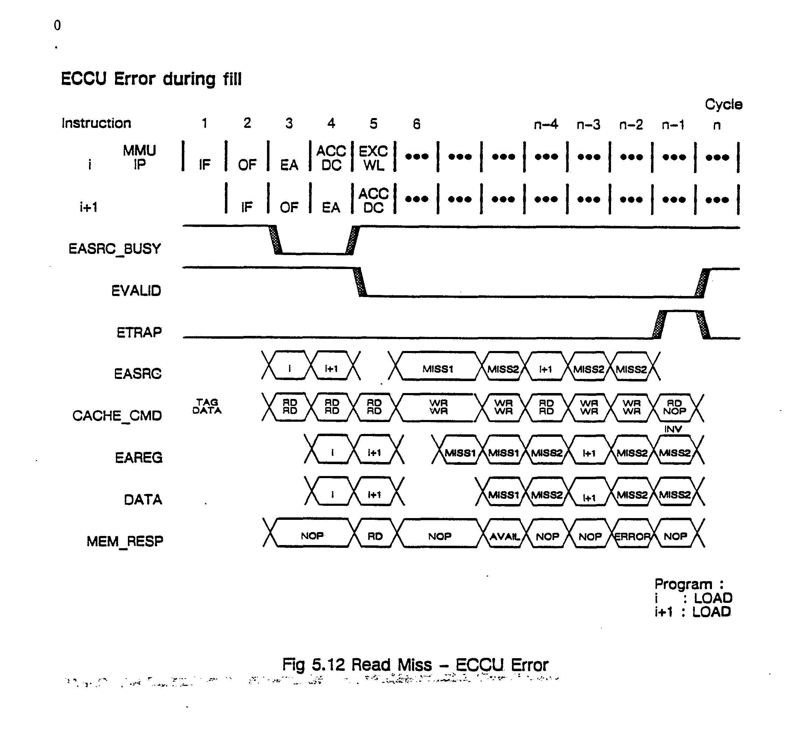

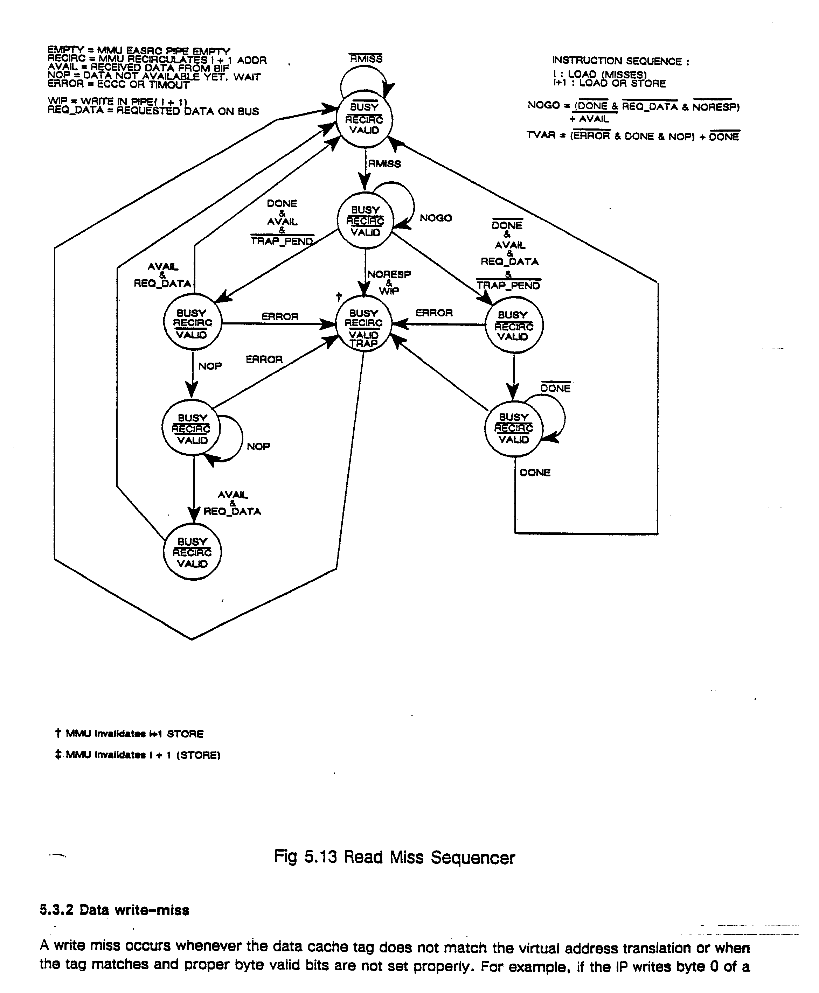

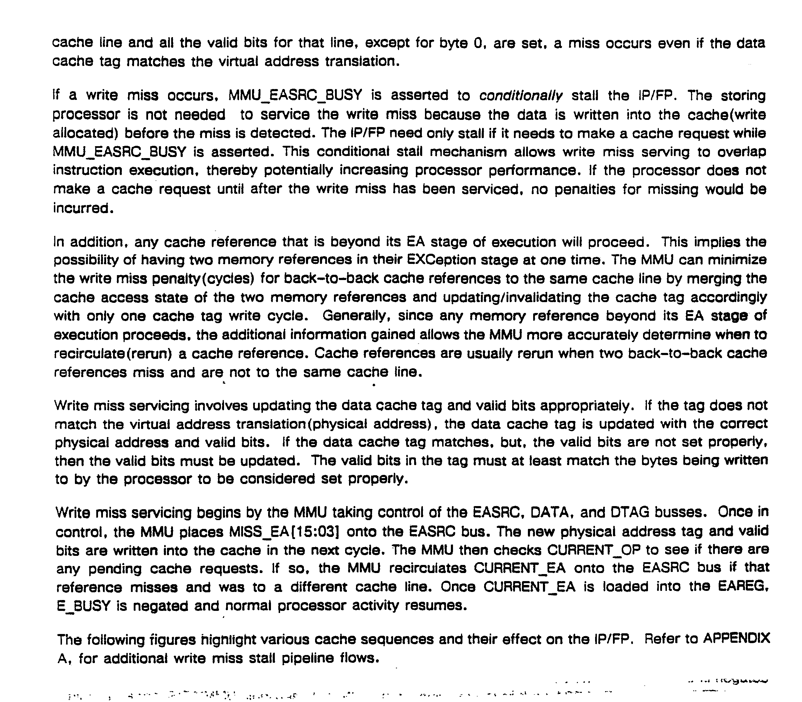

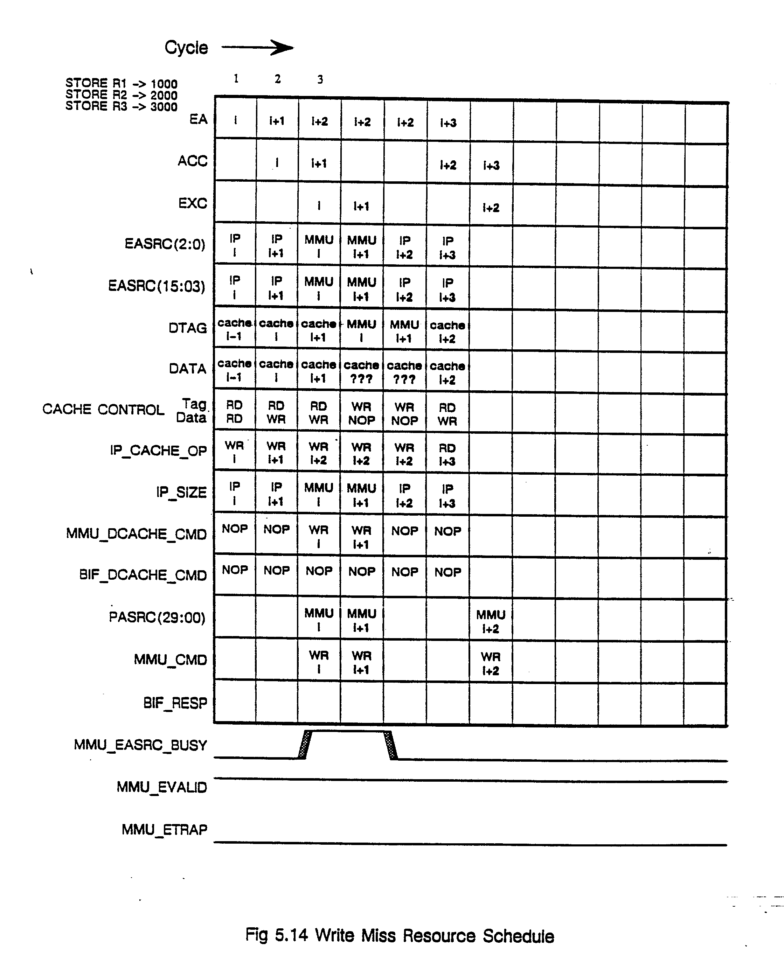

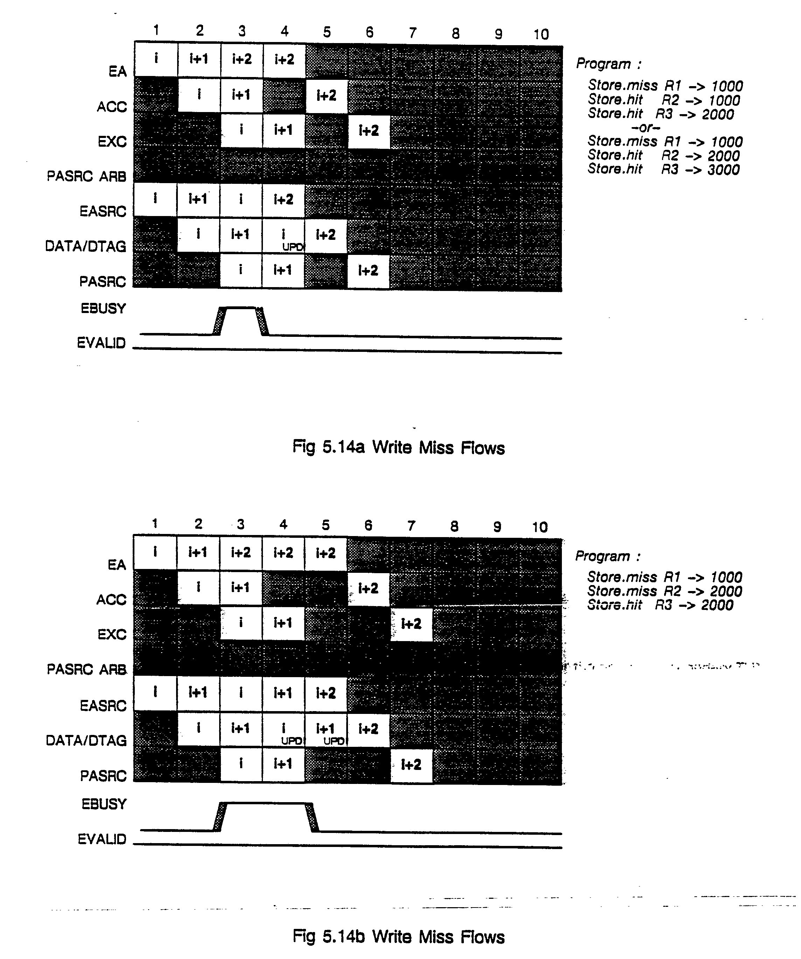

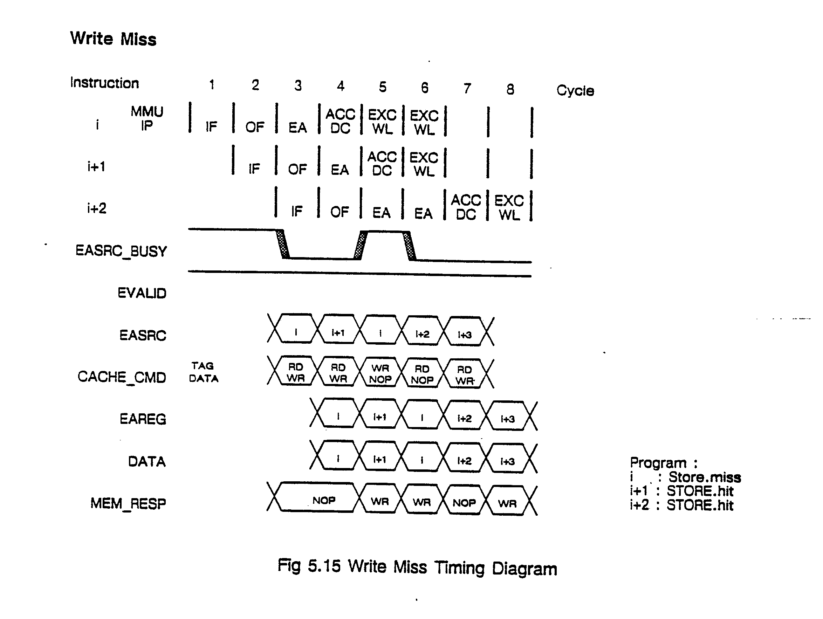

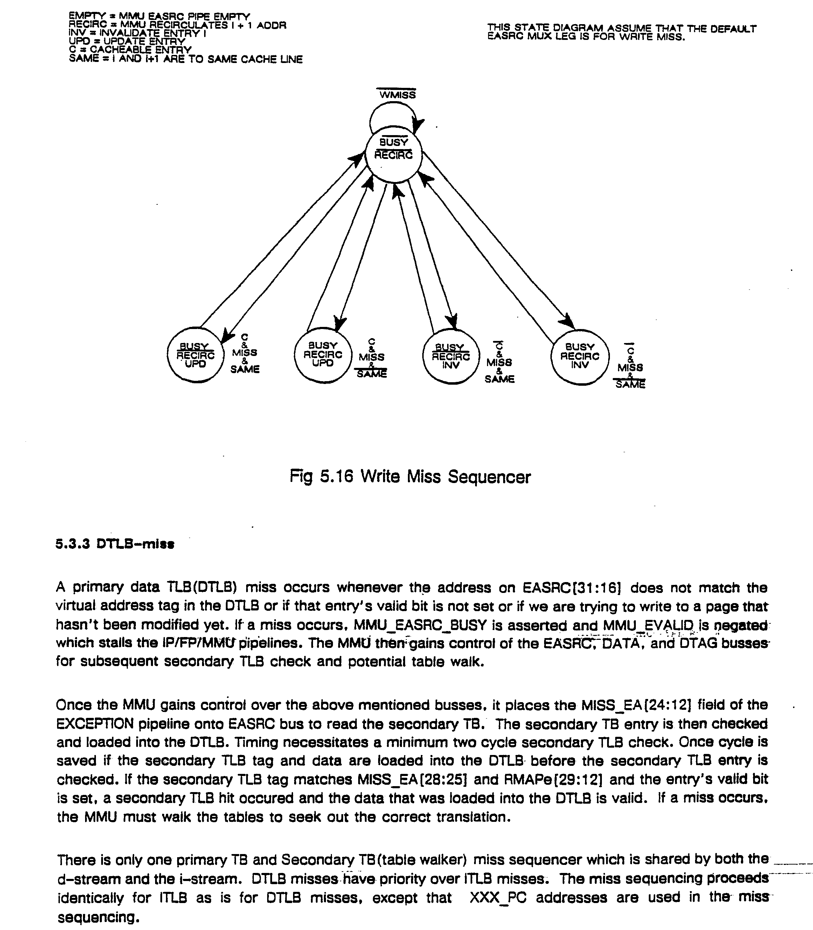

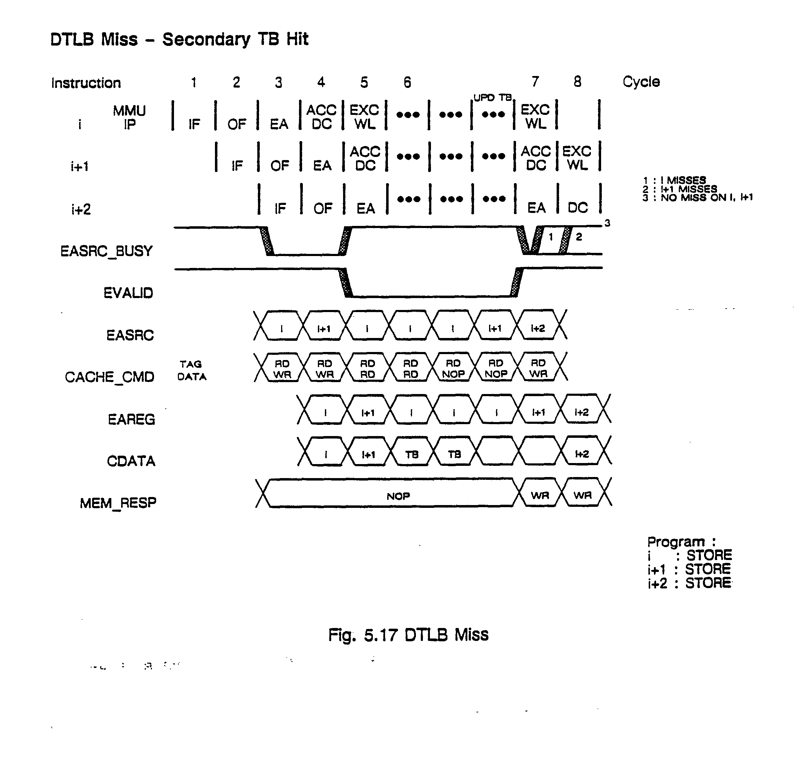

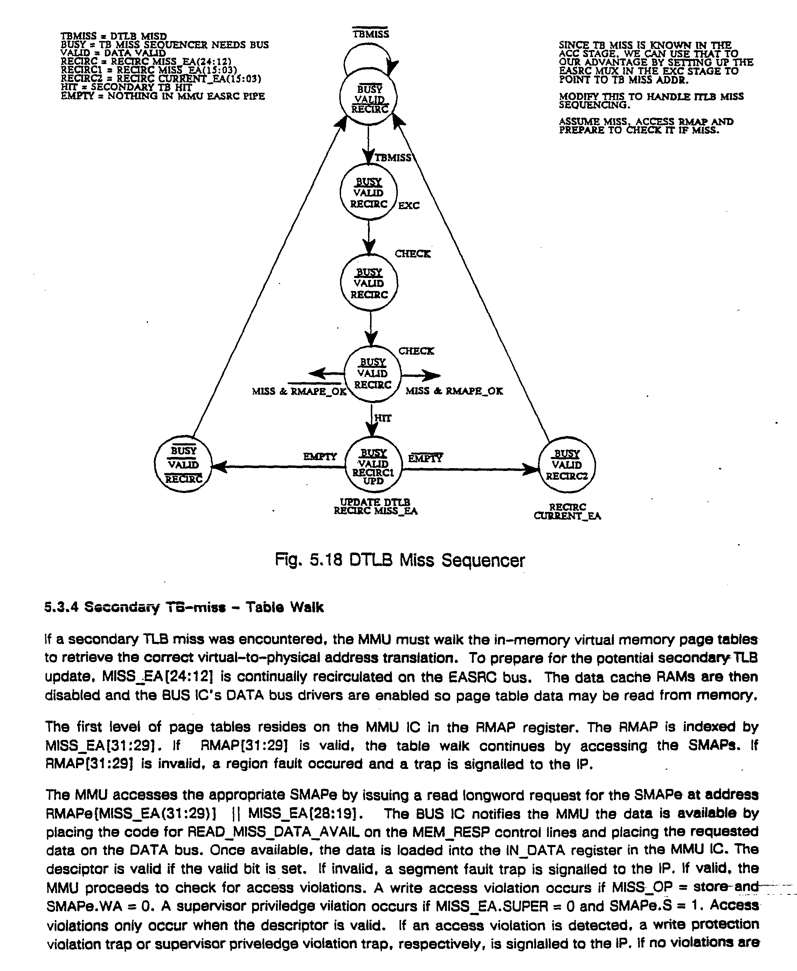

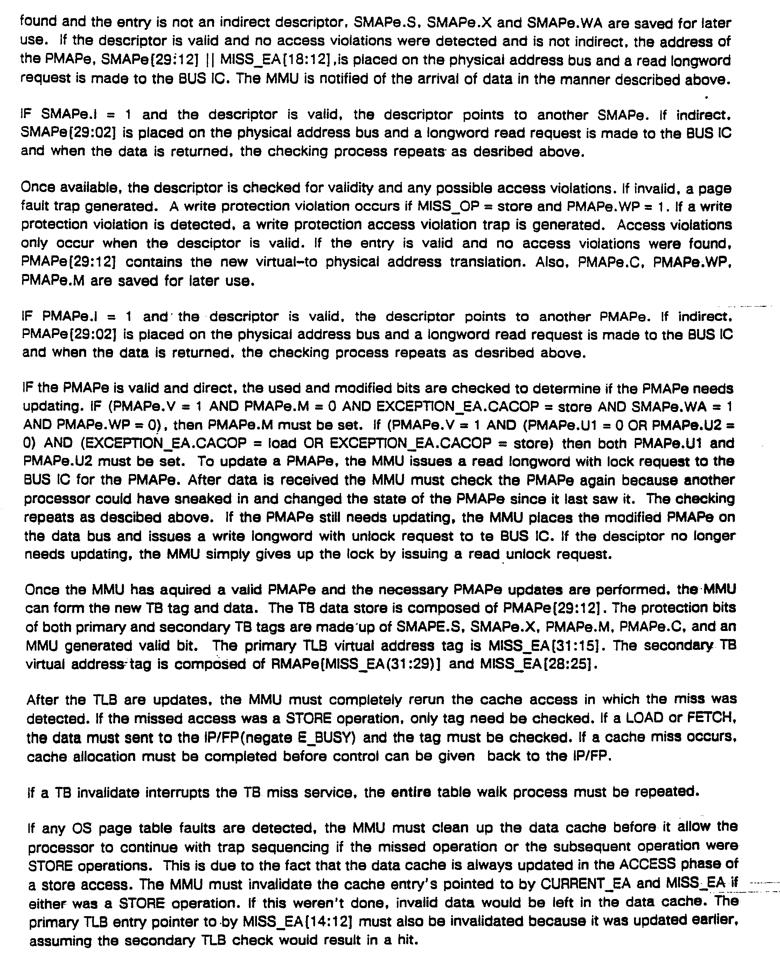

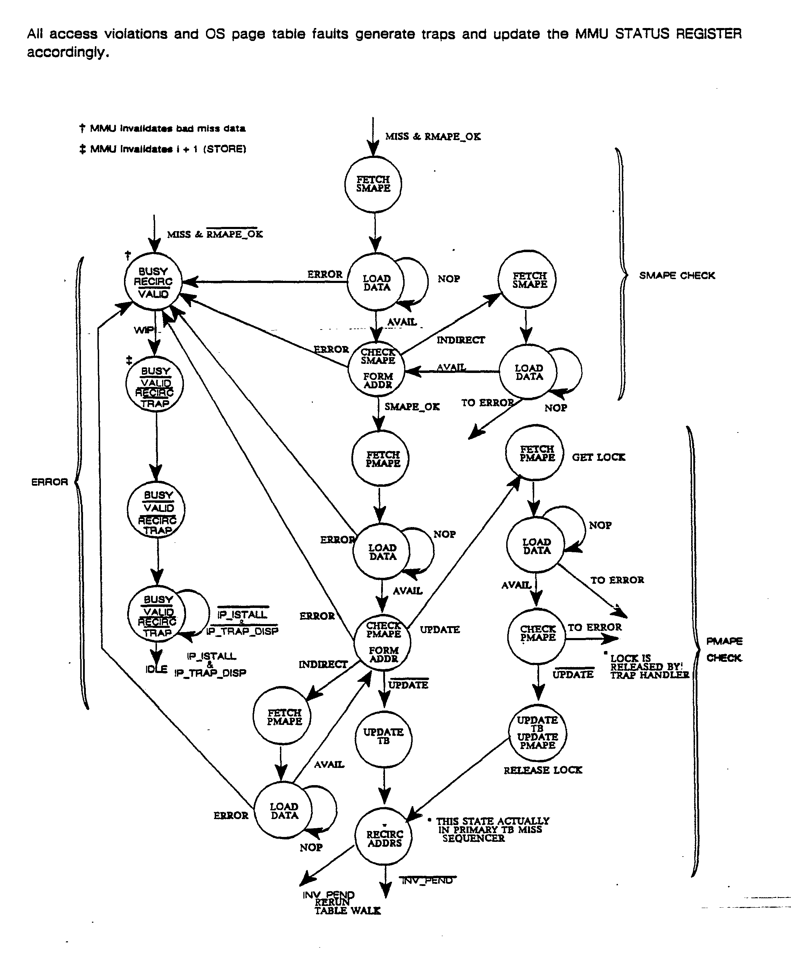

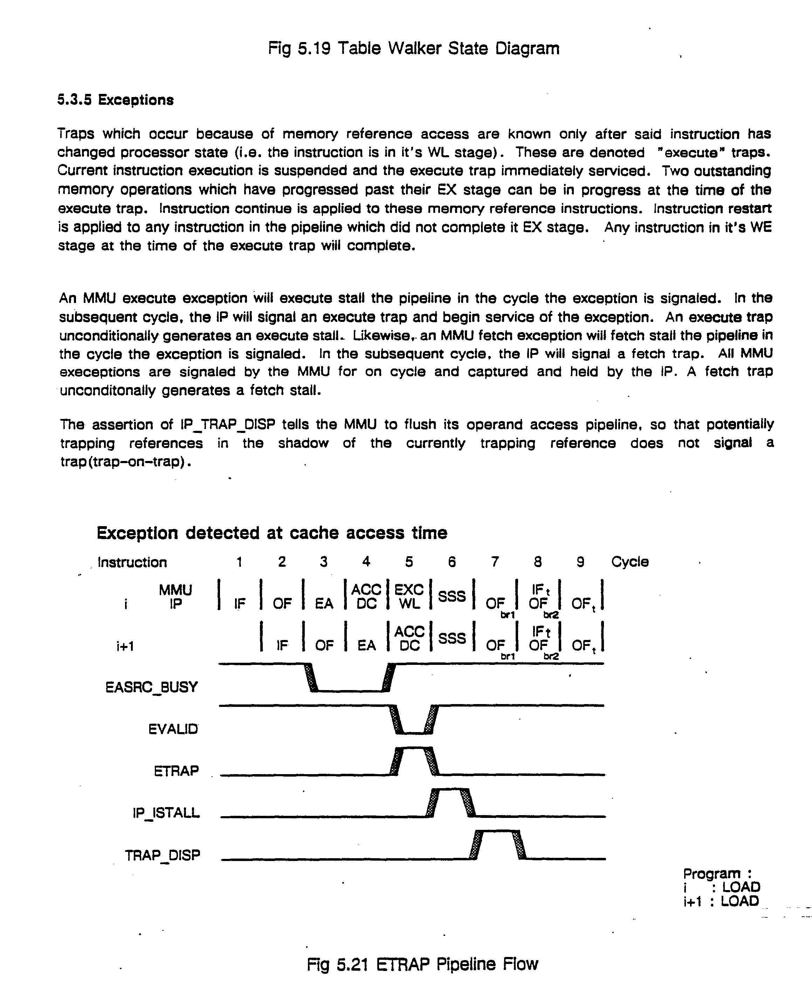

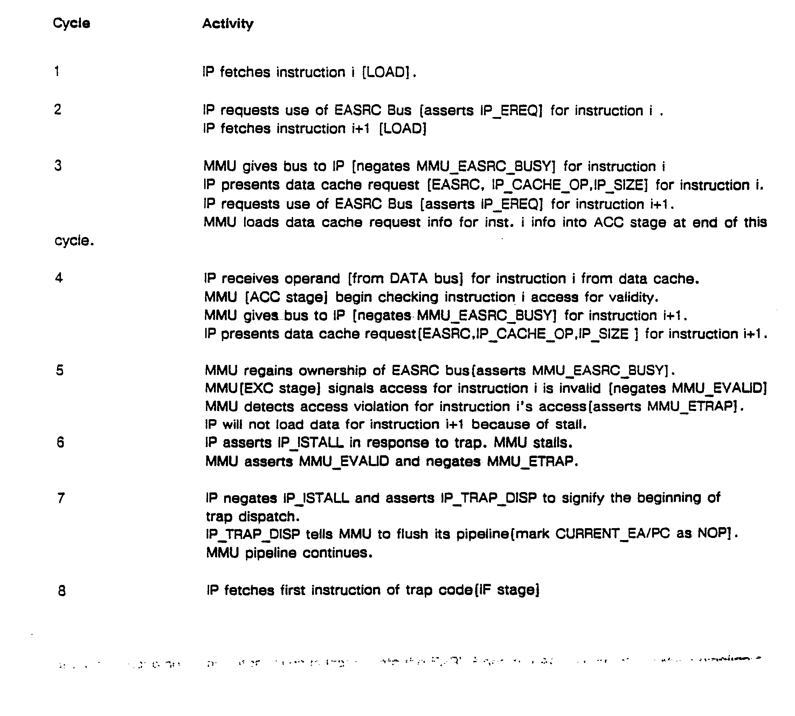

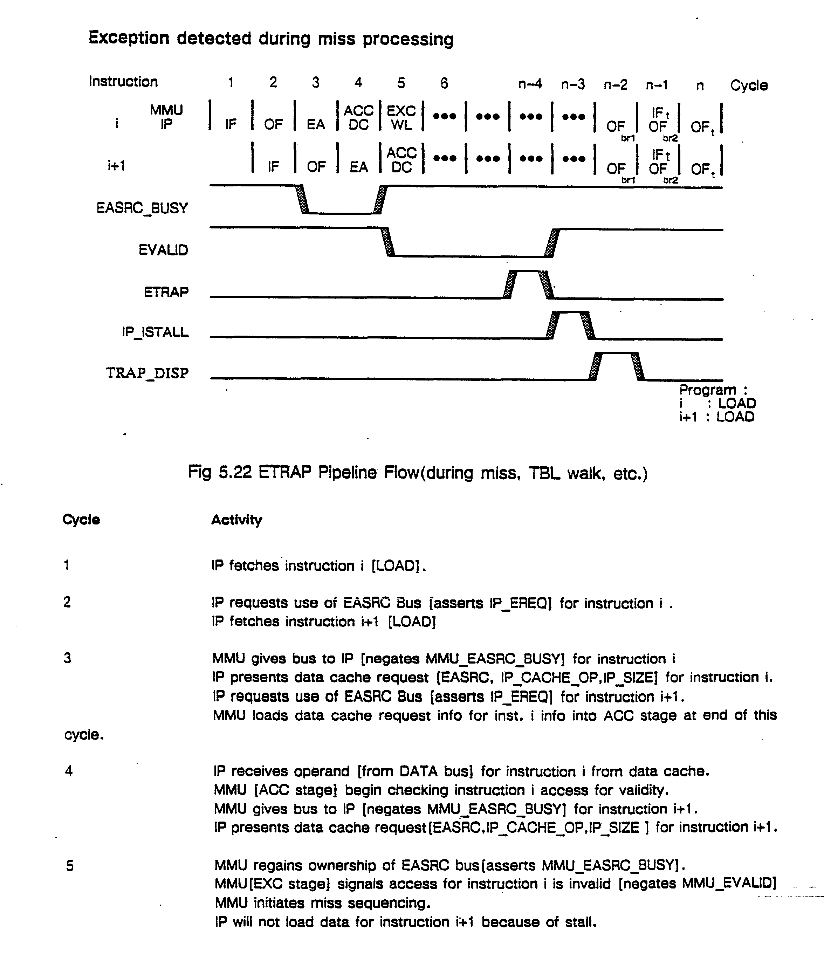

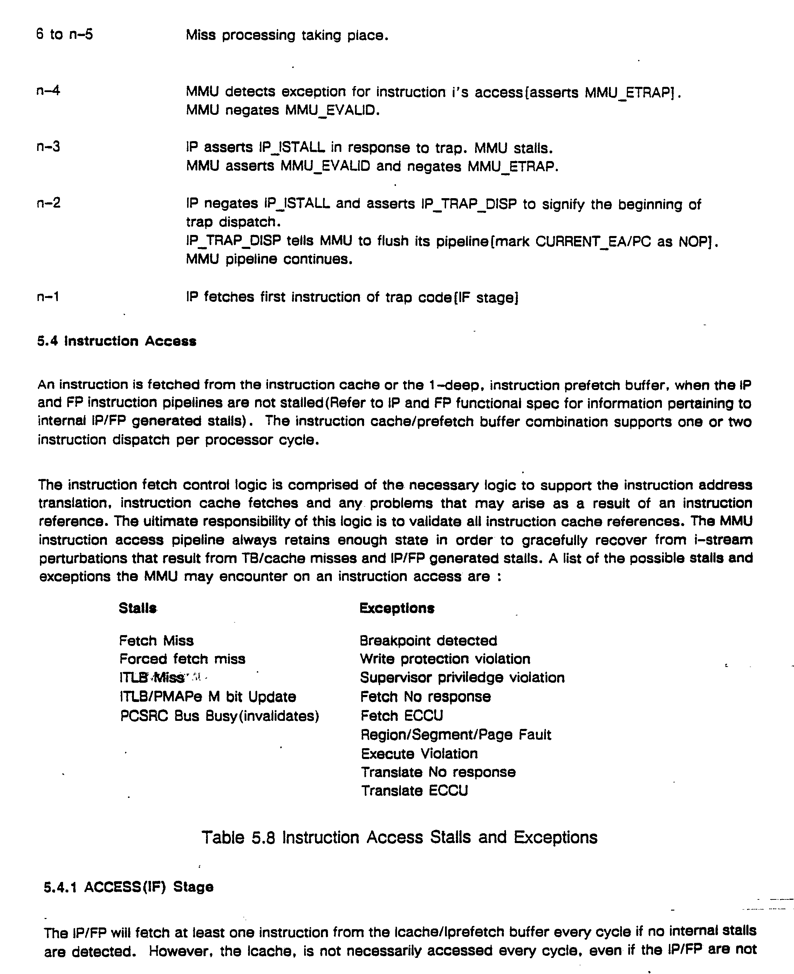

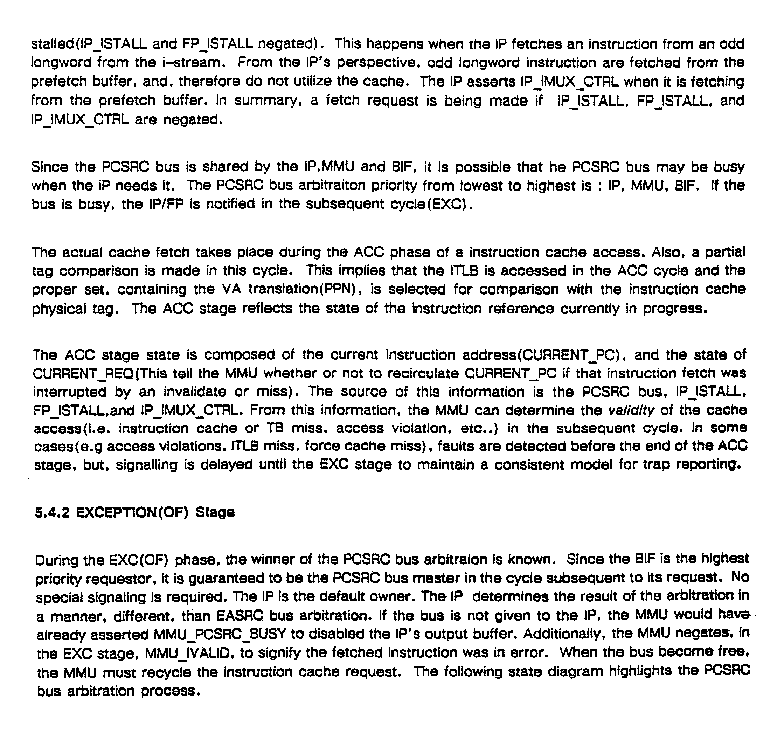

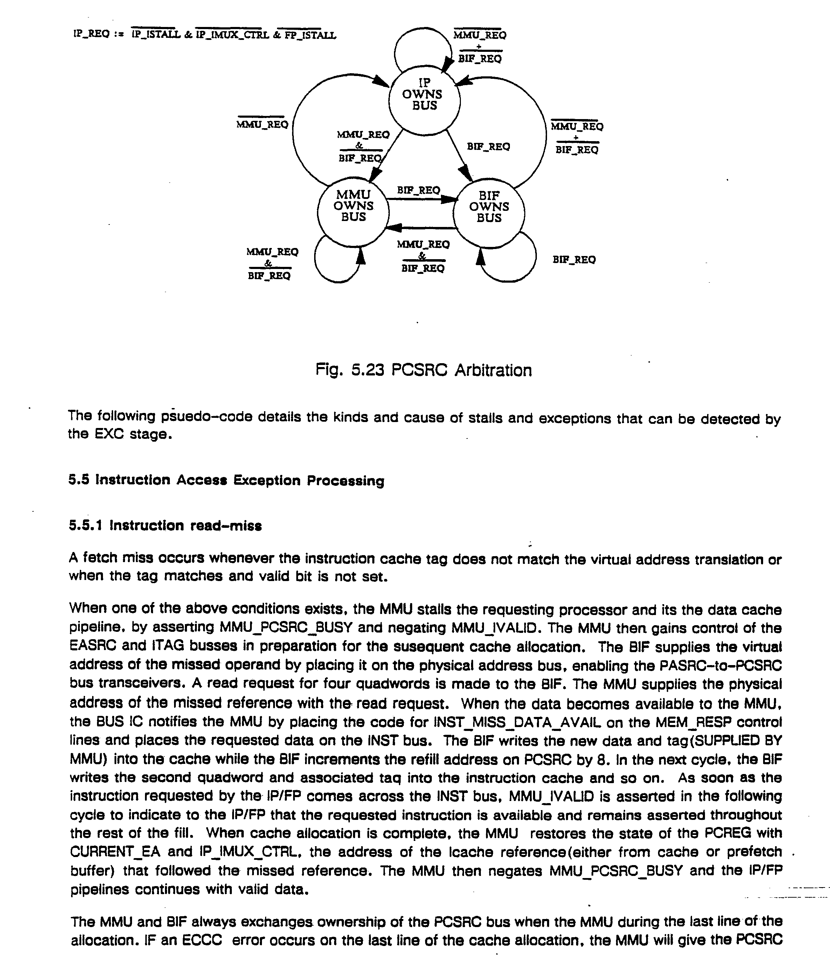

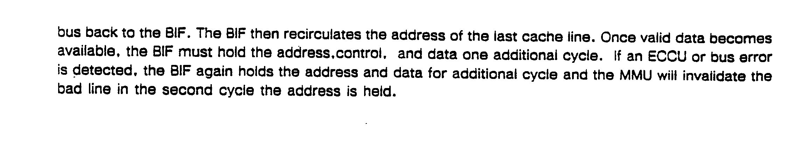

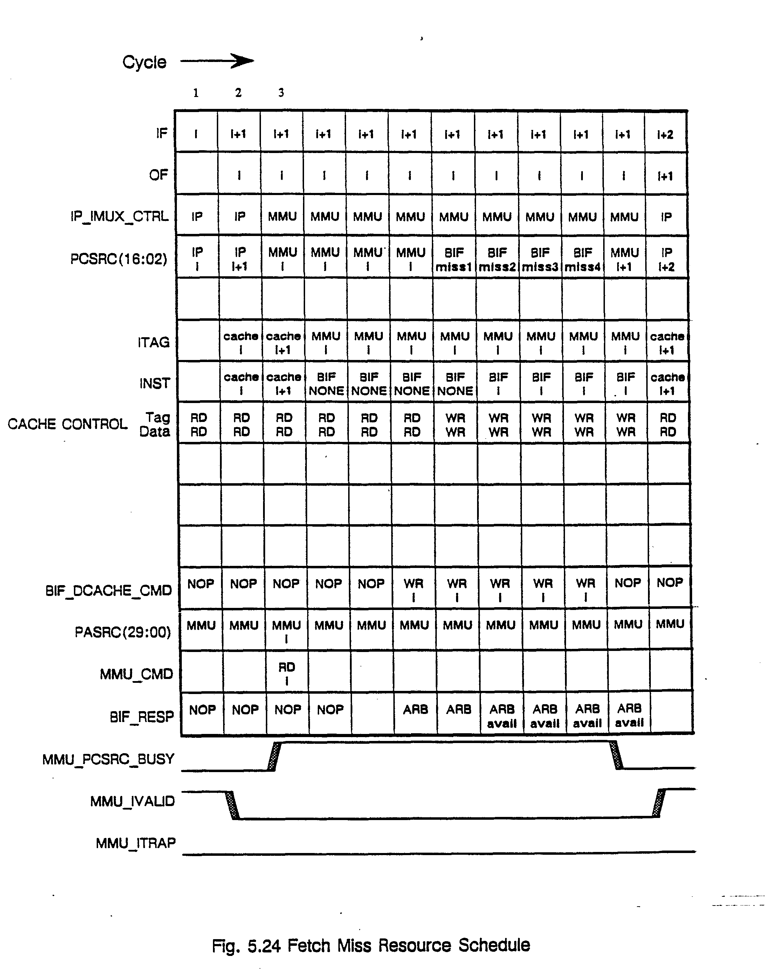

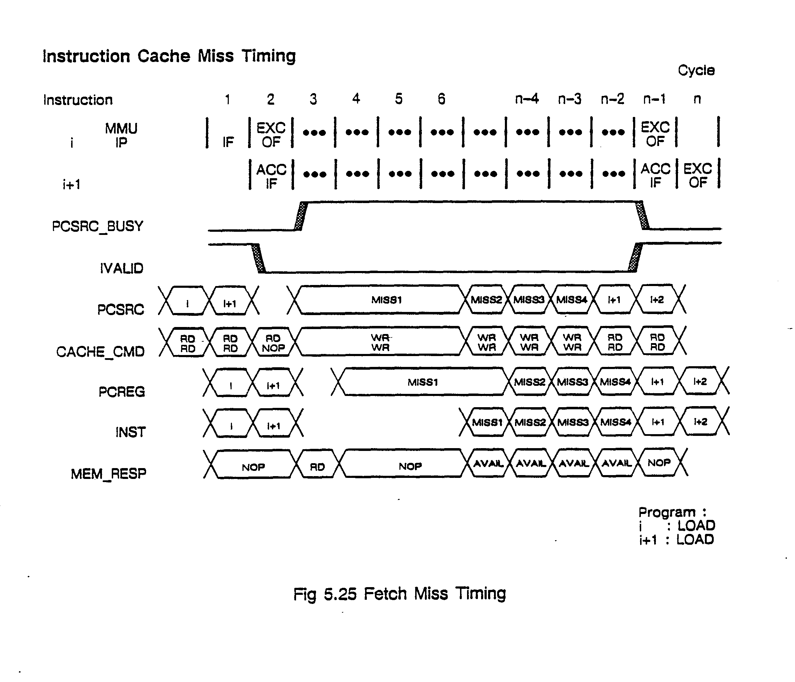

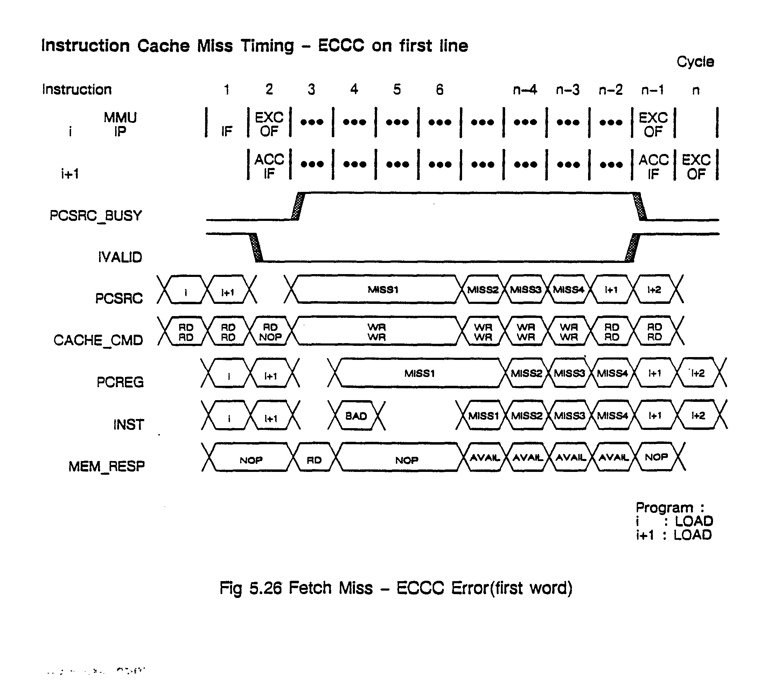

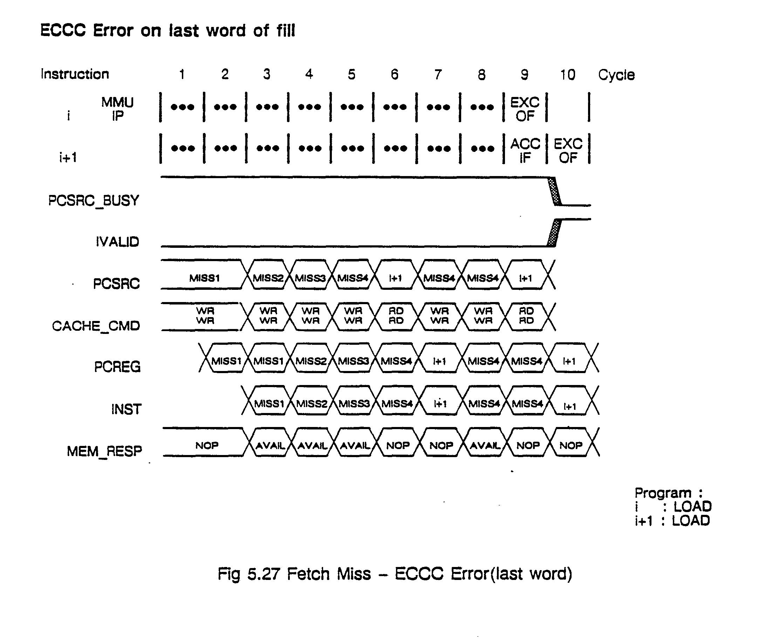

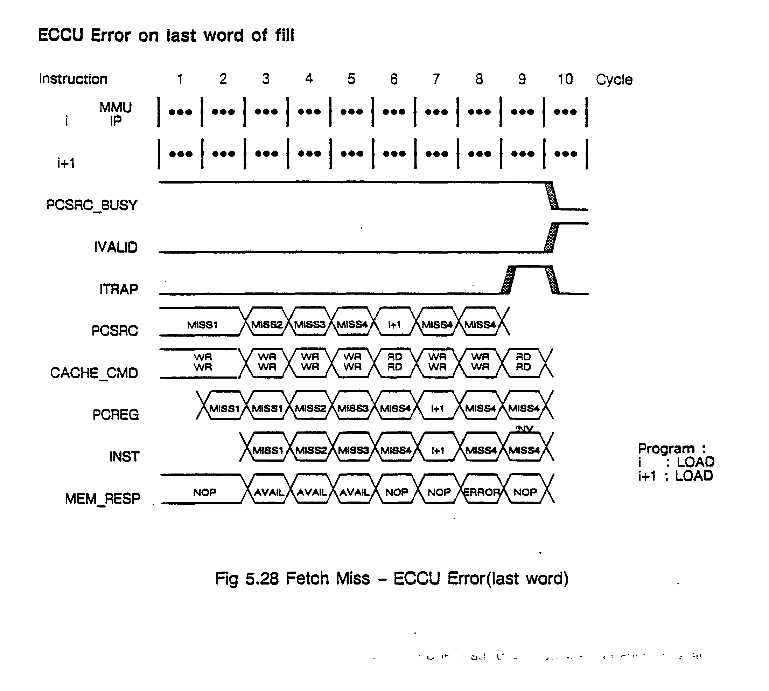

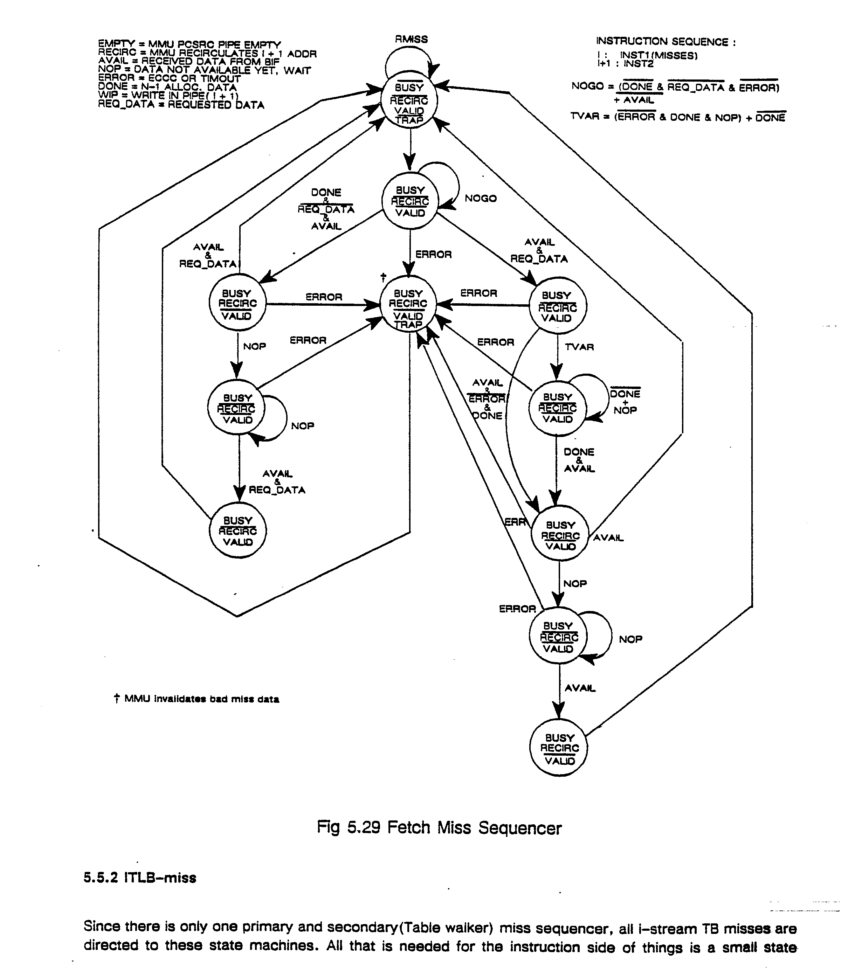

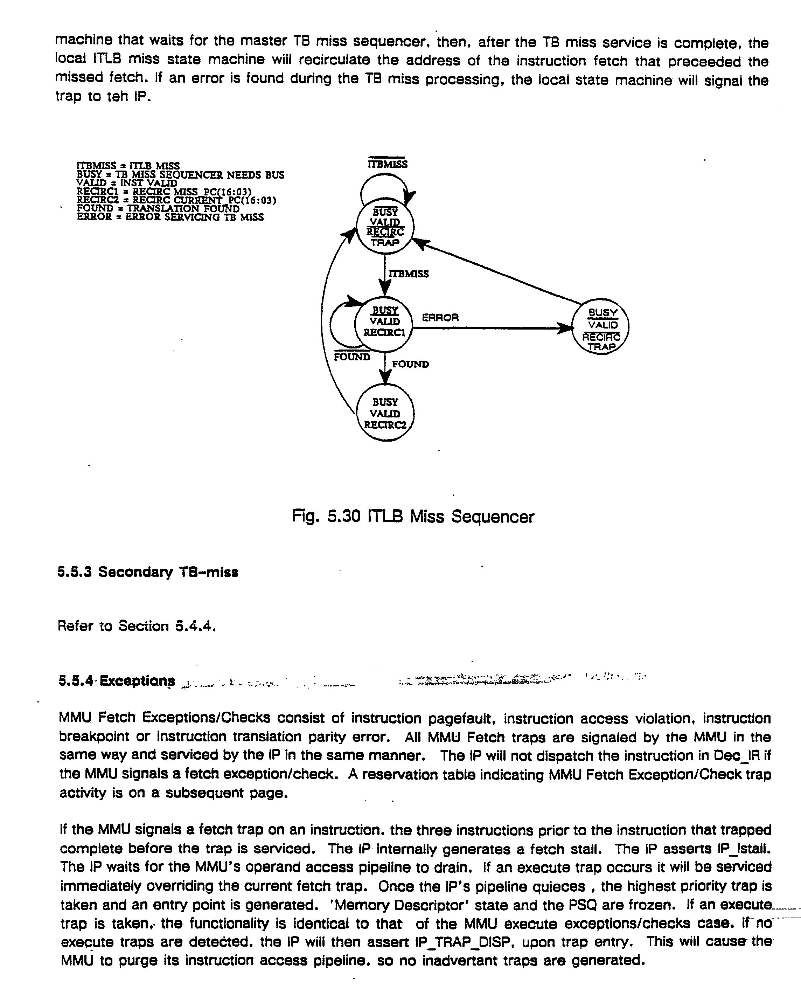

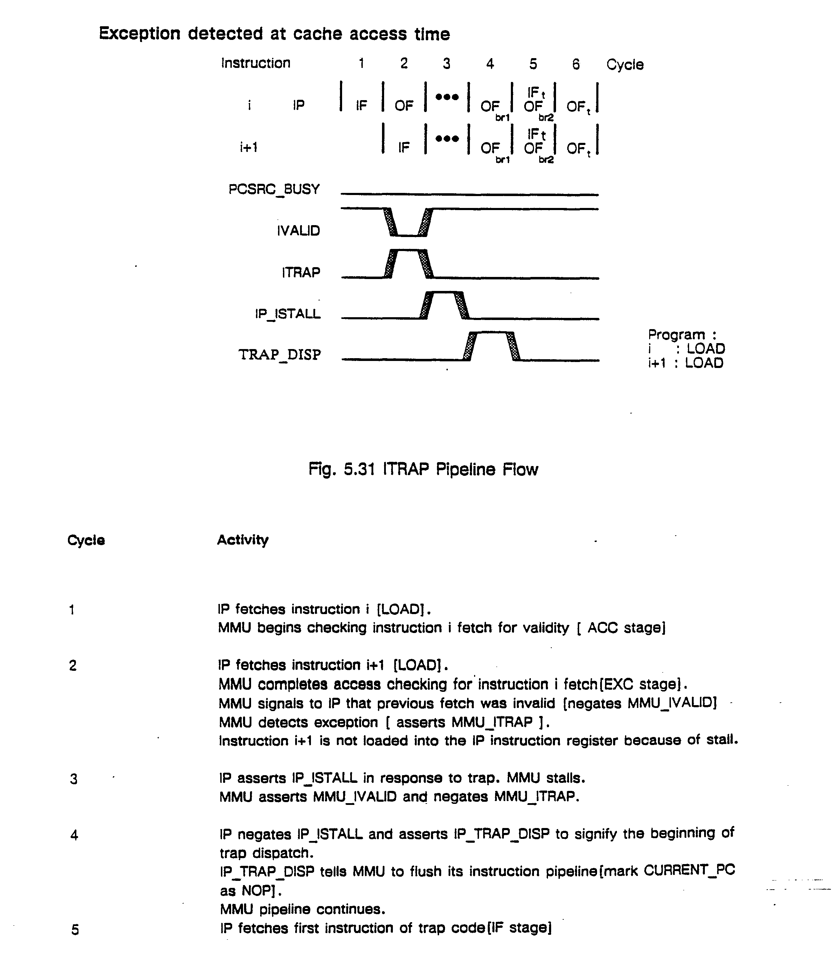

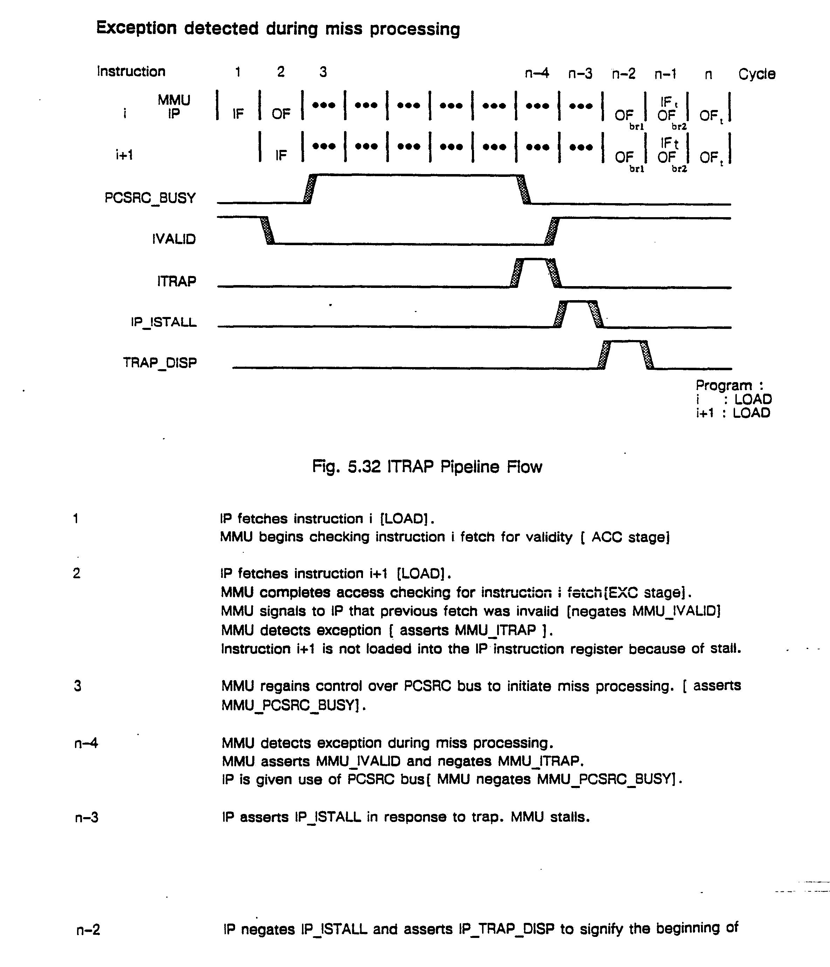

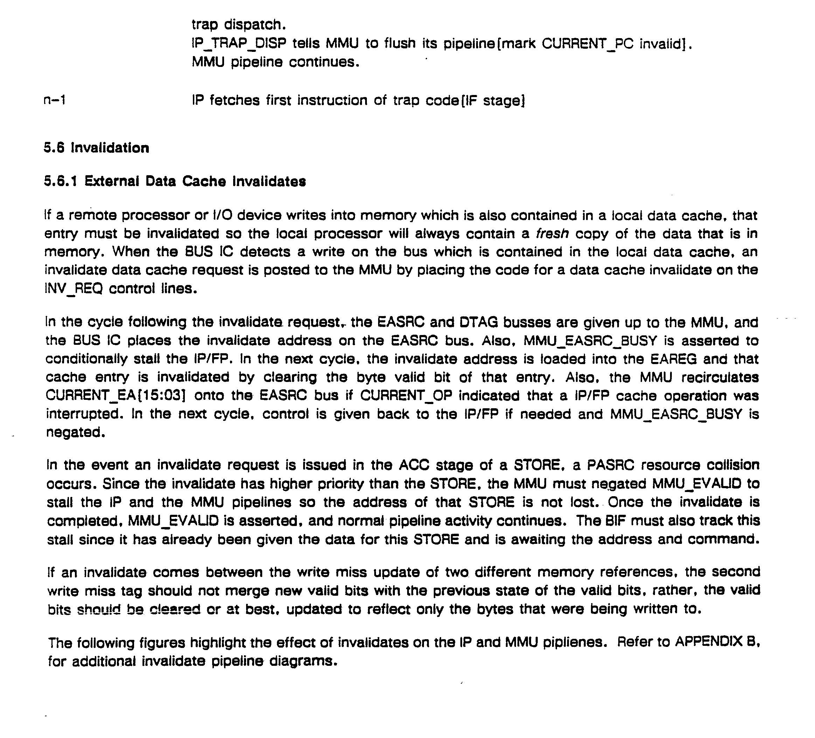

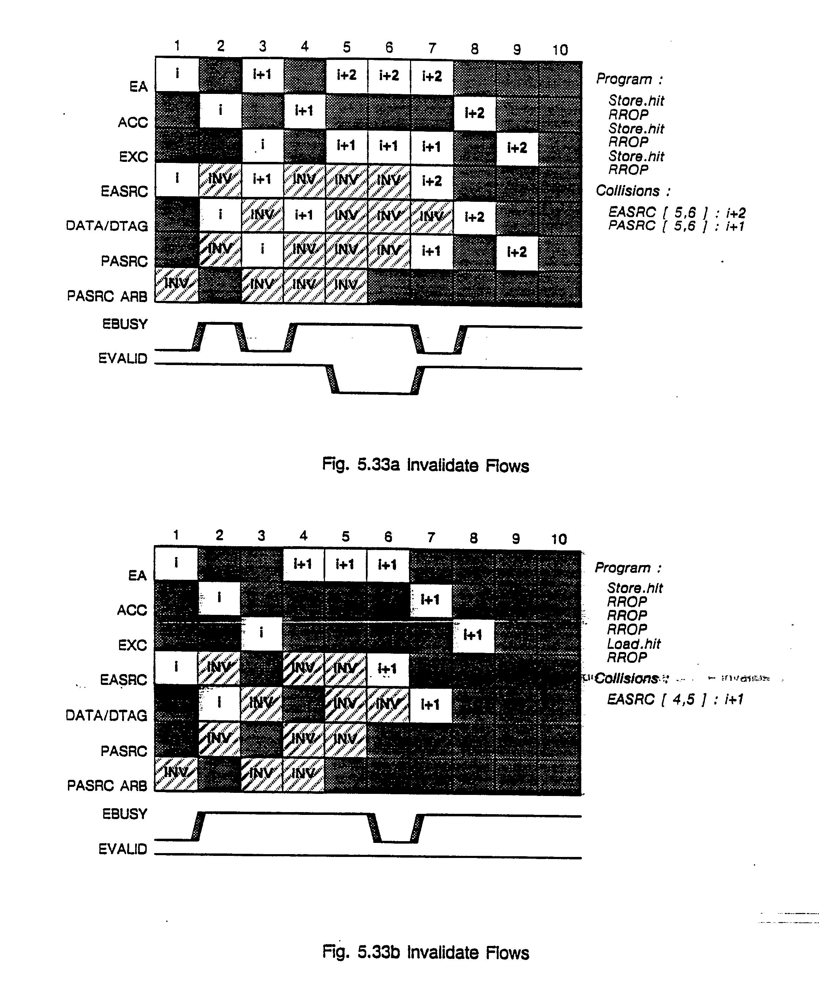

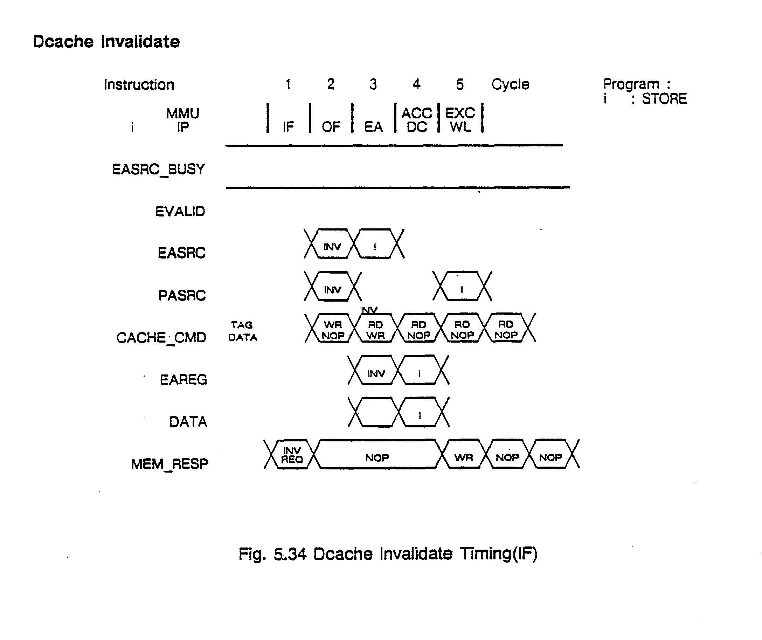

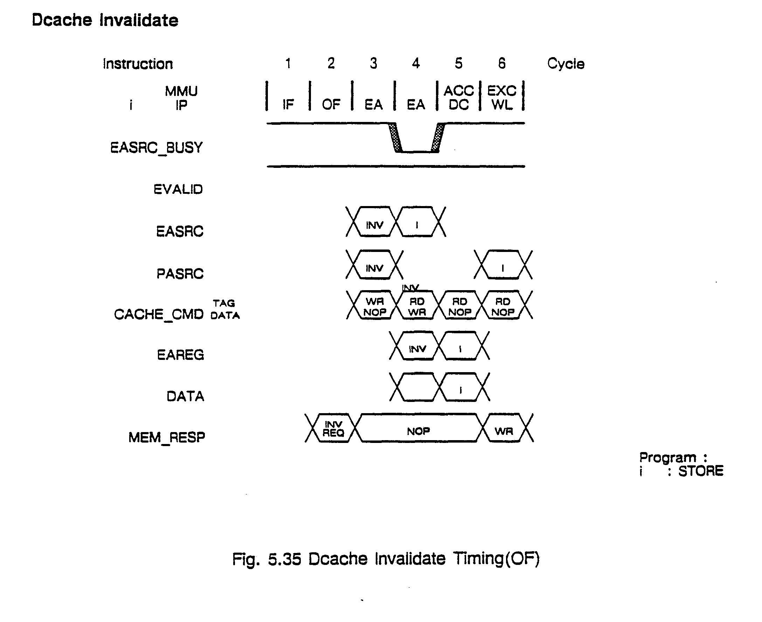

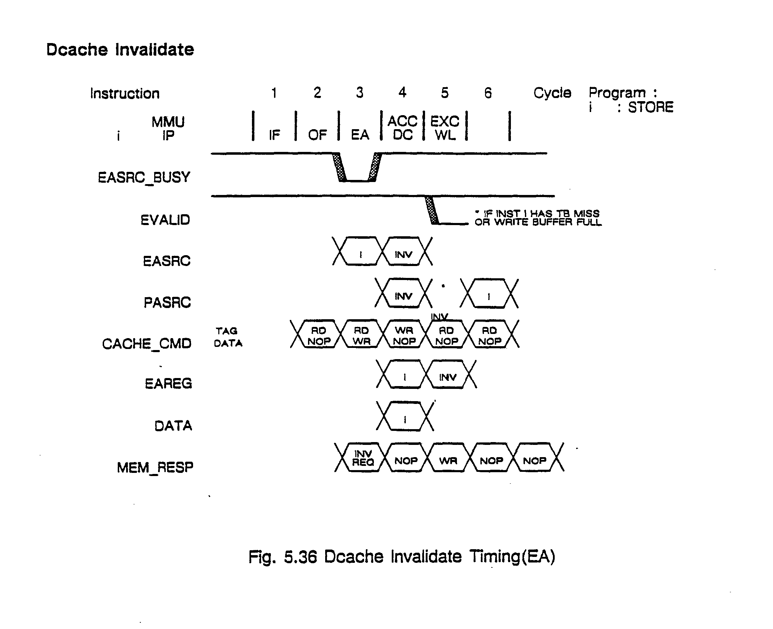

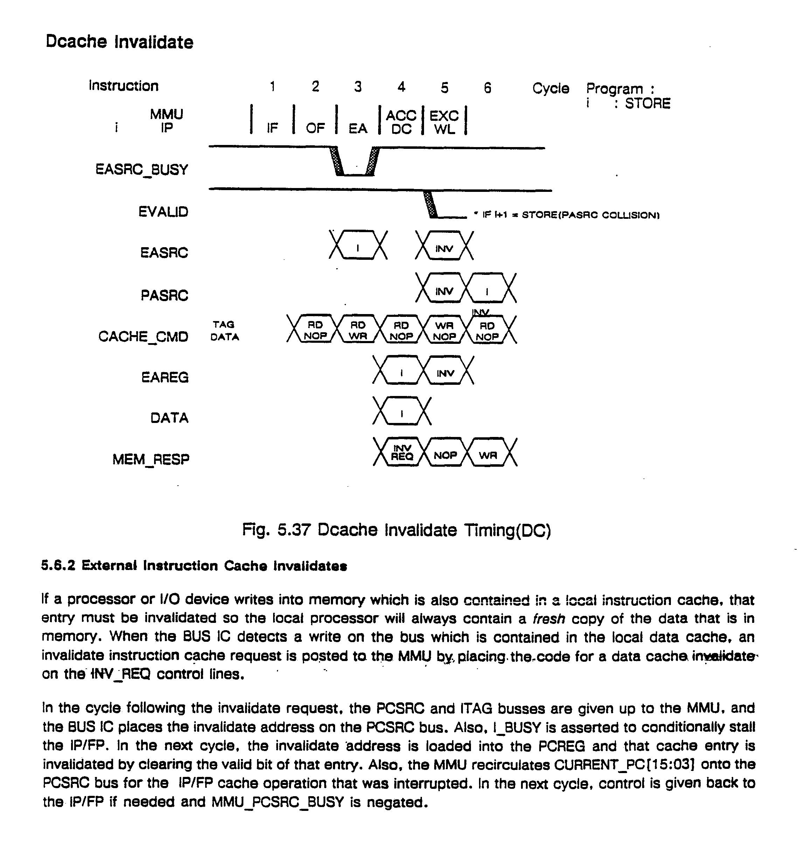

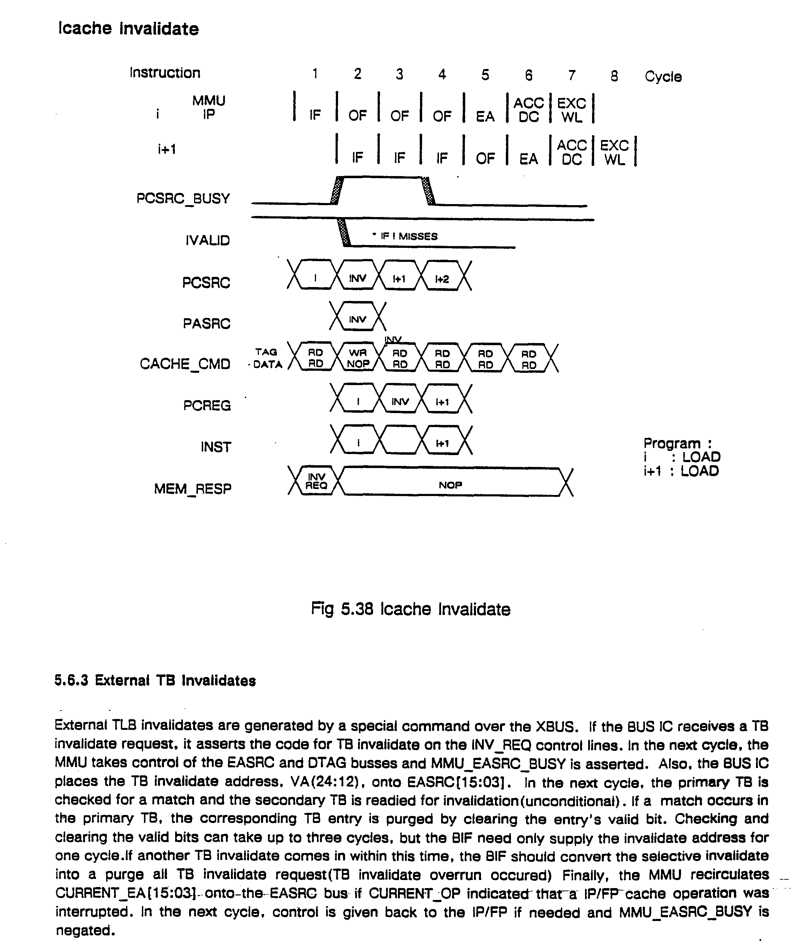

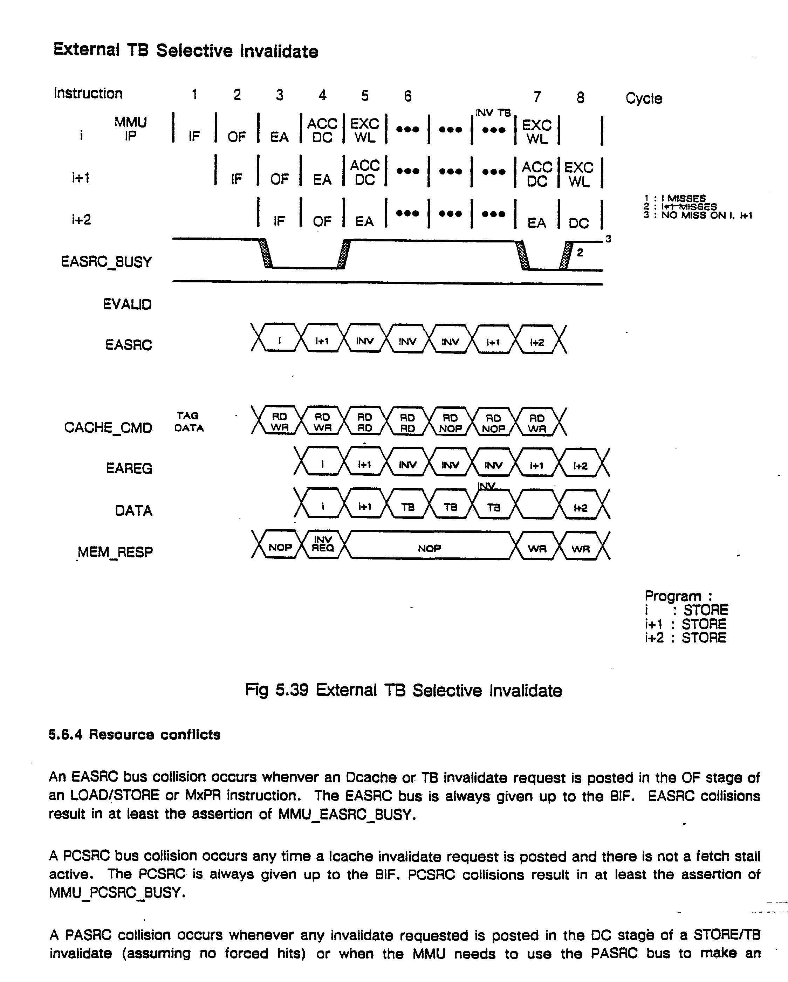

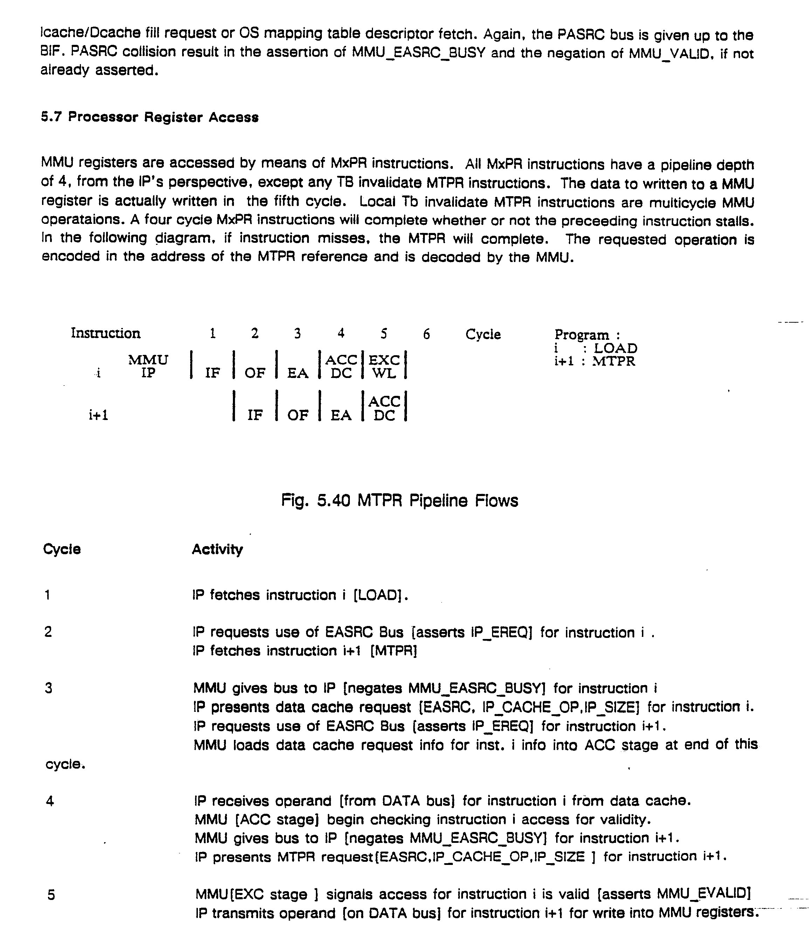

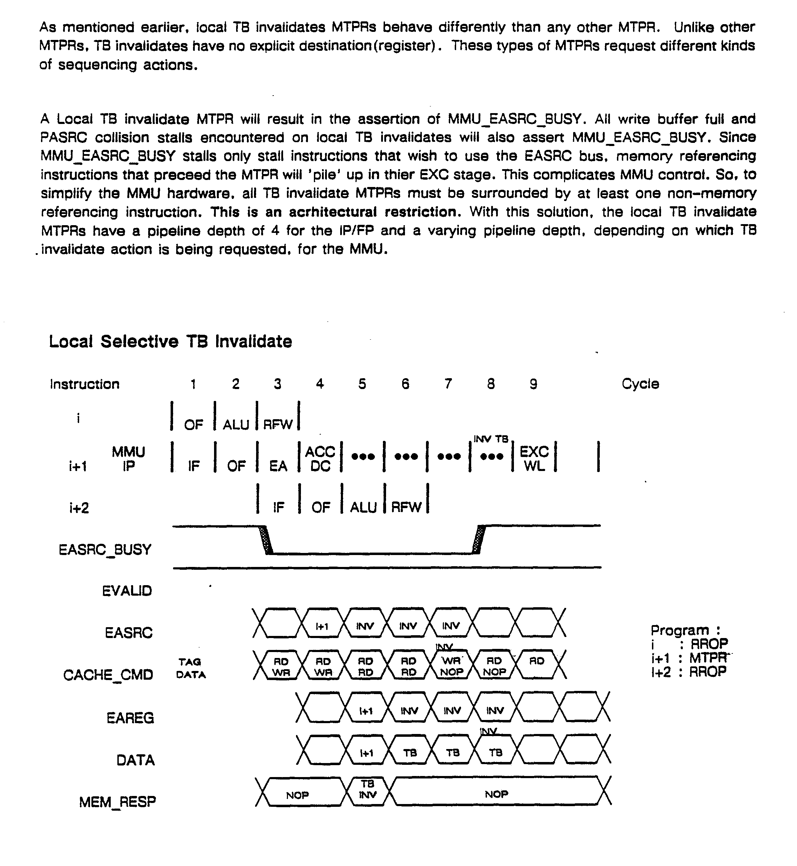

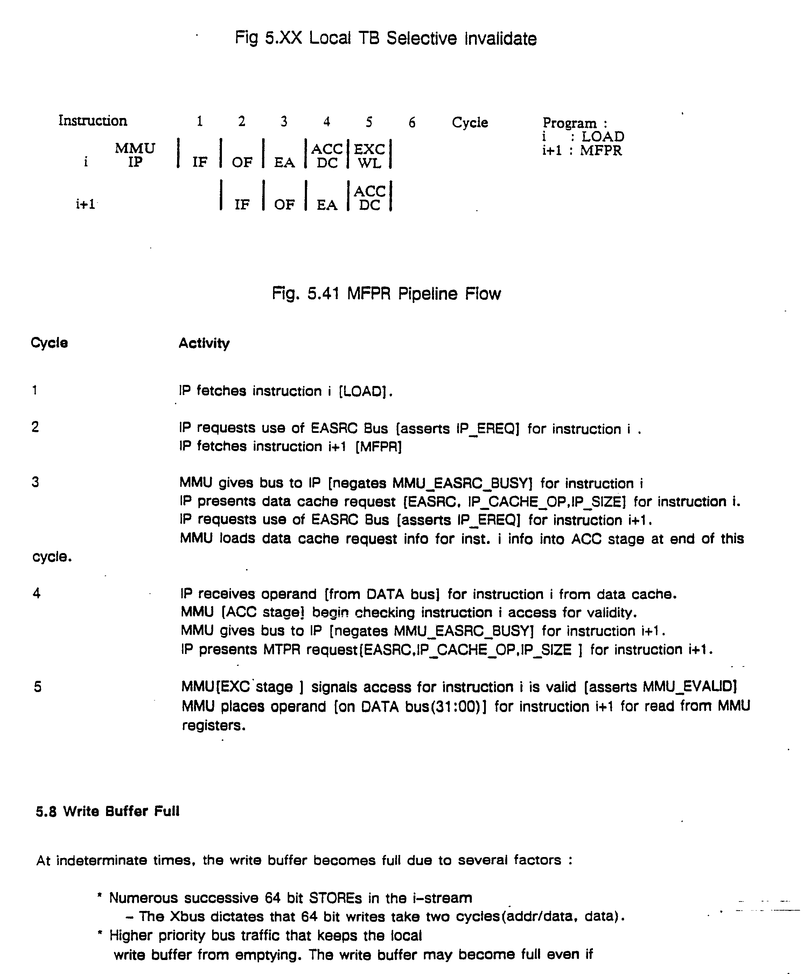

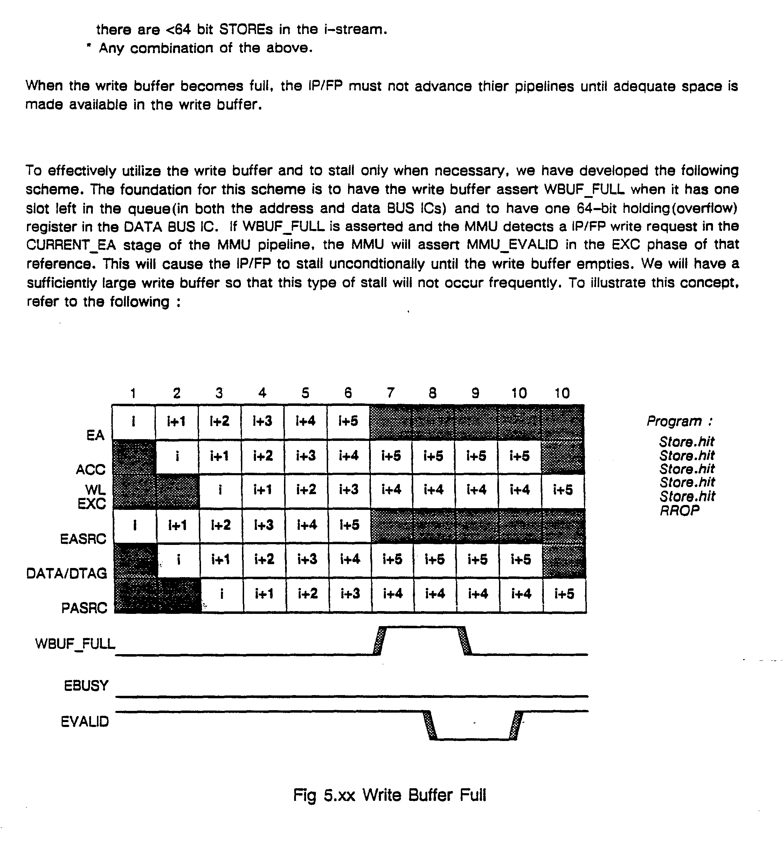

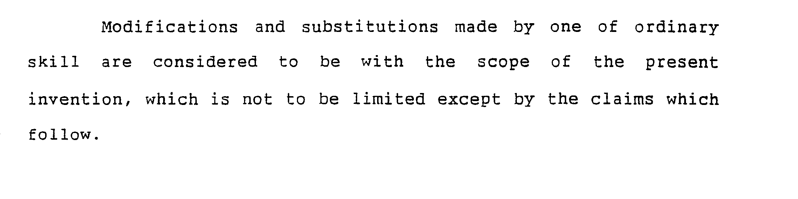

Although the cache access flow represented in the flow chart of Fig. 3 serializes many tests and activities, actual implementations of this invention will adopt some degree of paralellism to maximize performance. A block diagram of a preferred implementation is shown in Fig. 4. At cycle, t, a processor presents the memory request address to the cache management function (CMF) on the PROC ADDR bus which will then be loaded into the "address register" (AREG), 200, Fig. 4, via the "address mux" (AMUX), 207. The request size and type are loaded into the request register, 210.

At cycle, $t+1$, the memory request address is presented to the "cache tag store" (CTS), 202, the "address translation mechanism" (ATM), 201, and the "tag update queue" (TUQ), 206 via the CINDEX bus. The ATM provides the physical address translation on the XLAT__ADDR bus for those systems which use this invention in conjunction with physical caches. In addition, the ATM provides status which is later used to determine write access privilege. This is the first stage of the cache access pipeline. For write requests the data cache data store is written, unconditionally. The entire cycle is used to check cache and queue hit/miss status.

At cycle, $t+2$, the second cycle of cache access, the result of the cache and queue lookup are known and the necessary status is reported back to the processor. When a write miss occurred, the TUQ is updated as specified below while the processor proceeds, unaware of the miss condition. When a read miss occurs, the processor is stalled until the CMF retrieves the data from memory.

When a memory request is made, 100, Fig. 3, the CMF determine the type of request from the signals, WREQ and RREQ. In the case of a write request, the cache data store is written unconditionally, 104. The addressed cache tag is compared against the XLAT__ADDR via the "cache tag comparator" (CTC), 203 while byte validity is determined by a matching of cache tag valid bits and the memory reference's BYTE__MASK. Simultaneously, the TUQ, 206 is queried to determine if the addressed cache entry is scheduled for any subsequent tag modifications, 107.

A "queue write hit" is said to occur when the cache index matches the queued cache index and the XLAT__ADDR matches the queued cache tag, 110. The "cache miss and queue control" (CMQC), 204 then determines whether to allocate or invalidate those bytes accessed by this reference. In either case, only the valid bits of the matching queue entry are modified by the TUQ. The pertinent valid bit and control information is presented to the TUQ by the CMCQ over the MISS__VALID bus, ALLOCATE, INVALIDATE, and LOAD__Q signals.

A "queue write miss" is said to occur when the cache index does match any queued cache index or the cache index match exists but the XLAT__ADDR does not match that entry's queued cache tag, 110. The CMCQ must then "allocate" a new entry in the TUQ. The CMCQ is responsible for presenting the proper tag and valid bit information, over the MISS__TAG and MISS__VALID buses, respectively, to the TUQ. Any valid bit manipulation is done by the CMCQ. The allocation/invalidation decision is determined by the state of the WRITE__ALLOWED signal. If asserted, 117, the TUQ is instructed, by the CMQC, to merge the BYTE__MASK with the current contents to the queued cache valid bits when the ALLOCATE and LOAD__Q signals are asserted and there is a queue write hit, 119.

There are several reasons for disallowing cache writes: non-resident data, insufficient access privileges, unaligned memory reference, unencacheable data, etc. The CMF block diagram shows the ATM to be the sole determinant for allowing writes. In general, this need not be the case. In any event, since the cache data store is written before write permission is known, the cache must be invalidated for those cases where writes are not allowed, 118 to avoid cache inconsistencies. The CMQC instructs the TUQ to reset the queued valid bits corresponding to those bits that are asserted in the BYTE_MASK by asserting the LOAD_Q and INVALIDATE signals. Merging tag update operations reduce the number of "free" cache cycles needed to update the cache and increase the effectiveness of the TUQ.

When a queue write hit does not occur, 110, then the result of the cache tag/valid bit compare may become important. However, if the write request were not "allowed", a cache invalidation must be scheduled, 111. The CMQC passes the previous contents of the cache tag over the MISS TAG bus. The CMCQ forms the MISS_VALID bits by resetting the piped cache valid bits corresponding to those bits that were asserted in the BYTE_MASK. This operation effectively "invalidates" those bytes accessed by the illegal cache reference. The TUQ is then instructed to load the queue with this information. Since a queue write hit did not occur a new queue entry is created when the CMQC asserts the LOAD_Q and INVALIDATE signals, 114, 120.

When a queue hit does not occur and the cache write is allowed and the cache tag matches the XLAT_ADDR, then that cache entry is totally unrelated to this cache reference, 112 and a cache allocation is scheduled by creating a new entry in the TUQ. The MISS_TAG becomes the piped XLAT_ADDR and MISS_VALID becomes the pipe BYTE_MASK bits, 115, 120. The TUQ creates this new entry when the LOAD_Q and ALLOCATE signals are asserted.

When a queue hit does not occur and the cache write is allowed and the cache tag matches the XLAT_ADDR and the valid bits do not match, 113, a cache allocation is scheduled by creating a new entry in the TUQ which effectively updates the "missing" valid bits. The MISS_TAG becomes the piped copy of the XLAT_ADDR and MISS_VALID is the logical OR of the piped BYTE_MASK bits and the piped cache valid bits, 116, 120. The TUQ creates this new entry when the LOAD_Q and ALLOCATE signals are asserted. When a queue hit does not occur and the cache write is allowed and the cache tag matches the XLAT_ADDR and the valid bits match, 113, a cache hit is said to occur. No tag modifications are scheduled.

Had the originally issued memory reference been a read request, 105, the request address would have been presented to the CMF in the same manner as described above for the write requests. For read requests, the data is read from the data store while the queue and tag store lookups are made, 106. It should be noted that all queued tag state supercedes any cache tag state when a cache entry has a related valid queue entry in the TUQ (i.e., queued cache index matches cache index of current memory request). A "queue read hit" is said to occur when the cache index matches the queued cache index, the XLAT_ADDR matches the queued cache tag, and the BYTE_MASK is inclusive of the queued valid bits. Should a read request result in a queue read hit, then the data read from the cache is valid and the processor can proceed without haste, 108.

When a read request cannot be satisfied by the TUQ, then the result of the cache tag/valid bit comparison becomes important. If the cache tag matches the XLAT_ADDR and the BYTE_MASK is inclusive of the cache tag valid bits, then a "read hit" is said to occur and the processor can proceed without haste, 109. Otherwise, a "read miss" occurs and the processor must stall until the requested data can be fetched from memory, 103. The steps taken beyond this point are beyond the scope of this invention.

The CMCQ will attempt to only dequeue tag modifications when the cache is not busy, i.e., no memory requests posted, 100 and the queue is not empty, 101. When this condition exists the CMCQ takes control to the cache. The cache tag store is addressed by the queued cache index, Q_CINDEX, via the AREG, 200 via the AMUX, 207. The cache tag is updated with the queued cache tag, Q_CTAG, and the queued valid bits, Q_VALID, TMUX, 200, and VMUX, 208 multiplexors, respectively. The queue unload sequence may proceed as long as there are no memory requests pending. For finite length queues, a long stream of write misses can "fill" the queue before the CMF has a chance to unload anything. In this case, the CMF will stall the processor and preempt any use of the cache so that an adequate portion of the TUQ can be unloaded, 121.

<u>APPENDIX I</u>

For a read operation, the second cycle of cache access, herein called the EXCeption (EXC) stage, involves signalling all cache and non-cache related exception status to the processor 54. This latent notification implies the processor must adopt the instruction continue model for trapping data references if the data received in the ACC stage has modified processor state. In the case where the tag matches and the tag valid bit is set (i.e., "cache hit"), the processor proceeds unaware of the EXC stage of cache

5

access, hence the "illusion" of single cycle cache access. Back-to-back cache access is achieved by overlapping the EXC stage of memory reference i with the ACC stage of memory reference i + 1. If the tag mismatches or the tag valid bit is not set, a "cache miss" sequence is triggered. At this time, the cache management function takes control of the cache while the processor waits for the return of the "valid" data to the processor.

The actual cache read/write takes place during the ACC phase of a data cache access. According to this present invention, a partial tag comparison is also made in this cycle in the MMU. The DTLB is accessed in the ACC cycle and the proper bit set, containing the VA translation (PPN), is selected for comparison with the data cache physical tag. The ACC stage reflects the state of the operand reference currently in progress.

The ACC stage state is composed of the current operand address (CURRENT_EA), current operand size (CURRENT_SIZE), and the current cache operation type (CURRENT_OP) and any pending EASRC bus request. The source of this information is the EASRC bus, IP_SIZE, and IP_CACHEP_OP, and IP_EREQ respectively. From this information, the MMU can determine the validity of the cache access (i.e. data cache or TB miss, access violation, etc.) in the subsequent cycle. In some cases (e.g. access violations, unaligned address error, translation cache or DTLB miss, force cache miss), faults are detected before the end of the ACC stage, but, signalling is delayed until the EXC stage to maintain a consistent model for trap reporting.

Since the MMU is the default master, the MMU will regain control of the EASRC bus in this stage if there are not any pending IP or bus interface EASRC bus requests. If the CURRENT_OP is a STORE the MMU will recirculate the write miss virtual address and prepare the cache tag to be updated. If the CURRENT_OP is a LOAD, the Secondary TB miss address is recirculated and the cache is prepared for a TB lookup. These actions are done so that, probabilistically, the MMU could shave a cycle out of write miss or DTLB miss by assuming one of these two conditions will occur. If a write miss is not detected, the MMU will simply rewrite the tag. If a DTLB miss does not happen, the MMU will ignore the secondary TB tag it fetched.

Any stalls or exceptions resulting from the DTLB lookup or the data cache tag comparison are signaled in the second phase of cache access called, the EXCEPTION (EXC) stage. The EXC stage contains the state of a potentially faulting data cache reference.

The EXC stage state is composed of the missed operand address (MISS_EA), the missed operand size (MISS_SIZE), and the missed cache operation type (MISS_OP). This pipeline stage is fed directly from the previous pipeline stage, the ACC stage. Additionally, the result of the access check is saved in a register (DCHECK), which includes the CURRENT_EA/MISS)_EA comparison result (write, miss merge) and the physical address of the operand accessed is saved in the DPA (data physical address) register. This stage contains all the necessary information to complete a cache access check, to issue a request to the physical memory/I/O subsystem, if needed, to aid in stall recovery, and to signal any detected exceptions in the IP.

If the virtual address translation is in the DTLB (DTLB Hit), no access violations are detected, the operand is in the data cache (Dcache Hit), and there are not any higher priority requestor for the EASRC bus, the IP and MMU pipeline progress, undisturbed. The operand transfer is considered valid. Normal Pipeline operation is shown below.

## TABLE 1

| Cycle | Activity |
|---|---|
| 1 | IP fetches instruction i [LOAD]. |
| 2 | IP requests use of EASRC Bus [asserts IP_EREQ] for instruction i. IP fetches instruction i+1 [STORE]. |
| 3 | MMU gives bus to IP [negates MMU_EASRC_BUSY] for instruction i. IP presents data cache request [EASRC, IP_CACHE_OP, IP_SIZE] for instruction i. IP requests use of EASRC Bus [asserts IP_EREQ] for instruction i+1. MMU loads data cache request info for inst. i info into ACC stage at end of this cycle. |
| 4 | IP recites operand [from DATA bus] for instruction i from data cache. MMU [ACC stage] begin checking instruction i access for validity. MMU gives bus to IP [negates MMU_EASRC_BUSY] for instruction i+1. IP presents data cache request [EASRC, IP_CACHE_OP, IP_SIZE] for instruction i+1. |
| 5 | MMU [EXC stage] signals access for instruction i is valid [asserts MMU_EVALID]. IP transmits operand [on DATA bus] for instruction i+1 for write into data cache. MMU [ACC stage] begins checking instruction i+1 access for validity. MMU [EXC stage] signals access for instruction i+1 is valid [asserts MMU_EVALID]. |

The following are kinds and cause of stalls and exceptions that can be detected by the EXC stage.

If a write miss is detected or an invalidate is posted, the MMU will have asserted MMU_EASRC_BUSY in the EXC (invalidates actually can happen in any cycle) stage. This type of stall has the effect of stalling any instruction in its EA stage, while any other instruction in its DC or WL stage progress. At the time the write miss was detected (WL of i), a LOAD(i+1) or STORE(i+1) could be in its DC phase. It is useful to save the status of that cache access, rather than rerun that reference, after the write miss service, to regain the access state of i+1. This state makes up the WMM stage.

A read miss occurs whenever the data cache tag does not match the virtual address translation or when the tag matches but the proper byte valid bits are not set properly. For example, if the IP reads byte O of a cache line and all the valid bits for that line, except for byte O, are set, a miss occurs even if the data cache tag matches the virtual address translation.

When one of the above conditions exists, the MMU stalls the requesting processor and its the data cache pipeline, by asserting MMU_EASRC_BUSY and negating MMU_EVALID. The MMU then gains control of the EASRC, DATA, DTAG busses in preparation for the subsequent cache allocation. The BIF supplies the virtual address of the miss operand by placing it on the physical address bus, enabling the PASRC-to-EASRC bus transceivers and also supplies the necessary cache control for the actual cache allocation. A read request for two quadwords is made to the BIF if the missed reference was an integer LOAD. The MMU supplies the physical address of the missed reference with the read request. Eight quadwords are fetched if the missed reference was a floating point LOAD on a 64-byte boundary. When the data becomes available to the MMU, the BUS IC notifies the MMU by placing the code for READ_MISS_DATA_AVAIL on the MEM_RESP control lines and places the requested data on the DATA bus. The MMY will also recirculate EASRC(2:0) and IP_SIZE(1:0) of the missed reference, during the allocation process. The new data and tag (supplied by the MMU) are written into the cache while the BIF increments the refill address on EASRC by 8. In the next cycle, the BIF writes the second quadword and associated tag into the data cache. As soon as the data requested by the IP/FP comes across the DATA bus, MMU_EVALID is asserted in the following cycle to indicate to the IP/FP that the requested data is available. When cache allocation is complete, the MMU conditionally restores the state of the EAREG by testing the CURRENT_OP field in the ACCESS_EA stage of the MMU pipeline. If a cache request was made in the cycle following the cache access that missed, CURRENT_EA, which contains the virtual address of the subsequent cache access, in the ACCESS_EA pipeline is placed on the EASRC bus to be loaded into the EAREG. Additionally, the MMU recirculates IP_CACHE_OP, IP_SIZE (for the external

7

control PAL's benefit) of the reference, to restore the memory pipeline. The MMU then negates MMU_EVALID and the IP/FP pipelines continues with valid data.

The MMU and BIF always exchanges ownership of the EASRC bus when the MMU during the last line of the allocation. If an ECCC error occurs on the last line of the cache allocation, the MMU will give the EASRC bus back to the BIF. The BIF then recirculates the address of the last cache line. Once valid data becomes available, the BIF must hold the address, control, and data one additional cycle for the new valid data. If an ECCU or bus error is detected, the BIF again holds the address, control, and data for additional cycle and the MMU will invalidate the bad line in the second cycle the address is held.

**Claims**

1. A method of cache data transfer comprising the steps of:
transferring the requested cache data from said cache to a destination location during a first cycle;
transferring the cache tag associated with said requested data to a cache management means during said first cycle for comparison of the requested data tag and a portion of the address signal corresponding to said data;
clocking said requested data into said destination and completing said tag comparison by the end of said first cycle;
signalling to said cache in a later cycle the status of said destination;
completing said transfer upon a successful comparison of said requested data tag;
inhibiting the completion of said transfer upon an unsuccessful comparison of said requested data tag; and
updating the cache tag in a later cycle upon an unsuccesful comparison of said tags.

2. Apparatus for selectively transferring data and corresponding tag from a cache memory, comprising:
a processor providing a data request to said cache, said data request including a corresponding tag signal;
means for transferring the requested data to said processor during a first cycle;
cache management means receiving said tag from the data in said cache memory and receiving the tag of the requested data from said processor for performing a tag comparison during said first cycle;
means for signalling to said cache management means the successful completion of the transfer of the requested data between said cache and said processor; and
means for updating said cache tag in a subsequent cycle conditioned upon one of an indication from said means for signalling of an unsuccesful data transfer and an indication from said code management means of an unsuccesful tag comparison.

FIG. 1

**FIG. 2**

FIG. 3

,10611.2

APPENDIX II

# AT Memory Management
# and
# Cache Subsystem
# Functional Specification
## Paul Mageau

**apollo computer inc.**
330 Billerica Road
Chelmsford, MA 01824
October 1, 1987
Rev 4.0

0

This page is intentionally left blank

Table of Contents                                                                    i

## List of Sections

1.0        Introduction .................................................. 1-1

    1.1 System Bus Interconnect ...................................... 1-1

2.0        Caches ...................................................... 2-1

    2.1    Data Cache .............................................. 2-1
        2.1.1          Size ...................................... 2-1
        2.1.2          Associativity ............................. 2-2
        2.1.3          Refill Algorithm .......................... 2-3
        2.1.4          Write Policies ............................ 2-3
    2.2    Data Cache Operations ................................... 2-3
        2.2.1          Data Cache Reads .......................... 2-3
        2.2.2          Data Cache Writes ......................... 2-4
        2.2.3          Data Cache Invalidates .................... 2-4
        2.2.4.1        Local Data Cache Invalidates .............. 2-4
        2.2.3.2        External Data Cache Invalidates ........... 2-5
        2.2.4          Unencacheable Memory ...................... 2-6
    2.3    Instruction Cache ....................................... 2-6
        2.3.1          Size ...................................... 2-6
        2.3.2          Associativity ............................. 2-7
        2.3.3          Refill Algorithms ......................... 2-7
        2.3.4          Prefetch Buffer ........................... 2-7
    2.4    Instruction Cache Operation ............................. 2-8
        2.4.1          Instruction Fetch ......................... 2-8
        2.4.2          Unencacheable Memory ...................... 2-8
        2.4.3          Instruction Cache Invalidation ............ 2-8
        2.4.3.1        Local Instruction Cache Invalidates ....... 2-8
        2.4.3.2        External Instruction Cache Invalidates .... 2-8
    2.5    Translation Caching ..................................... 2-9
        2.5.1          Primary TB ................................ 2-10
        2.5.1.1        Size ...................................... 2-11
        2.5.1.2        Associativity ............................. 2-11
        2.5.1.3        Replacement Algorithm ..................... 2-11
        2.5.2          Secondary TB .............................. 2-12
        2.5.2.1        Size ...................................... 2-12
        2.5.2.2        Associativity ............................. 2-13
        2.5.3          TB Invalidation ........................... 2-13
        2.5.3.1        Local TB Invalidates ...................... 2-14
        2.5.3.2        External TB Invalidates ................... 2-14

3.0        Bus Interface .............................................. 3-1

3.1      Shared Responsibilities ............................................... 3-1
   3.1.1         External Cache Invalidates ................................ 3-1
   3.1.2         Cache Allocation ......................................... 3-1

4.0      Software Model ...................................................... 4-1

   4.1      MMU Register Set ............................................... 4-1
      4.1.1         RMAPe Registers ....................................... 4-1
      4.1.2         FP Exception PC Chain Register ........................ 4-2
      4.1.3         MMU CSR .............................................. 4-2
      4.1.4         Cache Flush Commands ................................. 4-6
      4.1.4.1       Data/Instruction Cache Invalidation .................. 4-7
      4.1.4.2       Selective TB Invalidation ............................ 4-7
      4.1.4.3       Primary TB Flush ..................................... 4-8
      4.1.4.4       All TB Flush ......................................... 4-8
      4.1.5         MMU Trap Summary Register(TSR) ....................... 4-8
      4.1.6         Breakpoint Address Register .......................... 4-8
   4.2      Cache Probes ................................................. 4-9
   4.3      Read Physical ................................................ 4-11

5.0      Functional Overview ................................................ 5-1

   5.1      Data Path Elements ............................................. 5-3
      5.1.1         EASRC Mux ............................................ 5-3
      5.1.2         PCSRC Mux ............................................ 5-5
      5.1.3         PASRC Mux ............................................ 5-6
      5.1.4         DTAG Mux ............................................. 5-7
      5.1.5         ITAG Mux ............................................. 5-7
      5.1.6         DATA Mux ............................................. 5-8
   5.2      Operand Access ................................................ 5-9
      5.2.1         DECODE(OF) Stage ..................................... 5-10
      5.2.2         EA Stage ............................................. 5-11
      5.2.3         ACCESS(ACC) Stage .................................... 5-11
      5.2.4         EXCEPTION(EXC) Stage ................................. 5-12
      5.2.5         Write Miss Merge(WMM) Stage .......................... 5-13
   5.3      Operand Access Exception Processing ........................... 5-17
      5.3.1         Data read-miss ....................................... 5-17
      5.3.2         Data write-miss ...................................... 5-25
      5.3.3         DTLB-miss ............................................ 5-29
      5.3.4         Secondary TB-miss - Table Walk ....................... 5-31
      5.3.5         Exceptions ........................................... 5-35
   5.4      Instruction Access ............................................ 5-40
      5.4.1         ACCESS(IF) Stage ..................................... 5-41
      5.4.2         EXCEPTION(OF) Stage .................................. 5-41
   5.5      Instruction Access Exception Processing ....................... 5-44

5.5.1          Instruction read–miss . . . . . . . . . . . . . . . . . . . . . . . . . . . . . . . . . . . 5–44

5.5.2          ITLB–miss . . . . . . . . . . . . . . . . . . . . . . . . . . . . . . . . . . . . . . . . . . . 5–52

5.5.3          Secondary TB–miss . . . . . . . . . . . . . . . . . . . . . . . . . . . . . . . . . . . . 5–52

5.5.4          Exceptions . . . . . . . . . . . . . . . . . . . . . . . . . . . . . . . . . . . . . . . . . . . 5–52

5.6     Invalidation . . . . . . . . . . . . . . . . . . . . . . . . . . . . . . . . . . . . . . . . . . . . . . . . . 5–55

5.6.1          External Data Cache Invalidates . . . . . . . . . . . . . . . . . . . . . . . . . . . 5–55

5.6.2          External Instruction Cache Invalidates . . . . . . . . . . . . . . . . . . . . . . . 5–60

5.6.3          External TB Invalidates . . . . . . . . . . . . . . . . . . . . . . . . . . . . . . . . . 5–61

5.6.4          Resource conflicts . . . . . . . . . . . . . . . . . . . . . . . . . . . . . . . . . . . . . 5–62

5.7     Processor Register Access . . . . . . . . . . . . . . . . . . . . . . . . . . . . . . . . . . . . . . 5–63

6.0          Signal Descriptions . . . . . . . . . . . . . . . . . . . . . . . . . . . . . . . . . . . . 6–1

6.1     Data Cache Interface Signals . . . . . . . . . . . . . . . . . . . . . . . . . . . . . . . . . . . . . 6–1

6.2     Instruction Cache Interface Signals . . . . . . . . . . . . . . . . . . . . . . . . . . . . . . . . 6–7

6.2     FP PC Pipeline Signals . . . . . . . . . . . . . . . . . . . . . . . . . . . . . . . . . . . . . . . . . 6–9

6.4     Bus Interface Signals . . . . . . . . . . . . . . . . . . . . . . . . . . . . . . . . . . . . . . . . . . 6–10

6.5     Miscellaneous Signals . . . . . . . . . . . . . . . . . . . . . . . . . . . . . . . . . . . . . . . . . 6–14

7.0          Signal Timing . . . . . . . . . . . . . . . . . . . . . . . . . . . . . . . . . . . . . . . . 7–1

7.1     Data Cache Interface Signals . . . . . . . . . . . . . . . . . . . . . . . . . . . . . . . . . . . . . 7–1

7.2     Instruction Cache Interface Signals . . . . . . . . . . . . . . . . . . . . . . . . . . . . . . . . 7–2

7.2     FP PC Pipeline Signals . . . . . . . . . . . . . . . . . . . . . . . . . . . . . . . . . . . . . . . . . 7–7

7.4     Bus Interface Signals . . . . . . . . . . . . . . . . . . . . . . . . . . . . . . . . . . . . . . . . . . 7–8

7.5     Miscellaneous Signals . . . . . . . . . . . . . . . . . . . . . . . . . . . . . . . . . . . . . . . . . 7–10

APPENDIX A – Write Miss Flow Diagrams . . . . . . . . . . . . . . . . . . . . . . . . . . . . . . . A–1

APPENDIX B – Invalidate Flow Diagrams . . . . . . . . . . . . . . . . . . . . . . . . . . . . . . . B–1

## List of Illustrations

Fig. 1.1    AT CPU Block Diagram .................................................. 1-2

Fig. 2.1    Secondary TB/Dcache RAM Organization ................................... 2-1
Fig. 2.2    Data Formats .......................................................... 2-2
Fig. 2.3    Dcache Entry Layout ................................................... 2-2
Fig. 2.4    Icache Entry Layout ................................................... 2-6
Fig. 2.5    Instruction Steering and Prefetch Buffer Logic ......................... 2-8
Fig. 2.6    Primary TB Organization ............................................... 2-10
Fig. 2.7    Primary TB Tag Layout ................................................. 2-11
Fig 2.8     Secondary TB Entry Layout ............................................. 2-13

Table 4.1   MMU Register Set ...................................................... 4-1
Fig. 4.1    Region Register Format ................................................ 4-2
Fig. 4.2    FP Exception PC Chain Register ........................................ 4-2
Fig. 4.3    Cache Control/Status Register(CCR) .................................... 4-3
Table 4.2   MMU TSR Trap Codes .................................................... 4-5
Table 4.3   Cache/TB Invalidation Summary Table .................................. 4-7
Fig. 4.4    MMU Breakpoint Address Register ....................................... 4-9
Table 4.4   Traps Detected During Probe .......................................... 4-10

Table 5.1   EASRC Mux Usage ....................................................... 5-4
Fig. 5.1    MMU/Dcache Block Diagram .............................................. 5-4
Fig. 5.2    MMU/Icache Block Diagram .............................................. 5-5
Table 5.2   PCSRC Mux Usage ....................................................... 5-6
Fig. 5.3    PASRC Mux ............................................................. 5-6
Table 5.3   PASRC Mux Usage ....................................................... 5-7
Table 5.4   DTAG Mux Usage ........................................................ 5-7
Table 5.5   ITAG Mux Usage ........................................................ 5-8
Table 5.6   DATA Mux Usage ........................................................ 5-8
Fig. 5.4    Data/Mux/Data Path .................................................... 5-9
Fig. 5.5    Secondary TB Check Logic .............................................. 5-9
Table 5.7   Operand Access Stalls and Exceptions ................................. 5-10
Fig. 5.6    EASRC Arbitration ..................................................... 5-11
Fig. 5.7    Normal Pipeline Operation ............................................. 5-12
Fig. 5.8    Read Miss Resource Schedule ........................................... 5-19
Fig. 5.9    Read Miss Timing Diagram .............................................. 5-20
Fig. 5.10   Read Miss - ECCC Error(first word) ................................... 5-21
Fig. 5.11   Read Miss - ECCC Error(last word) .................................... 5-22

Fig. 5.12    Read Miss – ECCU Error ........................................... 5–23

Fig. 5.13    Read Miss Sequencer ............................................. 5–24

Fig. 5.14    Write Miss Resource Schedule ..................................... 5–26

Fig. 5.14a   Write Miss Flows ................................................ 5–27

Fig. 5.14b   Write Miss Flows ................................................ 5–27

Fig. 5.15    Write Miss Timing Diagram ........................................ 5–28

Fig. 5.16    Write Miss Sequencer ............................................ 5–29

Fig. 5.17    DTLB Miss ...................................................... 5–30

Fig. 5.18    DTLB Miss Sequencer ............................................ 5–31

Fig. 5.19    Table Walker State Diagram ....................................... 5–34

Fig. 5.20a   Trap State Flow ................................................. 5–36

Fig. 20b     Trap State Flow ................................................. 5–37

Fig. 5.21    ETRAP Pipeline Flow ............................................ 5–38

Fig. 5.22    ETRAP Pipeline Flow(during miss, TBL walk, etc.) ................... 5–39

Table 5.8    Instruction Access Stalls and Exceptions ........................... 5–41

Fig. 5.23    PCSRC Arbitration .............................................. 5–42

Fig. 5.24    Fetch Miss Resource Schedule ..................................... 5–46

Fig. 5.25    Fetch Miss Timing .............................................. 5–47

Fig. 5.26    Fetch Miss – ECCC Error(first word) ............................... 5–48

Fig. 5.27    Fetch Miss – ECCC Error(last word) ............................... 5–49

Fig. 5.28    Fetch Miss – ECCU Error(last word) ............................... 5–50

Fig. 5.29    Fetch Miss Sequencer ........................................... 5–51

Fig. 5.30    ITLB Miss Sequencer ............................................ 5–52

Fig. 5.31    ITRAP Pipeline Flow ............................................ 5–53

Fig. 5.32    ITRAP Pipeline Flow ............................................ 5–54

Fig. 5.33a   Invalidate Flows ............................................... 5–56

Fig. 5.33b   Invalidate Flows ............................................... 5–56

Fig. 5.34    Dcache Invalidate Timing(IF) ..................................... 5–57

Fig. 5.35    Dcache Invalidate Timing(OF) ..................................... 5–58

Fig. 5.36    Dcache Invalidate Timing(EA) ..................................... 5–59

Fig. 5.37    Dcache Invalidate Timing(DC) ..................................... 5–60

Fig. 5.38    Icache Invalidate .............................................. 5–61

Fig. 5.39    External TB Invalidate .......................................... 5–62

Fig. 5.40    MTPR Pipeline Flows ............................................ 5–63

Fig. 5.41    MFPR Pipeline Flow ............................................. 5–64


Fig. 6.1     Byte Selection Encoding ......................................... 6–2

Table 6.1    Byte Selection Table ............................................ 6–2

Table 6.2    IP Cache Command Encoding ...................................... 6–4

Table 6.3    MMU Data Cache Command Encoding ................................... 6-4
Table 6.4    Data Cache Stall Trap Encoding ....................................... 6-5
Table 6.5    Instruction Cache Stall/Trap Encoding ................................ 6-8
Fig. 6.2     MMU Memory Command Field ......................................... 6-10
Table 6.6    MMU Memory Load Commands ...................................... 6-11
Table 6.7    MMU Memory Store Commands ...................................... 6-12
Table 6.8    Bus Interface Response Encoding ................................... 6-13

Dear IMAGEN customer:

Thank you for your purchase of an IMAGEN Printing System.  We feel
that you will be very happy with our product.  This letter provides
information you will need.

ABOUT THIS MESSAGE:

This message will be printed every time you boot your system until you
reconfigure this system disk.  The instructions for configuring the disk
are in the "Printer Configuration" section of the standard documentation
set.  If you cannot find this, you may ask for instructions when running
the configurator program.  To do this:

        1) Type "d" and then "<CR>" to ready the floppy for power off.
        2) Turn off the image processor, wait for a count of 10, and
           turn it back on.
        3) When the terminal displays the "type any character..."
           message, type some character (e.g. 1 carriage return).
        4) Type "configurator" in response to the prompt and request
           instructions.


TO GET HELP:

If you have questions or non-hardware problems, please call one of
the following numbers:

        (408) 986-9400 --- California (Headquarters)
        (617) 868-5094 --- Boston Office
        (089) 91 60 91 --- Munich (European Sales Office)

Ask for Applications Support.

For hardware problems contact your local maintenance organization.
If we can help in any way, feel free to contact us.

                                        Sincerely,
                                        Applications Support

For:            mageau.adv_tech.r_d.7D27
Document:       ch1
Last saved on:  Wed Oct  7 16:25:00 1987
Printed on:     Fri Feb 19 10:17:34 1988


```
paperheight 3264
papermargin 30
copies 1
language imPRESS
jamresistance on
jobheader on

IMAGEN Printing System, Version 2.2, Serial #84:10:19
Page images processed: 4
Pages printed: 4

Paper size (width, height):
  2560, 3264
Document length:
  48380 bytes
```

---

## Chapter                                                        1

# Introduction

## 1.0 Introduction

The AT MMU is a 30K gate, 256-pin , Integrated CMOS System(ICS) gate array. The maximum operating frequency of this device is 20 Mhz(70degC, 4.75, slow porcess).

The responsibilities for memory management in the AT system have both hardware and software components. The software's responsibilities are basically the allocation of objects to physical memory, and the sharing or protecting of objects once allocated. Within this context, there are 3 address spaces: the network wide object space, the system wide virtual address space and the system wide physical address space. All three resources must be managed. The *object space* assignments are.never reclaimed and provide unique identifiers(UID) for all permanent objects. The *system wide virtual addresses* are 48 bits in length. They have an *address space identifier*, or ASID part (16 bits) and an *address space offset* part (32 bits). The system wide virtual addresses are temporarily assigned to permanent objects to make them accessible. System wide virtual addresses, in turn, are temporarily assigned *physical addresses*. The management of this physical address space is one of the primary functions of the AT MMU. Management of the physical address space involves : virtual-to-physical translations, access checking, and the maintenance of page usage statistics.

The AT CPU implements a HARVARD-style bus architecture, whereby there are separate instruction and data buses to/from the Integer/Floating Point Processor(IP/FP). Taking full advantage of this, integral to the MMU are a data cache and an instruction cache controllers. These cache controllers support large, synchronous, virtually addressed, physically tagged( *semi-physical* ), write-thru with write allocate, caches.

One notable feature of the AT Workstation is the imbedded hardware support for multiprocessors. Much attention has been given to make many of the side-effects of the multiprocessing environment less cumbersome if not invisible to the architechture.

### 1.1        System Bus Interconnect

The AT MMU is a self contained subsystem that provides the gateway to physical memory for the Integer Processor(IP) and the Floating Point processor(FP), via the BUS Interface chip set(BIF) and the local caches. The MMU communicates with the IP, FP, BIF, and caches, over the following busses :

**Operand Address Source Bus**

EASRC[31:00] is the virtual address of the instruction's operands. With this, programs can access 4 Gigabytes of virtual memory. This bus is shared between the IP, MMU, and the BIF. All requests for this bus are made to and arbitrated/prioritzed by the MMU. The MMU is the default owner of this bus, however, the MMU will drive this bus with intent during data cache and Translation Buffer(TB or TLB) miss processing and for resource collision resolution and memory pipeline restoration. The BIF's usage consists of external data cache and TB invalidates and data cache load miss processing. The IP drives this bus whenever it is executing memory referencing instructions(LOAD/STORE or MTPR/MFPR instructions). The BIF is the highest priority requestor.

The ultimate destination of this bus is the data cache address register, EAREG. In the current implementation of the AT CPU, a 2:1 multiplexor(74F258) exists which selects between the EASRC bus, which connects the MMU and the IP, and the PASRC bus, which is the BIF's connection to the EAREG (See Figure 1.1). Since the EASRC bus is a tristate bus, future systems may wish to replace the 74F258's with octal tristate buffers(74F245), whose inputs are tied to the PASRC bus and outputs are connected to the EASRC bus, to reduce MSI part count. It is believed, however, that the 74F258 implementation will provide superior electrical interconnect and timing performance.

**Data Cache Data Bus**

All memory referencing instructions supply/receive their operands from DATA[63:00] bus. The data bus connects the IP/FP to the data cache and the BIF data path components(CBD). The MMU connects to DATA[31:00] via the DTAG tranceivers(4 x 74F245) on the DTAG bus. The usage of each of the bits of this bus vary.

| DATA[63:32] | DATA[31:00] |
|---|---|
| IP/FP LOAD/STORE instructions | IP/FP LOAD/STORE instructions |
| IP/FP Read miss data return | IP/FP Read miss data return |
| MMU(XMAPe's) read data return(duplicated) | MMU(XMAPe's) read data return |
| MMU Pipeline restoration sequencing | MMU Pipeline restoration sequencing |
| | IP/FP/MMU MXPR instructions |
| | Secondary TB Read/Write operations |
| | MMU PMAPe store data |

Data cache is parity(odd) is managed by the BIF. All parity checking/modification is carried out in the clock cycle following the cache access.

**Data Cache Tag Bus**

The Data Cache Tag bus(DTAG) is an MMU private bus which connects the MMU to the data cache tag and secondary TB(TB2) tag RAMs. All cache/TB2 tag reads(miss detection) and writes(miss processing) and external TB/cache invalidations, are carried out over this bus.The structure of each tag is descibed later.

Odd parity is maintained , by the MMU, across 27 bits of the DTAG bus(DTAG[30:12],DTAG[7:0]). Excluding system power-up time, parity is guaranteed to be valid, regardless of tag validity. Fault coverage over DTAG[11:8] is handled differently and is described later.

The DTAG bus also serves as the MMUs' DATA[31:00] bus due to MMU pin count limitations. When being used the DATA bus, operands for MTPR/MFPR instructions which are addressed for the MMU are sent/

received to/from the IP over this bus. The MMU receives data from the BIF during table walking to read or write the OS mapping tables(xMAPes'). The sharing of this bus is only possible because the MMU NEVER need to access tag information in the same cycle it must retreive/send information from/to the DATA bus.

### Virtual PC Address

PCSRC[31:02] is the virtual address of the instruction's operands. With this, programs can access 4 Gigabytes of virtual memory. This bus is shared between the IP, MMU, and the BIF. All requests for this bus are made to and arbitrated/prioritzed by the MMU. Because of its high usage, the IP is the default owner of this bus. The MMU will drive this bus during cache allocation and for resource collision resolution and memory pipeline restoration. The BIF's usage consists of external instruction cache invalidates and instruction cache fetch miss processing. The BIF is the highest priority requestor.

### Instruction Cache Bus

All instructions fetched from the instruction cache are presented on the INST[63:00]. The instruction bus connects the IP/FP to the instruction cache and the BIF data path components(CBD). The MMU does not connect to this bus either directly or indirectly.

Instruction cache is parity(odd) is managed by the BIF. All parity checking/modification is carried out in the clock cycle following the cache access.

### Instruction Cache Tag Bus

The Instruction Cache Tag bus(ITAG) is an MMU private bus which connects the MMU to the instruction cache tag RAMs. All cache tag reads(miss detection) and writes(miss processing) and external instruction cache invalidates, are carried out over this bus.The structure of each tag is descibed later.

Odd parity is maintained , by the MMU, across 19 bits of the ITAG bus. Excluding system power-up time, parity is guaranteed to be valid, regardless of tag validity.

### Physical Address Bus

The MMU generates the physical address for the IP by translating the IP's virtual addresses(32 bits) into physical address(30 bits) via the TBs. Physical addresses are presented to the BIF for: all STORES; LOADs that take a cache miss; broadcasting TB invalidates; and any MMU TB miss/table walk related memory references. This physical address is passed to the BIF over the PASRC[29:00] bus. With this, programs can access 1 Gigabytes of physical memory.

The PASRC bus is also used when an external request for a data cache, instruction cache, or TB, in- validate is made or during cache miss fill(inst or data) sequencing. In this case, the BIF drives the PASRC bus with the invalidate address which is then routed to the EAREG or the PCREG bus via the appropriate multiplexors(74F258), depending on which type of invalidation/cache miss is being serviced. An em- belishment of this invalidate mechanism is used to implement RAM-SELFTEST on both the instruction and data caches and the duplicate instruction and data tag stores(DITS/DOTS).

All requests for this bus are made to and arbitrated/prioritzed by the MMU. The MMU is the default owner, while the BIF is the highest priority requestor.

**Figure 1.0** – AT CPU BLOCK DIAGRAM : *Information flows between the components of the AT CPU over six major buses: EASRC, PCSRC, INSTRUCTION, DATA, PASRC, DTAG, and ITAG.*

For:               mageau.adv_tech.r_d.7D27
Document:     ch2
Last saved on:  Mon Oct  5 14:54:15 1987
Printed on:    Fri Feb 19 10:16:27 1988

```
paperheight 3264
papermargin 30
copies 1
language imPRESS
jamresistance on
jobheader on

IMAGEN Printing System, Version 2.2, Serial #84:10:19
Page images processed: 2
Pages printed: 2

Paper size (width, height):
  2560, 3264
Document length:
  21502 bytes
```

---
## Chapter 2
---

# Bus Interface

## 2.0 Bus Interface

The core components to the AT workstation communicate via a shared, common bus, called the X–BUS. The X–BUS employs a synchrounous–pending bus architecture. The X–BUS operates at the same frequency as the AT–CPU, 20 Mhz. Unlike all other buses in existing Apollo workstations, the requesting device, once it wins control of the X–bus, holds onto the bus as long as it takes to post its transaction. Once the request posted, the device relinquishes to bus to the other potential requestors. In the case of memory reads, the requesting device would then wait until the device for which the transaction was intended, be it main memory, graphics memory, etc., returned with the requested data.

Due to severe IC pinning restrictions, it is not possible to have the MMU sit directly on the XBUS; although, logically, it should. The link between the MMU and the memory/graphics/I/O subsystem is established by the Bus InterFace(BIF) chip set.

The MMU/BIF interface consists of the physical address bus(PASRC[29:00]), a transfer request command field(MMU_CMD[4:0]), and BIF response field(MEM_RESP[2:0]) and invalidate operation field(BIF_INVOP[2:0]). These signals are descibed in detail in Section X.X – Bus Interface Signals. Simplistically speaking, for read requests, the MMU issues a physical address and a request to the BIF, which in turn, sometime later, returns the requested data and the notification that the data is available. For write requests, the data is sent to the BIF first, while the write address and command are posted in the following cycle. In summary, the MMU and BIF interract in the following ways :

- Memory/Graphics/I/O read/write transactions
- TB invalidate requests(XBUS Broadcast messages)
- XBUS lock acquisition
- External cache invalidate processing

In addition to providing the mechanism for communication between the MMU and the rest of the system, the BIF is intimately involved in the service of cache invalidation(data, instruction and translation caches) and instruction and data cache misses.

For:             mageau.adv_tech.r_d.7D27
Document:     ch3
Last saved on:  Wed Oct  7 17:02:37 1987
Printed on:     Fri Feb 19 10:15:05 1988

```
paperheight 3264
papermargin 30
copies 1
language imPRESS
jamresistance on
jobheader on

IMAGEN Printing System, Version 2.2, Serial #84:10:19
Page images processed: 9
Pages printed: 9

Paper size (width, height):
  2560, 3264
Document length:
  75764 bytes
```

<div style="border: 1px solid black; padding: 10px;">

# Chapter     3

</div>

# Memory Management

## 3.0 Memory Management

This chapter is essentially Ch6 of the *AT Architecture Specification.* Some modification was made to reflect this level of implementation of the AT memory management architecure.

### 3.1     Virtual to Physical Translation, An Overview

The virtual addresses generated by an AT processor are translated to physical ones before use. These virtual to physical bindings are dynamic and subject to change at any time during the life of a process. The virtual to physical bindings are described by a series of memory resident mapping tables(xMAPs). The hardware *walks* these tables when a new translation is required. The hardware also *caches* frequently used translations in a *translation buffer.* Finally, the hardware enforces protection and gathers usage and change information on the physical memory. An exception trap is taken if an unauthorized use of memory is attempted. A variant of this exception, access to an invalid page, triggers a pagefault.

Software makes all physical memory resource allocation decisions. The software communicates these decisions to hardware, as well as observes memory use statistics, through the mapping tables. If a software decision involves the change or deletion of information already in the tables, software must *invalidate* cached TB translations in addition to updating the tables. Only the final two levels of the mapping tables are actually understood by the hardware; and even then, not all of the bits in those table entries have hardware significance.

This chapter will describe the memory resident mapping tables. This chapter will also describe the algorithms pursued by hardware while interpreting these tables. Insofar as these algorithms place requirements on software, that too will be noted. The policy making aspects of software will not be discussed.

### 3.2     Data Structures

A system wide virtual address is a 48 bit quantity composed of a 16 bit ASID and a 32 bit address space offset.

An address space offset is a 32 bit unsigned integer. It has 4 fields: *region register select, segment map index, page number* and *page offset.*

## 3.1        Shared Responsibilities

### 3.1.1        External Cache Invalidates

The task of maintaining cache consistency amongst all AT CPUs is a cooperative effort between each boards' MMU and BIF.  Cache consistency becomes an issue when another device, another CPU or I/O device, modifies memory and the local processor is using or intends to use this data.  Many mechanisms exist to assure the local processor always, eventually, uses the most recent image of this data.  The mechanism chosen for the AT.CPU was to employ a copy of the local processor's tag store(instruction and data) called the Duplicate Tag Store(DTS).  The DTS serves as a "leaky-filter" to potential invalidate traffic, thereby using less cache bandwidth, hence, increasing system performance.  With this, the BIF looks up each write transaction that comes across the XBUS in the DTS and various internal queues, by comparing the physical tag, to determine if this data being modified is being shared.  If so, the BIF posts an invalidate request(s) to the MMU by arbitraing for the necessary address buses, PASRC and optionally EASRC/PCSRC, placing the invalidate (virtual)address on the appropriate bits of the PASRC bus(PCSRC on upper half, EASRC on the lower half), and invalidate type request posted on BIF_INVOP[2:0].  All BIF request to the MMU are handled immediately, in this way, invalidate overruns are avioded.

Translation buffer consistency is also an issue in the multiprocessor environment.  This responsibility is shared between the OS software and the AT CPU hardware.   The AT CPU/XBUS supports three TB invalidate requests: invalidate local PTB, invalidate TB by virtual address, invalidate both local primary TB and TB2 entirely.  The latter two invalidate requests, when posted by the local processor, are broadcast to all other processors over the X-BUS which then react accordingly.  Broadcast messages from other processors are handled similarly to cache invalidates.

### 3.1.2        Cache Allocation

To decrease cache miss(fetch and load miss) latency, it is desirable to have only one pipeline stage between the XBUS and the caches' data busses. Given concerns with multi-chip crossing timing, gate counts and pin counts, there are resticted number of options for cache allocate address generation. Since the BIF has the earliest knowledge of read data return and any potential XBUS errors relating to that transaction, the only managable solution is to involve the BIF in the cache miss allocation process.

The BIFs' responsibilities are to supply both the cache fill (virtual)address and the missing data/instructions.  The cache control is a function of various MMU and BIF inteface control signals which are processed externally in programmable logic(PALs).   The MMU is repsonsible for supplying the appropriate cache tag.

When uncacheable read requests are posted to the BIF, only the  requested data is returned to the IP/FP and no cache writes occur.

ADDRESS SPACE OFFSET

| 31 | 19 | 18 | 12 | 11 | 00 |
|---|---|---|---|---|---|
| SEGMENT NUMBER | | PAGE NUMBER | | PAGE OFFSET | |

| 31 | 29 | 28 | 19 |
|---|---|---|---|
| RR | | SINDEX | |

RR      = REGION REGISTER SELECT
SINDEX = SEGMENT MAP INDEX

**Figure 3.0** – VIRTUAL ADDRES LAYOUT: *Aegis utilizes a segmented–page address space.*

The unit of translation is the *page*. A page is 4K bytes in size. The lower 12 bits of the virtual address, comprising the page offset, don't participate in the translation process.

The primary unit of protection is the *segment*. The segment is also the basic unit of an object which will be mapped and is the unit of sharing. A segment may be up to 512K bytes in size. A segment may therefore hold from 1 to 128 pages, each identified by an 7 bit *page number*.

There may be as many as 8192 segments concurrently addressable by a processor. The 13 bit *segment number* field has 2 further components: the *region register select* and the *segment map index*. The 13 bit field is broken up this way so that segment maps will always be smaller than a page.

### 3.2.1     Address Space Identifier (ASID)

Associated with every active process is an address space identifier or *ASID*. Two or more processes may share an ASID. Before a process is dispatched, its ASID context must be established.

A process's ASID context is established by loading the eight segment map base registers in the AT processor.

### 3.2.2     Map Table Entries

The region register field selects one of the eight processor resident registers. The register format follows.

*REGION REGISTER*

| 31 | 30 | 29 | 12 | 11 | 01 | 00 |
|---|---|---|---|---|---|---|
| | | SEGMENT MAP PHYSICAL POINTER | | | | V |

V = VALID, IF SET

*ITALICIZED* BITS HAVE NO HARDWARE SIGNIFICANCE

**Figure 3.1** – REGION REGISTER LAYOUT: *This register contains a valid bit and the physical address of the SMAP.*

The segment map index field selects one of 1024 memory resident segment map entries. The entry formats follow. There are two formats, one direct and one indirect.

```
┌─────────────────────────────────────────────────────────────────────────┐
│ SEGMENT MAP ENTRY(SMAPE) DIRECT                                      I=0   │
│ 31 30 29                                 09 08      05 04 03 02 01 00      │
│ ▓▓▓│ PAGE MAP PHYSICAL POINTER          ▓▓▓▓▓▓│ S │ W│ X │ I │ V          │
│                                                                           │
│ SEGMENT MAP ENTRY(SMAPE) INDIRECT                                   I=1   │
│ 31 30 29                                              02 01 00            │
│ ▓▓▓│ SEGMENT MAP ENTRY PHYSICAL POINTER                      I │ V        │
│                                                                           │
│ V = VALID, IF SET                       ITALICIZED  BITS HAVE NO HARDWARE │
│ I = INDIRECT, IF SET                     SIGNIFICANCE                      │
│ X = EXECUTE/PC RELATIVE READ PERMISSION, IF SET                           │
│ W = WRITE PERMISSION, IF SET                                              │
│ S = SUPERVISOR USE ONLY, IF SET                                          │
└─────────────────────────────────────────────────────────────────────────┘
```

**Figure 3.2 –** SEGMENT MAP ENTRY  LAYOUT: *This table entry a valid bit, various protection bits and the physical address of a PMAP*

```
┌───────────────────────────────────────────────────────────────────────────────┐
│ PAGE MAP ENTRY (PMAPE) DIRECT, MEMORY RESIDENT             V=1   I=0, R=1       │
│ 31 30 29                        12 11 10 09 08 07 06 05 04 03 02 01 00          │
│ ▓▓▓│ PHYSICAL FRAME ADDRESS       n │ wct │ M│ U│ U│ t │ r │ W│ C│ I │ V       │
│                                                                                 │
│ PAGE MAP ENTRY (PMAPE) DIRECT, DISK RESIDENT              V=0    I=0, R=0        │
│ 31                                           06 05 04 03 02 01 00               │
│ DISK RECORD ADDRESS                           t │ r │ W│ C│ I │ V               │
│                                                                                 │
│ PAGE MAP ENTRY (PMAPE) INDIRECT                           V=0         I=1        │
│ 31 30 29                                              02 01 00                   │
│ ▓▓▓│ PAGE MAP ENTRY PHYSICAL POINTER                        I │ V                │
│                                                                                 │
│ V = VALID PHYSICAL ADDRESS        U = PAGE HAS BEEN USED, IF SET                 │
│ I = INDIRECT, IF SET              M = PAGE HAS BEEN MODIFIED, IF SET             │
│ C = CACHE INHIBIT, IF SET                                                        │
│ W = WRITE PROTECT, IF SET                                                        │
│                                                                                 │
│ r = RESIDENT IN MEMORY, IF SET    ITALICIZED  BITS HAVE NO HARDWARE             │
│ t = IN TRANSITION, IF SET          SIGNIFICANCE                                  │
│ wct= WIRE COUNT                                                                  │
│ n = NULL PAGE, IF SET                                                            │
│                                                                                 │
│                                   NOTE:  SMAPE HAS "WRITE PERMIT"               │
│                                          PMAPE HAS "WRITE PROTECT"              │
└───────────────────────────────────────────────────────────────────────────────┘
```

**Figure 3.3 –** PAGE MAP ENTRY  LAYOUT: *This table entry a valid bit, various protection bits and the physical address translation.*

The page number field selects one of 128 memory resident page map entries. The entry formats follow. There are three formats, two direct and one indirect. The direct formats of memory and disk resident pages differ.

## 3.3 Virtual Address Translation

The 48 bit AT processor virtual address is translated to a 30 bit physical address. While doing so, the rights of that process to access the page are qualified. Logically, this is done by indexing through the mapping tables just described.

| ASID | ADDRESS SPACE OFFSET | | | |
|---|---|---|---|---|
| 16 | 3 | 10 | 7 | 12 |

REGION REGISTER's

ASID MAP

SEGMENT MAP
(PAGE ALIGNED)

PAGE MAP
(MOD 1024 ALIGNED)

*VALID*

*VALID*
*INDIRECT*
*PRIMARY PROTECTION*

*VALID*
*INDIRECT*
*WRITE PROTECT*
*USE STATISTICS*
*PAGE STATUS*
*ENCACHE*

SOFTWARE          HARDWARE

PHYSICAL ADDRESS
(30 BITS)

**Figure 3.4 – OS MAPPING TABLE STRUCTURE :** *The MMU supports a three–level table structure for the OS mapping tables. The first level, the region register, exists in hardware.*

The processor's 32 bit virtual address is interpreted as an offset into a system wide virtual address space. Proper resolution of the address requires first indexing through the ASID mapping table. Rather than doing the ASID map indexing at the time of translation, the software kernel does so at the time of process dispatch. The ASID map holds pointers to that ASID's segment maps. Once the

eight pointers have been loaded into the AT–CPU's eight region registers, the process's ASID context is established.

The hardware's virtual address translation process begins with selecting the region register using the 3 MSB's of the address space offset. If the region register is valid, bits 29 though 12 of the register are concatenated with segment map index of the virtual address. The result is a 30 bit physical address used to retrieve the SMAP entry. If the SMAP base register is not valid, a *region fault* is posted.

If a SMAPE is retrieved, one of four actions takes place. If the entry is invalid, a *segment fault* is posted. If the entry is valid but indirect, the SMAPE bits 29 through 2 are used as the address of another SMAPE and this level of translation begins anew. If the entry is valid and direct but does not have the proper access priveledges(Supervisor/Write/Execute : see below) , a *protection fault* is posted. If the entry is valid and direct and has the proper access priveledges, bits 29 through 10 of the SMAPE are concatenated with the page number of the virtual address. The result is again a 30 bit physical address used now to retrieve the PMAP entry. In addition to accessing the PMAPE, the access rights found in the SMAPE are saved.

If a PMAPE is retrieved, one of three actions takes place. If the entry is invalid, a *page fault* is posted. If the entry is valid and indirect, the PMAPE bits 29 through 2 are used as the address of another PMAPE and this level of translation begins anew. If the entry is valid and direct but does not have the proper access priveledges(Write : see below) , a *protection fault* is posted. If bit 0 is a one and the entry is direct, bits 29 through 12 of the PMAPE are concatenated with page offset of the virual address. The result is the desired 30 bit physical address.

### 3.3.1    Protection Checking

After procuring the PMAPE, the process's right to access this location is checked. A *protection fault* is posted if permission is denied.

A protection fault is posted if one or more of the following situations is observed.

PROTECTION CHECKING SUMMARY

| S | W | X | |
|---|---|---|---|
| 0 | 0 | 0 | – SUPERVISOR/USER READ ACCESS |
| 0 | 0 | 1 | – SUPERVISOR/USER READ/EXECUTE ACCESS |
| 0 | 1 | 0 | – SUPERVISOR/USER READ/WRITE ACCESS |
| .0 | 1 | 1 | – SUPERVISOR/USER READ/WRITE/EXECUTE ACCESS |
| 1 | 0 | 0 | – SUPERVISOR READ ACCESS |
| 1 | 0 | 1 | – SUPERVISOR READ/EXECUTE ACCESS |
| 1 | 1 | 0 | – SUPERVISOR READ/WRITE ACCESS |
| 1 | 1 | 1 | – SUPERVISOR READ/WRITE/EXECUTE ACCESS |

N.B.,   S = SMAPE.s
W = SMAPE.w .and. (.not. PMAPE.w)
X = SMAPE.x

   – The attempted access is a store and either the write privilege bit in the SMAPE is clear or the write protect bit in the PMAPE is set.
   – The attempted access is an instruction fetch and the execute privilege bit in the SMAPE is not set.

      – The S bit in the SMAPE is set. and the processor is currently not operating in
the supervisor mode.

### 3.3.2     Used and Modified Bits

After procuring an PMAPE, the two *used* and one *modified* bit may also be updated. If one or more of
the the used bits is a zero, they are both set to one. If the access type is a store, and the modified bit
is a zero, the modified bit is set to a one. Otherwise the PMAPE is not written to.

The PMAPE will not be updated if there is a protection violation occurs.

If the PMAPE is updated, the update occurs under a bus lock. If the CPU already holds the bus lock,
the lock will not be released when the PMAPE update completes. This introduces the minor restriction
that running software cannot be modifying the PMAP entries for itself.

### 3.3.3     Global Regions

Virtual address ranges may be made *global* on a per region basis. A global region is present in every
address space at the same address space offset. A region is global by virtue of having the same
segment map base pointer.

### 3.3.4     Data and Instruction Cache Inhibiting

The *cache inhibit* bit of the PMAPE inhibits the loading of the accessed data into the data cache. This
bit is to be set if the possibility exists that the underlying memory may be altered without bus writes
occuring. This bit also is to be set if virtual address synonyms exist, and the synonyms do not agree
in page number within a segment.

When cache inhibit is set, load data will not be entered into the data cache. When cache inhibit is set,
a store of any size quantity will invalidate the quadword to which it indexes in the data cache. A cache
inhibited load or store operates directly from main memory or from memory mapped I/O locations.
The cache inhibit bit does not affect the operation of the instruction cache.

Physical reads generated by hardware while translating a virtual address will never load the data
cache. Physical reads generated by the load.physi instruction will never load the data cache. Physical
stores to a PMAPE generated by hardware while translating a virtual address fully bypass the data
cache.

When cache inhibit is set, system bus requests from an AT CPU will be for the exact amount specified
in the load or store instruction. There will be no prefetch on read. There will be no sequential write
bundling. When cache inhibit is set, prior buffered writes will not be bypassed in the memory system,
even if the read and write addresses do not agree (see X–BUS definition).

The virtual segment(s) holding the PMAP's must be made unencacheable (see section 3.5.2).

Before the virtual memory system is enabled, the cache inhibit bit is assumed to be clear. Programs
operating physically must either do so with caching fully disabled (see chapter 4), or be otherwise
mindful of the stale data possibilities.

## 3.4        Translation Caching

The table walk procedure is not followed on every memory reference. Instead, frequently used translations are cached in a *translation buffer* or TB. Whenever a memory access is made, the hardware first examines the TB to see if a translation is already available. Only if no translation is found in the TB will the table walk occur.

The TB has two components: a data store and a tag store. The data store holds the physical frame address, protection information and a valid indication. There are two implementations for the tag store. The tag store may be unique only within an address space (ASID), as is the case for the Primary(on-chip) translation buffer(PTB), or may be unique throughout the system, as is the case for the Secondary translation buffer (TB2).

*Per ASID tags*

In the PTB, the tags are unique only within an ASID, the TB tag store logically holds bits 31 through 12 of the associated address space offset. When a new memory reference is made, a tag must fully agree with bits 31 through 12 of the new address space offset before using the associated data. In reality, the PTB is not fully associative and fewer than 20 bits of tag need be maintained because some number of bits index into the TB data and tag stores. It would be redundant for those bits to also participate in the tag compare.

*Per system tags*

In the TB2, the tags are unique throughout the system, the TB tag store also holds the physical base address of the segment map(RMAPe contents) used while translating the address. When a new memory reference is made, a tag must fully agree with both the new address space offset and the new SMAP base register value before using the associated data. Because the physical base addresses of the segment maps are themselves unique throughout the system, the TB's tags are unique throughout the system virtual address space.

### 3.4.1        Translation Cache Invalidation

The hardware chooses which translations to cache. As a result, any modification to the hardware significant bits of the SMAP's or PMAP's may create a stale TB entry. After such a modification takes place, that TB entry must be invalidated. Instructions exist to invalidate both selectively by address space offset or comprehensively without regard to virtual address.

If the TB maintains only per ASID tags, a comprehensive TB invalidate is required when the SMAP base registers are loaded.

If the TB maintains per system tags, there is no need to invalidate the TB when a new ASID context is established.

### 3.4.2        Translation Cache Invalidate Broadcasting

A TB invalidate posted on any one AT processor may be relayed by the system bus to all. Note that because another AT processor may be concurrently walking the same tables that are being modified there are considerable interlock issues.

TB invalidate broadcasting does not secure a bus lock, nor is main memory modified.

## 3.5 Virtual Data and Instruction Cache Effects

In an AT processor, both the data and instruction caches will be virtually indexed. In all processor implementations the cache indices will be equal to or less than 19 bits, chosen to match the segment size. The tags will also be fully physical. This caching strategy places some restrictions on the software. This section will summarize those restrictions.

### 3.5.1 Multiple Mappings: Virtual Address Synonyms

Two or more virtual addresses which point to the same physical data are said to be synonymed. All synonymed virtual addresses must agree in both page number within a segment and the page offset.

In practice, this means the virtual mapping of shared objects must begin on a segment boundary. Further, the virtual mapping window over a shared object must move only in increments of segments.

### 3.5.2 PMAP Caching

Because the virtual and physical addresses of the PMAP's need not agree in the data cache index, software access of the PMAP tables must bypass the data cache. In other words, the xMAPs must reside in unencacheable pages.

### 3.5.3 Cache Invalidation

Cached data or instructions may become invalid over time. This may be caused by stores from the caching processor, stores from other processors, changes to the mapping tables, paging or other program visible I/O. In all these situations, hardware and software must cooperate to assure that the instruction and data caches are kept consistent.

*Local Stores*

The caching processor will provide the destination virtual address at the time of the store. The cache will be updated or invalidated as appropriate by hardware.

*External Stores*

The external processor will provide the destination virtual page number within segment on the system bus at the time of main memory update. The cache will be invalidated as appropriate by hardware.

*I/O Update to Known VA*

The I/O transfer to memory will be accompanied on the system bus by destination virtual page number within segment. The cache will be invalidated as appropriate by hardware.

*I/O Update to Unknown VA*

The I/O transfer to memory will be accompanied on the system bus by the *former* virtual page number within segment of that physical frame. The cache will be invalidated as appropriate by hardware. This clears out old bindings in cache.

The destination virtual address is assigned later. Most network paging and local paging activity falls into this category.

*ReMapping*

A physical frame may be reassigned to another virtual address without an I/O transfer. A frequent cause for this is stack growth. A second cause is a pagefault which can be satisfied by data already in main memory. Another cause is file growth.

If the new virtual address agrees with the former in page number within segment, no further action is required. This will happen naturally if the contents of the page are also reused. It may also happen by chance.

If new virtual address disagrees with the former in page number within segment, there will be stale data in the cache. That data must never be used. The affected frame must be purged from cache. This can most effectively be done writing all zeroes to the page using the *former* virtual address assignment with PMAPE marked as unencacheable. Unencacheable stores follow an invalidate rather than update store policy.

### 3.5.5    · Initialization

Whenever the virtual memory system is enabled or disabled, the contents of the data or instruction caches is no longer valid. Complete cache flushes are required.

### 3.6      Virtual Address Breakpoint Facility

A breakpoint may be set on a program fetch, operand read or operand write. There can be only one breakpoint armed at once. The breakpoint may be armed by loading a complete virtual address into the Breakpoint Address Register and setting the appropriate enable bit in MMU/Cache Control Register. Chapter X provides a detailed definition of these registers.

The breakpoint address and control is part of the process exchange save set.

For: mageau.adv_tech.r_d.7D27
Document: ch4
Last saved on: Thu Oct  8 13:39:34 1987
Printed on: Fri Feb 19 10:13:33 1988

```
paperheight 3264
papermargin 30
copies 1
language imPRESS
jamresistance on
jobheader on

IMAGEN Printing System, Version 2.2, Serial #84:10:19
Page images processed: 12
Pages printed: 12

Paper size (width, height):
  2560, 3264
Document length:
  84850 bytes
```

---

### Chapter                                                          4

---

# Caches

## 4.0 Caches

For maximum performance, frequently used instructions, operands, and address translations are saved in separate, independant, caches: data cache(Dcache), instruction cache(Icache), and translation buffers(TB = PTB + TB2). This chapter will discuss the structure and character of each cache.

### 4.1     Data Cache

A data cache is employed in the AT CPU design to minimize bus traffic and to give the AT CPU a high bandwidth channel to operands; the CPU can request operands(max 8 bytes) every cycle( 50 ns ). The data cache is a virtually indexed, physically tagged, direct-mapped, cache. The data cache is driven by an external 14-bit address register(EAREG) which captures the virtual address from the EASRC mux and the TBSELECT logic. This register is duplicated for RAM loading reasons.

Since the Dcache is addressed by a virtual address, and object to virtual adress mappings are often ambiguous, special considerations must be made to maintain cache consistency and validity. For imformation on this issue, refer to chapter 3 of this document.

Current memory technologies make it possible to design large, high-speed, data caches with relatively few chips. The data cache is implemented using 25 ns, 16K x 4 bit and 16Kx1 ( parity ) SRAMS. Although the AT CPU is a 32-bit CPU, the data cache width is 64 bits. The data cache capacity will be 64Kbytes, another utilizing half of the available space(128Kb). The second half contains the secondary TB.

### 4.1.1     Data Structures

There are 72 bits in the data store portion of each data cache entry; 64 bits of data and 8 bits of odd parity. The byte naming convention is shown below.

The data cache tag store occupies 27 bits of the DTAG bus : DTAG(31), DTAG(29:12), DTAG(7:0). The data cache tag is made up of the physical page number(PPN(29:12)) tag, 8 byte valid bits, and 1 parity bit(odd parity). Since the same parity logic is used for the Dcache tag and TB2 tag, parity is generated/ checked across 28 bits of the DTAG bus : DTAG(31:12), DTAG(7:0). DTAG(11:08) are not involved in Dcache tag operations. There is one tag store entry per each data store entry(see figure 1.0).

Data store parity is maintained by the BIF, while the tag store parity is handled by the MMU. Parity bits will be valid whether or not the entry is valid or not (except at power-up).

| 07 06 05 04 03 02 01 00 |
|---|
| Address 0H – Byte 0 |

<div align="right">Byte</div>

| 15 14 13 12 11 10 09 08 | 07 06 05 04 03 02 01 00 |
|---|---|
| Address 0H – Byte 0 | Address 1H – Byte 1 |

<div align="right">Word</div>

| 31 30 29 28 27 26 25 24 | 23 22 21 20 19 18 17 16 | 15 14 13 12 11 10 09 08 | 07 06 05 04 03 02 01 00 |
|---|---|---|---|
| Address 0H – Byte 0 | Address 1H – Byte 1 | Address 2H – Byte 3 | Address 3H – Byte 4 |

<div align="right">Longword</div>

| 63 62 61 60 59 58 57 56 | 55 54 53 52 51 50 49 48 | 47 46 45 44 43 42 41 40 | 39 38 37 36 35 34 33 32 |
|---|---|---|---|
| Address 0H – Byte 0 | Address 1H – Byte 1 | Address 2H – Byte 3 | Address 3H – Byte 4 |

<div align="right">Quadword</div>

| 31 30 29 28 27 26 25 24 | 23 22 21 20 19 18 17 16 | 15 14 13 12 11 10 09 08 | 07 06 05 04 03 02 01 00 |
|---|---|---|---|
| Address 4H – Byte 4 | Address 5H – Byte 5 | Address 6H – Byte 6 | Address 7H – Byte 7 |

Figure 4.1 – AT BYTE/BIT ORDERING : *The AT achitecture support a "big–endian" byte addressing scheme, which means the byte numbering, starting from zero, starts at the "big end " (left side), while bit numbering is "little–endian", which means the bit numbering, starting from zero, starts at the "little end " (right side).*

| 71 | 64 | 63 | 32 | 31 | 0 |
|---|---|---|---|---|---|
| Parity | | Data Longword 0 | | Data Longword 1 | |

<div align="right">Data</div>

| 31 | 30 | 29 | | 12 | 11 | 8 | 7 | 0 |
|---|---|---|---|---|---|---|---|---|
| P | | | PPN[29:12] | | | | Valid | |

<div align="right">Tag</div>

Figure 4.2 – DCACHE ENTRY LAYOUT : *The AT CPU employs a 64–bit data cache with odd byte parity. There is a tag associated with each quad word. A Dcache line is defined to be 64 bits. Odd parity is also used with Dcache tag.*

## 4.2      Data Cache Operations

The RAMs being used in this cache design can be accessed every 25ns.  The AT processor cycle time is 50ns. With these fast RAMs, it is possible to access the data store portion of the cache every processor cycle.  However, because of clock skew, on/off CMOS chip delays, PC board propagation delays, and tag comparator logic delays, it is not possible to perform a complete tag compare in one processor cycle time. ·

Rather than increasing the cache access times to two processor cycles, cache operations will be split into two overlapping phases with the addition of a second pipeline stage in the MMU. In the first phase of a cache access, the data store read or write will be carried out in parallel with tag store lookup. The result

of the tag comparison will be available in this phase, however, the results can not be relayed to the IP/FP until the next phase. The creation of a cache pipeline allows another cache access to occur in paralell with the tag comparison/access checking from the previous access.

### 4.2.1 Data Cache Reads

### 4.2.1.1 Data Cache Read Hit

From the IP/FP perspective, data cache read hits occur one processor cycle. Up to eight bytes can be read from the cache in one cycle. All read rotations are performed by the IP and FP components. A read hit occurs when the tag(PPN) matches the translated virtual address from the PTB or if all of the bytes being requested are marked valid.

### 4.2.1.2 Data Cache Read Miss

A read miss occurs when the tag does not match the translated virtual address or if the byte(s) being requested are marked invalid. If a miss is detected, the IP is stalled while a cache block is allocated. The cache miss latency is non-deterministic; it is a function the system configuration, program flow, current X-BUS and main memory activity. The data cache block size is determined dynamically based on the heuristic: *if a miss occurs on an double precision, floating point LOAD, or a quadword, integer LOAD, was aligned on a 64-byte boundry, eight lines would be fetched from main memory. In all other cases two lines are fetched.* The motivation for a dynamic prefetch count was to increase performance for floating-point intensive applications which tend to operate in concurrent mode and manipulate large arrays of data. Vector libraries and 3-D graphics tranformations are typical examples. Once the requested data is available on the AT-CPU DATA bus, the IP/FP are notified and allowed to proceed, in paralell, with the remaining cache allocation. The BIF supplies the addresses, data, while cache control is derived by a PAL from both MMU and BIF state during cache miss allocation.

If a non-cache miss related exception is detected, a trap is signalled to the IP and the cache allocation request to the BIF is supressed.

### 4.2.1.2.1 Refill Algorithm

The refill ordering scheme is a simple natural-ordered, block-fill. For example, if a miss occured on an double precision, floating point LOAD, or a quadword, integer LOAD, was aligned on a 64-byte boundry, eight lines would be fetched from main memory starting at address : MISS_ADDR ANDed with FFFFFFC0. The cache fill would start with cache address : (MISS_ADDR MOD 65384) ANDed with FFFFC0 and would be incremented by 8 for each line allocated in the cache. With this scheme, a cache allocation request never crosses a page boundary which simplifies cache miss related exceptions.

### 4.2.1.2.2 Unencacheable Memory

Dcache read misses are forced whenever an access to a unencacheable page is made, the cache Inhibit(C) bit in the appropriate PMAPe is set, or for special LOAD instructions : LOAD.UNLOCK, LOAD.LOCK. In either case, data in not cached.

As with cacheable read misses, IP/FP is stalled awaiting valid data. The MMU issues a request to memory, via the BIF, for specific data(address and size) specified by the IP. Upon data return, the IP/FP is sent the requested data and no cache allocation takes place(the data cache is bypassed).

## 4.2.2      Data Cache Writes

The AT CPU data cache is adopting a *write–thru with write–allocate write mechanism*. All allowable writes(no excceptions detected) to the data cache will be written–thru to main memory immeadiately. A write–thru stategy was chosen to simplify the cache consistency problem when multiple processors are present in the system. All writes, whether hit or miss, will update that cache entry. No cache refill will occur as a result from a cache write miss.

As mentioned earlier, cache accesses actually two pipeline stages : cache access stage and exception notifcation stage. An important side–effect of single–cycle Dcache writes is that **data is always written in the data store in the first cycle of cache access before the success of the access is determined**. In the event an exception was detected, the MMU must and will *clean–up* this erroneously written cache location before the IP/FP can attempt an access to this bogus line. Cache invalidation must occur if writes to the cache are unencachable or result in a trap. Additionally, if a non–cache miss related exception is detected, a trap is signalled to the IP and the write request to the BIF is supressed.

### 4.2.2.1      Data Cache Write Hit

From the IP/FP's perspective, data cache write hits take one processor cycle. Up to eight bytes can be written to in one cycle. All write rotations are performed by the IP and FP components. A write hit occurs when the tag(PPN) matches the translated virtual address from the PTB or if all of the bytes being requested are marked valid.

### 4.2.2.2      Data Cache Write Miss

A write miss occurs when the tag does not match the translated virtual address or if the byte(s) being written to is marked invalid. The IP *stalls–on–use* of the EASRC bus/EAREG) if a write miss is being serviced in the same cycle in which the IP/FP needs use of the EASRC bus. At most, the IP/FP stalls one cycle per unmerged write miss. Write miss merging is discussed later.

Write miss(cacheable, no unlock) service involves updating the Dcache tag with the appropriate PPN, asserting the necessary valid bits, and generating valid odd parity. The valid bit generation is a function of the previous state of the valid bits, the bytes being written to, and external invalidate activity. More on this later.

#### 4.2.2.2.1    Unencacheable Memory

Dcache write misses are forced whenever an access to a unencacheable page is made, the cache Inhibit(C) bit in the appropriate PMAPe is set, or for special STORE instructions : STORE.UNLOCK. In either case, data must not be cached.

When a write is attempted to an unencachable page, that entry is invalidated in the cache because the data store was written to before any knowledge of cachability was known. If this was not done, invalid information would be left in the cache. By convention, STORE.UNLOCKs are made to look unencacheable to the BIF so when the bus is unlocked, the programmer is guaranteed the write buffer in the BIF has been flushed. Also, since the BIF does not allocate entries in the DTS for unencacheable references, regardless of the reason for unencacheablility, the Dcache entry must be purged to maintain cache consistency. In any event, the write is still issued to memory.

#### 4.2.2.2.2    Special Considerations

If a cacheable STORE follows a LOAD miss, an the STOREs' address is within the LOADs cache block' the LOAD must not allocate in the Dcache since there is a potential of getting *stale data* in the cache. If the

load miss data were allocated in the cache, the subsequent STORE's data would be over written. On the next LOAD of that data, the LOAD will get the data from the cache allocation, assuming the block is not dislodged by a cache synonym, not the STORE's data, which is the most recent version of that data. The MMU sends control to the cache control PAL to *NOP* the BIFs' cache fill request. In reality, any STORE in the shadow forces the MMU to *NOP* the cache allocation since the cacheability statistic of the STORE is not known at the time the LOAD miss is detected.

### 4.2.3    Data Cache Invalidates

The contents of the data cache must be invalidated on power-up. In addition, I/O transfers and writes from other processors must also invalidate data cache entries so stale data is removed from each processors' cache. An invalidate involves clearing the byte valid bits in the data cache tag store and the entry valid bit in the duplicate tag store. The invalidation process takes one clock cycle, and like write miss, only stalls teh processor if the IP requests use of the EASRC bus while teh BIF has control of it. The MMU and BIF have be designed such that invalidate overruns will not occur. The MMU can handle back-to-back external invalidates for an indefinite period of time.

### 4.2.3.1    Local Data Cache Invalidates

The MMU does not support an explicit local invalidation mechanism. Cache Invalidation is implemented by taking advantage of a side effect of unencachable memory. STOREs to unencachable memory locations cause that entry in the cache to be invalidate to maintain cache consistency. Invalidation in this manner will cause the processor to conditionally stall for one cycle.

Invalidation by program action involves writing to a page that is marked, unencachable or issuing STORE.UNLOCKs to the desired page(s). The OS should probably permanently allocate a virtual segment and at least one wired, writtable, physical page for local invalidates. This, along with the hardware, will provide the means to invalidate any cache location. To increase the effectiveness of the duplicate tag store(DTS), the BIF should invalidate entries in the DTS when an unencacheable write is issued to it. To comprehensively invalidate the local cache, the software needs to 'touch' 8K different lines in the cache; the size of the STORE is not important.

### 4.2.3.2    External Data Cache Invalidates

The physical address(PA) and virtual page number(VPN) of all writes on the system bus,from another processor or an I/O device, are compared in the data cache duplicate tag store. The duplicate tag store is indexed by VPN[16:12]/PA[11:03]. If the tag, PA[29:12], matches and the entry's valid bit is set, then the write address is placed on the PA(15:03) bus which is then forwarded to the Dcache via the EASRC Mux to the EAREG. A minimum of one cache cycle is scheduled for the invalidation. In this cycle, the tag valid bits are cleared, marking the entry invalid, and valid parity is written.

If the colliding address on the system bus was to more than a double longword, additional cache cycles are scheduled with an additional set of tag bits cleared every cycle. The BIF will supply the all external invalidation addresses and control via BIF_INVOP(2:0).

### 4.3    Instruction Cache

An instruction cache is employed in the AT CPU design to minimize bus traffic and to give the AT CPU a high bandwidth channel to program instructions; the CPU can fetch instructions every cycle( 50 ns ). The instruction cache is a virtually indexed, physically tagged, direct-mapped, cache. The instruction cache

is driven by an external 14-bit address register(PCREG) which captures the virtual address from the PCSRC bus. This register is duplicated for RAM loading reasons.

Since the Icache is addressed by a virtual address, and object to virtual adress mappings are often ambiguous, special considerations must be made to maintain cache consistency and validity. For imformation on this issue, refer to chapter 3 of this document.

Current memory technologies make it possible to design large, high-speed, data caches with relatively few chips. The instruction cache is implemented using 25 ns, 16K x 4 bit and 16Kx1( parity ) SRAMS. The instruction cache is capable of dispatching a single integer instruction(32 bits) or an IP/FP instruction pair(64 bits). The instruction cache line size is 64 bits, one quadword. The instruction cache capacity will be 128Kbytes.

### 4.3.1 Prefetch Buffer

All floating point instructions are composed of an integer instruction and a floating point instruction. This implies the cache must support 64-bit instruction cache fetches, which it does. To limit the constraints imposed by this method of multiple instruction dispatch, some additional hardware, in the form of instruction streering/prefetch buffer logic. The addition of this hardware allows the compiler to place branch targets on any long word boundry, either even or odd. The addition of a one-deep instruction prefetch buffer is being implemented to help simplify PC generation and timing. The hardware required is illustrated below.

Figure 4.3 - INSTRUCTION PREFETCH BUFFER : *Each cache line is composed of integer instruction and either an integer or FP instruction. This prefetch logic provides the necessary multiplexing.*

### 4.3.2      Data Structures

There are 72 bits in the data store portion of each data cache entry; 64 bits of instruction and 8 bits of odd parity. The tag store is 20 bits wide; 18 bits of address, 1 valid bits, and 1 parity bit(odd).

Instruction cache data store parity is handled by the BIF, while the tag store parity is handled by the MMU. Parity will be valid whether or not the entry is valid(Except at power-up).

**Figure 4.4 – ICACHE ENTRY LAYOUT** : *The AT CPU employs a 64–bit instruction cache with odd byte parity. There is a tag associated with each quad word. A Icache line is defined to be 64 bits. Odd parity is also used with Icache tag.*

### 4.3.3      Instruction Cache Operations

Instruction cache accesses follow the same model as data cache accesses in that the cache access is split across two pipeline stages : cache access and cache exception signalling.

#### 4.3.3.1      Instruction Cache Hit

The IP is capable of fetching an instruction every processor cycle. An instruction cache hit occurs when the tag matches the translated virtual address from the PTB or if the instruction being requested are marked invalid.

#### 4.3.3.2      Instruction Cache Miss

A instruction cache miss occurs when the tag does not match the translated virtual address or if the instruction being requested are marked invalid. If a miss is detected, four lines are allocated in the instruction cache.

##### 4.3.3.2.1    Refill Algorithms

When an instruction fetch misses, a block of four lines is allocated in the instruction cache. The refill ordering scheme is  a simple natural–ordered, block–fill. For example, four lines would be fetched from main memory at address : MISS_ADDR ANDed with FFFFFFC0.  The cache fill would start with cache address : (MISS_ADDR MOD 131072) ANDed with FFFFC0 and would be incremented by 8 for each line allocated in the cache. With this scheme, a cache allocation request never crosses a page boundary. The BIF supplies the addresses, instruction,  and cache control during cache miss allocation. The MMU is responsible for supplying the correct tag for the allocated cache block.

##### 4.3.3.2.2    Unencacheable Memory

The AT–architecture dictates that all **code sections are encacheable.** The MMU will ignore the value of the C bit in the TLB for instruction references.

### 4.4.3        Instruction Cache Invalidation

The primary cause for cache invalidation will be paging.  Program loading and the debugger may also cause writes to the instruction stream. The MMU can handle back–to–back instruction cache invalidates for an indefinite period of time.

#### 4.4.3.1        Local Instruction Cache Invalidates

When a local CPU write is transfered across the backplane, a look–up in the instruction cache duplicate tag store is done and the write is handled as if it was external. If there is a hit, that entry is purged from the instruction cache.

An alternate mechanism for invalidating the Icache is to force hits in the BIF duplicate instruction tag store. This is done by setting the **force hit** bit in the BIF control register(Refer to BIF spec. for more details). This has the effect of forcing all writes( the BIF could restrict invalidates to onl;y local processor writes) that cross the XBUS to hit in the duplicate instruction tag store. All hits in this tag store are relayed to the MMU in the form of an instruction cache invalidate request. Then the software would STORE into a page that was to be invalidated.

This instruction cache invalidate process involves forcing hits in the duplicate instruction tag store, and then issuing STOREs to memory.  The invalidate address is the least significant 17 bits the memory address the processor is writing.  This scheme implies there be a dummy page destination for the STOREs, much like the one discussed in Section 4.3.2.1.

#### 4.4.3.1.1        Writing into the I–stream

In the event that software must write into the i–stream, it is recommended that it be done in this manner :

1. Write into i–stream
   2. Issue a LOAD.UNLOCK(to any location) which will push all writes out of the write buffer so t Icache may be invalidated. Once the data is returned, the programmer is assured that all enrties in the write buffer have been pushed out onto the XBUS.
   3. Wait at least N cycles for the instruction to make its way through the BIFs' invalidate pipeline before attempting to execute the modified instruction.

#### 4.4.3.2        External Instruction Cache Invalidates

The physical address(PA) and virtual page number(VPN) of all writes on the system bus,from another processor or an I/O device, are compared in the instruction cache duplicate tag store. The duplicate tag store is indexed by VPN[16:12]/PA[11:03]. If no match is found, the write address is discarded. If the tag, PA[29:12], matches and the entry's valid bit is set, then the write address is placed on the PA bus which is then forwarded to the MMU via the PCSRC Mux to the PCREG.  A minimum of one cache cycle is scheduled for the invalidation.  In this cycle, the tag valid bit is cleared, marking the entry invalid, and valid parity is written.

If the colliding address on the system bus was to more than a double longword, additional cache cycles are scheduled with an additional set of tag bits cleared every cycle.  The BIF will supply the all external invalidation addresses.

### 4.5        Translation Caching

The virtual addresses generated by an AT processor are translated to physical ones before use. These virtual to physical bindings are dynamic and subject to change at any time during the life of a process.

The virtual to physical bindings are described by a series of memory resident mapping tables. The hardware *walks* these tables when a new translation is required. The hardware also *caches* frequently used translations in a *translation buffer*(TB or TLB). Finally, the hardware enforces protection and gathers usage and change information on the physical memory.

The AT MMU employs a two-level TB structure. The primary TB is integral to the MMU. As mentioned earlier, the secondary TB, shares the RAMs used for the data cache. Simulation has shown this type of hierarchy to be very efficient.

### 4.5.1    Primary TB

The primary TB is constructed using the 16x72 bit configuration of the 5-port ,General Purpose Register File(GPR) and some additional registers to make up the difference between the TB entry size and the GPR entry size. The GPR holds the VA, PPN , C, and X bit, while external registers are needed for the valid bit, modified bit and supervisor bit. Incorporating a TB structure in the MMU facilitates the ability to access the instruction and data caches every processor cycle with minimal, if any, external hardware.

There are 32 entries in the primary TB, shared between the DTLB and ITLB. Each entry is composed of a 16 bit virtual address tag, 4 protection/status bits, one valid bit, and an 18 bit virtual-to-physical translation(See figure 4.3.0). No parity is maintained in this TB. The primary TB is organized as a 32-entry, 2-set associative, address translation cache(16 entries/set).

All TB entries are shared between d-stream and i-stream references. The multiport capability of the GPR allows the MMU to lookup d-stream and i-stream references simultaneously. One read and one write port is dedicacted to each stream. The primary TB is logically broken up into two parts : Data TB(DTB) and instruction TB(ITB). The third read port is be used for TB invalidates.

A primary TB hit occurs when the entry's, indexed by EA/PCSRC[15:12], virtual address portion of the tag matches the EA/PCSRC[31:16] and the entry's valid bit is set.

**Figure 4.5 - DTB/ITB READ PATHS :** *There are five ports on the ICS GPR macroslice; two write ports and three read ports. Two of the read ports are used for DTB/ITB compare/lookup.*

```
      20 19 18 17 16 15                              00
      ┌──┬─┬─┬─┬─┬──────────────────────────────┐
      │ S│X│M│C│V│           VA(31:16)           │
      └──┴─┴─┴─┴─┴──────────────────────────────┘
                                               Tag
            17                                   00
            ┌────────────────────────────────────┐
            │             PA(29:12)              │
            └────────────────────────────────────┘
                                              Data
```

Protection Bits :

    S:    Supervisor protection
          0 : user/supervisor access allowed
          1 : supervisor access only
    X:    Execute Bit
          0 : page conations executable code
          1 : page is not executable
    M     Modified bit
          0 : page has not been modified and may/may not be writable
          1 : page has been modified and therefore is writable
    C     Cache Inhibit
          0 : Page is cacheable
          1 : Page is unencachable
    V     Valid bit
          0 : TB entry invalid
          1 : TB entry valid

**Figure 4.6 – PRIMARY TB LAYOUT :** *The PTB holds recently used translations. Each translation is tagged with a 16-bit virtual address tag, four protection bits and a valid bit.*

It should be noted that there is not an explicit **write protection** bit in the primary TB. However, the notion of write protection is implied in the meaning of the modified bit. If the TB entry has not been modified, the MMU will walk the tables(actually the secondary TB lookup may obviate the need to walk the tables). In doing so, the MMU checks write priviledges in the OS mapping tables. If the page is write protected, an access violation will be signaled to the IP. If the page is writable, the PMAPe and both TBs modified bits must be set. *If a page has been previously modified, it is inherently writable.*

The logic equation representing the M bit calculation is : STORE * !WRITE_PROTECTED .

### 4.5.1.1    Replacement Algorithm

If a TB miss occurs, the MMU will check the secondary TB for the desired translation. If no translation is found, the MMU then *walks* the OS page tables, in search of a translation. Once found, the new translation is written into the TB entry located at MISS_ADDR(15:12). Set selection is based on random replacement. **If an ITB hit and a DTB hit occur at the same time to the same page, it is possible to have both set in a given PTB entry have the same translation.** This is usually dangerous, but since TB selective invalidates always purge both sets, this anomoly results in only a small performance loss.

### 4.5.2    Secondary TB

The secondary TB physically resides in the data cache RAMs. Sixty-four Kbytes are dedicated to the secondary TB. The secondary TB serves as a backing store for the primary TB. Unlike the primary TB, this TB is a unified instruction/data TB. Thus, if a miss occurs in either the DLB or the ITB, the MMU will check the secondary TB for the translation. If a valid translation is found(hit), the new translation and access

protection bits are copied into the primary TB. If as miss is detected, the MMU must *walk* the table to reteive the translation. If that fails, the MMU signal a region/segment/page fault or access violation trap to the IP.

A secondary TB hit is said to occur if secondary TB entry's, indexed by MISS_EA/PC[24:12], virtual address portion of the tag matches MISS_EA/PC[28:25], the RMAPe portion of the tag matches the RMAPe indexed by[31:29], and the valid bit is set.

The secondary TB is a 8192 entries, direct mapped address translation cache. Each entry is composed of a tag and data portion(Refer to figure 4.7). The valid bits physically reside in a two, MOSTEK 4179, 4kx4, 20ns, clearable SRAMs. Odd parity is being implemented on the tag and is maintained by the MMU. The secondary TB tag is accessed over the DTAG bus. Tag parity covers bits (31:12) and (7:0). Valid bit integrity is assured by duplicating the valid bits of each entry. If the duplicate valid bits are either (1,0) or (1,1) an error is signaled to the IP(refer to table below). This scheme allows adequate error coverage, even in light of complete seecondary TB flush. This also allows us to maintain valid parity on entries that are not valid, even in the wake of a comprehensive secondary TB invalidate. Odd parity is being adopted on the data store parity and is maintained by the BIF.

Protection Bits :

S:   Supervisor protection
     0 : user/supervisor access allowed
     1 : supervisor access only
X:   Execute Bit
     0 : page conations executable code
     1 : page is not executable
M    Modified bit
     0 : page has not been modified
     1 : page has been modified
C    Cache Inhibit
     0 : Page is cacheable
     1 : Page is unencachable
V    Valid bit
     0 : TB entry invalid
     1 : TB entry valid
W    Write Allowed
     0 : page is not writable
     1 : page is writable

RV   Region Register Valid Bit
     0 : Region register is invalid
     1 : Region Register is valid

Valid Bits

| $V_1$ | $V_1$ | Condition |
|---|---|---|
| 0 | 0 | Invalid |
| 0 | 1 | Valid |
| 1 | 0 | Error |
| 1 | 1 | Error |

Figure 4.7 – SECONDARY TB LAYOUT : The secondary TB is a backing store to the PTB. It contains up to 8192 entries. The secondary TB differs from the PTB in that is contains process info(RMAPe).

### 4.5.3     TB  Invalidation

Selective entries in the must be flushed whenever the hardware significant bits of the SMAPe and PMAPe are modified by the software. Failure to flush the appropriate entries will result in stale TB entries. Since the primary TB only supports *per ASID tags*, it must be comprehesively flushed at context switch time or when any RMAPe is modified. The secondary TB, however, maintains *system-wide tags*, so comprehensive secondary TB flushing is not necessary.

Invalidates are directed to both the DTB, ITB and secondary TB.

### 4.5.3.1     Local TB Invalidates

Selective or comprehensive primary TB invalidates are initiated by program action by issuing the appropriate MTPR instruction. Selective TB invalidates conditionally invalidate the primary and secondary TB. The primary TB is indexed by EASRC[16:12], while the secondary TB is indexed by EASRC[24:12]. The primary TB is conditionall invalidated. while the secondary TB is unconditionally invalidated. If there is a hit in the primary TB, the MMU will invalidate that entry by clearing it's valid bit. All selective, local TB invalidates will be propagate to the system bus in the form of a TB invalidate broadcast. Much like write miss, selective local TB invalidates will cause the processor to conditionally stall for one cycles, if a match is found. All TB related MTPRs **must not have memory referencing instruction in their shadow.** When a hit occurs on a selective TB invalidate, both sets of that entry are purged.

Two forms of comprehensive TB invalidation exist, flush primary or flush both. Comprehensive TB invalidation purges the entire TB. Only comprehensive invalidation of both TBs propagate to the bus in the form of a broadcast TB All message. A PTB flush will not stall the IP, while a PTB/TB2 will cause an execute stall for three cycles.

### 4.5.3.2     External TB Invalidates

A local, selecetive TB invalidate posted on any one AT processor will be relayed to all processors by means of a TB invalidate broadcast message over the system bus. All external, selective, TB invalidates will conditionally invalidate the primary and unconditionally invalidate the secondary TBs. Since the *context information(RMAPe)* is not supplied with the TB invalidate broadcast message and the priamry TB does not store the *context information*, the local TB invalidate action is not truly conditional(leaky filter analogy). The TB invalidate address is supplied by the BIF. The invalidate address(VA[24:12]) is placed on the PASRC(15:03) bus and is routed to the EASRC(15:03) bus via the EASRC Mux. External TB invalidates can be accomodated every cycle. The XBUS TB invalidate request logoic is being designed so TB invalidate requests happen, at best, once every two cycles. Therefore, it is not possible to have TB invalidate overruns.

It takes three cycles to completely reset the TB2. It is possible, that another TB invalidate, external or locally generated, could occur while this is happening. In the event a selective TB invalidate collides with a external TB2 flush in progress, the MMU will supress the TB2 tag write control by asserting MASK_TBTAGWR. If a local comprehensive TB flush collides with an outstanding external TB flush, the two reset sequences are overlapped. If another external comprehensive TB flush collides with an outstanding external TB flush, the second rest request is dropped.

For:            mageau.adv_tech.r_d.7D27
Document:       ch5
Last saved on:  Thu Oct  8 13:38:02 1987
Printed on:     Fri Feb 19 10:12:03 1988


```
paperheight 3264
papermargin 30
copies 1
language imPRESS
jamresistance on
jobheader on

IMAGEN Printing System, Version 2.2, Serial #84:10:19
Page images processed: 11
Pages printed: 11

Paper size (width, height):
 2560, 3264
Document length:
 77383 bytes
```

---

# Chapter            5

---

# Software Interface

## 5.0 Software Interface

### 5.1        MMU Register Set

The entire MMU register set is only accessible by means of MFPR/MTPR instructions when in supervisor mode. The interprocessor addresses for each register in the MMU is as follows :

### Table 4.1 MMU Register Set(Priviledged Access Only)

| Address | Register Name | Access |
|---------|---------------|--------|
| 0000 0C00H | Breakpoint Address register | R/W |
| 0000 0C20H | MMU CSR | R/W |
| 0000 0C28H | MMU TSR(clear) | W |
| 0000 0C30H | Primary TB Flush | W |
| 0000 0C34H | Flush All TB's | W |
| xxxx xC38H | Selective TB Invalidate | W |
| 0000 0C40H | FPPCQ | R |
| 0000 0C60H | Region Register 0 | R/W |
| 0000 0C64H | Region Register 1 | R/W |
| 0000 0C68H | Region Register 2 | R/W |
| 0000 0C6CH | Region Register 3 | R/W |
| 0000 0C70H | Region Register 4 | R/W |
| 0000 0C74H | Region Register 5 | R/W |
| 0000 0C78H | Region Register 6 | R/W |
| 0000 0C7CH | Region Register 7 | R/W |

* where xxxx x is the virtual address of the entry to be purged.

Table 5.0 – MMU REGISTER SET : *The entire MMU register set is accessible under supervisor mode via MXPR instructions.*

## Table 5.1 MMU Register Set

The MMU registers can only be accessed when in supervisor mode. The IP will detect all unauthorized access of these registers. A FETCH trap will be generated by the IP if the user attempts access to these priveledged registers.

### 5.1.1    RMAPe Registers

The first level of the OS mapping table hierarchy exists in the MMU. Because of this, one less memory reference is needed for a table walk, thereby reducing table walk latency. The notion of ASID is established by loading the eight region regisers in the MMU, since the region register set, otherwise known as the RMAP, defines the *context* of any particular process(See Section 3.2.1). The region registers have supervisor, read/write access. The region register format follows.

```
REGION REGISTERS (.MMU_RRn)  [ 00000C60-00000C7C ] | -- ]        PRIV R/W
31 30 29                                          12  11                    01 00
|▒▒▒|     SEGMENT MAP PHYSICAL POINTER (PPN)     |▒▒▒▒▒▒▒▒▒▒▒▒▒▒▒▒▒| V |
                                                              V = VALID, IF SET
```

Figure 5.0 – REGION REGISTER FORMAT : There exist eight such register in the MMU.

**Field Description :**

V        **Valid Bit**                    R/W
         0 : Invalid Entry
         1 : Valid Entry

**SMAP Addr : Segment Map Physical Pointer R/W**

### 5.1.2    FP Trap PC Queue

The FP trap PC queue(FPTRPCQ) is organized as a FIFO stack. The FPTRPCQ register is supervisor read only. A read of the FP TRPCQ will fetch the entry on the top of the stack. The FIFO will automatically advance. The format is as follows :

```
FP TRAP PC QUEUE (.MMU_FPTRPCQ) [00000C40 | — ]          PRIV R
31                                                        03 02 01 00

        FP INSTRUCTION ADDRESS #N                              V

Nth MFPR GETS Nth INSTRUCTION ADDRESS, N = 1, 8.        V = VALID, IF SET
```

Figure 5.1 – FP TRAP PC QUEUE


**Field Description :**

V        **Valid Bit**                        R
         0 : Invalid Entry
         1 : Valid Entry


**FP Instruction Address #N:**                         R
         This field contains the top of the FP Trap PC chain FIFO stack.  The first read of
         this register will be the PC of the faulting FP instruction.


### 5.1.3    MMU CSR

The MMU CSR holds various bit fields that control the caches' operation, breakpoint triggering, virtual
address translation harware, and the trap summary field.  Caution should be taken when updating the
CSR.  The software should read the CSR, modify the appropriate bits, and then write the merged result to
the CSR.  Note : CSR writes will have no effect on the value in the TC field.  The MMU control/status
register(CSR) format is as follows :

```
MMU CONTROL STATUS (.MMU_CSR)  [ 00000C20 | — ]          PRIV R/W
31                          15 14 13 12 11 10 09 08 07 06     03 02 01 00

                            F H | F M |   | F | L | S | E | P | I | D |  TRAP #

    FH / FM  (FH OVERRIDES FM)           F = 1 -> BREAKPOINT ON PROGRAM FETCH
                                         L = 1 -> BREAKPOINT ON PROGRAM LOAD
    00   NORMAL                          S = 1 -> BREAKPOINT ON PROGRAM STORE
    01   FORCE DATA CACHE HIT/MISS       E = 1 -> ENABLE VIRTUAL ADDRESSING
    10   FORCE INSTRUCTION CACHE HIT/MISS P = 1 -> DISABLE CACHE PARITY CHECKS
    11   FORCE BOTH CACHES TO HIT/MISS   I = 1 -> ICACHE IN PHYSICAL MODE
                                         D = 1 -> DCACHE IN PHYSICAL MODE
```

Figure 5.2 – MMU CONTROL STATUS REGISTER


## Breakpoint Control Field

There exists a hardware breakpoint facility in the MMU to aid in the software debug process.  Whenever
the MMU detects a match between the incoming reference and type, and the comparison datum
programmed in the MMU Breakpoint Control Register(BCR) and the MMU Breakpoint Address

Register(BAR), a trap will be generated and the MMU CSR, TC field, will be updated accordingly. The MMU breakpoint facility supports breakpoints on instruction fetches, memory reads, and memory writes. This field is read/write.

There exist a buried register that allows the system clock to be stopped when a breakpoint is triggered. The clocks are stopped when the MMU asserts CLOCK_STOP-.

**Field Description :**

F          **: Break on Fetch Address Match Enable**                              R/W
           0 – Fetch Address Breakpoint Disabled
           1 – Fetch Address Breakpoint Enabled

L          **: Break on Load Address Match Enable**                               R/W
           0 – Load Address Breakpoint Disabled
           1 – Load Address Breakpoint Enabled

S          **: Break on Store Address Match Enable**                              R/W
           0 – Store Address Breakpoint Disabled
           1 – Store/Probe Address Breakpoint Enabled

**Trap Summary Field**

## MMU STATUS CLEAR (.MMU_CLR)   [ 00000C28 | — ]                          *PRIV W*

An MTPR of any value to the MMU status clear register will reset the trap number reported in the MMU CSR (supervisor write-only).

The MMU trap summary register contains the necessary information for ,MMU related ,trap processing. It is a read-only field. The trap type is encoded as a four bit field to simplify trap dispatch. The code will serve as a index into a jump table. Traps can result from normal memory accesses(LOAD/STORE) or PROBEs. The TC field is cleared by writing to MTPR  address [0000 0C28].

Since both an instruction fetch and an operand fetch can be initiated in the same processor cycle, it is possible to have a trap occur for both cache requests simulataneously resulting in a status register resource conflict.  The MMU CSR, TC field,  conflicts will be resolved as follows :

*Traps Occur Simulatneousy*

To maintain the sequential execution model, the MMU CSR, TC field, will be loaded with the trap code for the faulting d-stream reference.

*Dcache Trap/No Icache Trap*

The MMU CSR, TC field, will be loaded with the trap code for the faulting d-stream reference. The MMU TSR will be locked until an MTPR TSR Clear is initiated.

*Icache Trap*

The current model for Icache traps is to defer its processing until the IP pipeline drains. The MMU CSR, TC field, will be loaded with the trap code for the faulting I-stream reference. If a data cache trap is detected for any instruction left in the pipeline, the MMU CSR, TC field, will be reloaded with its trap code to maintain the sequential execution model.

In the event, multiple faulting conditions are detected(i.e LOAD breakpoint trap on an unaligned LOAD access), only the highest priority will be reported. The MMU has no concept of pending traps. The lower priority trap will be detected and signalled when the trap handler reruns the access on trap exit. Refer to the AT Architecture Specification for trap prioritization.

TC          : MMU Trap Code                                                              R

### Execute Trap Codes

| | |
|------|---------------------------|
| 0000 | No Error |
| 0001 | Load.lock Access Error |
| 0010 | Address Error |
| 0011 | Breakpoint Detected |
| 0100 | Tbl. Walk Load No Response |
| 0101 | Tbl. Walk Load ECCU |
| 0110 | Load Bus No Response |
| 0111 | Load ECCU |
| 1000 | Data Access Violation |
| 1001 | Region Fault |
| 1010 | Segment Fault |
| 1011 | Page Fault |
| 1100 | |
| 1101 | |
| 1110 | |
| 1111 | |

### Fetch Trap Codes

| | |
|------|---------------------------|
| 0000 | No Error |
| 0001 | |
| 0010 | |
| 0011 | Breakpoint Detected |
| 0100 | Tbl. Walk Load No Response |
| 0101 | Tbl. Walk Load ECCU |
| 0110 | Fetch Bus No Response |
| 0111 | Fetch ECCU |
| 1000 | Inst Access Violation |
| 1001 | Region Fault |
| 1010 | Segment Fault |
| 1011 | Page Fault |
| 1100 | |
| 1101 | |
| 1110 | |
| 1111 | |

Trap Code     X X X X

Trap Type

Table 5.2 - MMU TSR TRAP CODES

Fatal hardware failures will not trap the IP, but halt the system clocks by asserting CLOCK STOP-. Hardware failures that result in the assertion of HALT- are Dcache/Icache/Secondary TB Tag parity errors(when CSR.P is set) or when multiple hits are detected in the PTB for a given TB entry.

### Cache Control Field

FM          : Force Miss Field                                    R/W
            00 - Normal Operation(No forced misses)

01 – Force Data Cache Miss
10 – Force Instruction Cache Miss
11 – Force Both Caches to Miss

Forcing any cache to miss will force all cache reads references to go to main memory for data. The returned data **will be allocated in the cache**. Issuing STOREs while the force miss bits are set will have the effect of writing to main memory and **updating the cache tags**. Both caches should be forced to miss at system power–up(initialized by scan path), so erroneous hit do not occur, unless RAM SELFTEST was used to initialize the caches.

FH        : **Force Hit Field**                                R/W
          00 – Normal Operation(No forced hits)
          01 – Force Data Cache Hit
          10 – Force Instruction Cache Hit
          11 – Force Both Caches to hit

Forcing any cache to hit will force all read references to **get data only from the cache**, regardless of tag hit/miss. STOREs will always write to the cache(**tag will not be updated**), but will not propagate to main memory.These bits should be reset at power–up by scan path initialization.

**If the force hit and force miss bits are both set for the same cache, force hit will override!**

E        **Translation Enable**                                R/W
          0 – Virtual Address translation disabled
          1 – Virtual Address translation enabled

Should be reset at power–up if the machine is to run in physical mode initially. The caches will be operational in either mode. When transitioning between physical and virtual modes, the cache should be cleared or forced to miss, since tags are not accurate anymore.

D        : **Operand Translation Enable**          R/W
          0 – Operand Virtual Address translation enabled
          1 – Operand Virtual Address translation disabled

The operand translation enable logic allows a user to have operand virtual addresses bypass the translation logic, essentially operating in physical mode. The assertion of this bit overrides the assertion of the E bit for the DTB only. This is primarily a diagnostic function.

i        : **Operand Translation Enable**          R/W
          0 – Instruction Virtual Address translation enabled
          1 – Instruction Virtual Address translation disabled

The instruction translation enable logic allows a user to have instrcution virtual addresses bypass the translation logic, essentially operating in physical mode. The assertion of this bit overrides the assertion of the E bit for the ITB only. This is primarily a diagnostic function.

P        : **Enable Icache/Dcache Parity error reporting**          R/W
          0 – Enable Icache/Dcache tag parity error reporting
          1 – Inhibit Icache/Dcache tag parity error reporting

The bit field is essential for system power-up. Since the caches power up into an unknown state, bogus parity errors would occur. Scan software, that is responsible for initializing the state of the gate arrays should set this bit.

## 5.1.4 Cache Flush Commands

The cache flush commands are not actually physical registers, but, are mapped into the MMU assigned interprocessor register map. All cache flush commands are initiated as a result of the appropriate MTPR or STORE instruction.

| Type | Mechanism | XBUS Effect |
|------|-----------|-------------|
| Data Cache Invalidation | Mark page unencachable STORE to that page | XBUS store DTS is invalidated also |
| Instruction Cache Invalidation | Force hit in DITS STORE to code page | XBUS write Hit xlat into Ext. Icache inv. |
| ALL TB Flush | Flush both TBs MTPR Rn, #C34 | XBUS Broadcast Message Invalidate all TBs |
| Primary TB Flush | Flush local primary TB MTPR Rn, #C30 | No activity |
| Selective TB Invalidation | Conditionally Purge one entry MTPR Rn, #xxxx xC38 | XBUS Broadcast message Invalidate TB entry xxxx x000 |

Table 5.3 CACHE/TB INVALIDATION SUMMARY TABLE

### 5.1.4.1 Data/Instruction Cache Invalidation

Cache invalidates result from a STORE to an unencacheable page. One segment should be set aside for this purpose. The PMAP need only map one, wired, physical page of data. All other PMAPes can point to that page by indirection. This physical page is essentially a bit-bucket for the STORE's data. Since the caches are less than a segment in depth, the entire cache can be invalidated by issuing a STORE to the first 8K quadwords or longwords (any unencacheable STORE to any byte in a line will purge all bytes that line) in this special segment. The data cache will be invalidated immediately. This is not the case for instruction cache invalidation. The need to invalidate entries in the instruction cache is determined by the BIF. When the writes propagate onto the XBUS, be it local or remote, the BIF will check the instruction cache duplicate tag store for a match. If found, that entry will be invalidates in the instruction cache. Also if the hits are forced in BIF duplicate instruction tag store, all writes on the XBUS will result in local instruction cache invalidates.

### 5.1.4.2 Selective TB Invalidation

Selective TB invalidation is initiated by a MTPR. Imbedded in the EASRC address is the virtual address of the page to be purged from the TB. For example, MTPR to address[ 0000 1C20H] will purge VPN #1 from both TBs. This function is being implemented to obviate the need to comprehensively flush all TB entries when the hardware significant bits of the mapping tables are changed without the MMU's knowledge, thereby increasing MMU translation performance.

A local, selective TB invalidate will conditionally purge the selected entry the primary and unconditionally purge the entry in the secondary TB. All selective TB invalidate requests, whether or not there is a hit in the primary TB, will propagate, via the TB invalidate broadcast mechanism, to the XBUS so that all remote processors will purge the stale entry from their TBs.

## TB INVALIDATE (.MMU_TBINVENT)  [ vvvvvC38 | -- ]                    *PRIV W*

**Write to vvvvvC38 invalidates page with Virtual Page number vvvvv in both primary and secondary translation buffers (supervisor write-only).**

The invalidate selective TB MTPR instruction **must not have a memory referencing instruction in its shadow.**

### 5.1.4.3    Primary TB Flush.

As mentioned earlier, the primary TB holds *per ASID tags*. This means that at process switch time [change of ASID], the primary TB must be purged because virtual-to-physical address bindings for one process are not guaranteed to be the same for a different process. This type of invalidation has no system-wide significance, it is only an artifact of the current primary TB implementation, and therefore will not propagate to the XBUS.

This type of invalidate is initiated by issuing a MTPR to processor register[ 0000 0C24H] The primary TB purge MTPR instruction **must be surrounded by a least one non-memory referencing instruction.**

## TB FLUSH (.MMU_TBFLUSH)  [ 00000C30 | -- ]                    *PRIV W*

**Whenever the ASID context is changed in a processor, that processor's local TB must be flushed. The local TB may be flushed by a write to processor register 00000C30  This type of invalidation will not propagate to the other TB's in the system (supervisor write-only).**

### 5.1.4.4    All TB Flush

At certain times, the OS deems it necessary to purge several entries from the TBs. The software may decide to purge selectively or to comprehensively purge both TBs. Probalistically speaking, selective invalidate will yeild the best system performance. However, when the number of selective invalidates becomes too large or the work involved determining which entries should be purged becomes overwhelming, the best strategy may be to flush all entries from both TBs. This decision is left to the OS developers.

This type of invalidate is initiated by issuing a MTPR to processor register[ 0000 0C28H]. This invalidate request will propagate to the XBUS to other processors in the system. The invalidate all TBs MTPR instruction **must be surrounded by a least one non-memory referencing instruction.**

## TB INVALIDATE ALL (.MMU_TBINVALL)  [ 00000C34 | -- ]                    *PRIV W*

**Storing to TBINVALL will invalidate all cached virtual address translations  in the system (supervisor write-only).**

### 5.1.5     MMU Trap Summary Register(TSR)

The TSR is a write only register that is cleared by issuing a MTPR to address [ 0000 0C28 ]. This data supplied is not used in this operation.

## MMU STATUS CLEAR (.MMU_CLR)  [ 00000C28 | — ]                    *PRIV W*

An MTPR of any value to the MMU status clear register will reset the trap number reported in the MMU CSR (supervisor write-only).

### 5.1.6     Breakpoint Address Register

The MMU Breakpoint Address Register(BAR) is compared against incoming EASRC and PCSRC addresses. Generally speaking, if these address match the address stored in the BAR, and the appropriate enable bit in the BCR is set, the MMU will generate a Breakpoint Trap and the MMU will load the MMU TSR will the status reflecting this trap condition. If a breakpoint is set to a location and a higher priority trap is detected upon the access of this operand, the MMU TSR will reflect the higher priority trap condition. The breakpoint can be set to any location in virtual memory. The MMU BAR contains a either a **virtual address or physical address** depending on whether or not the MMU is enabled. The breakpoint mechanism is **bypassed for read.physical intructions**, whether or not the MMU is enabled/disabled. This register is read/write and is loaded by a. MTPR/MFPR to address[0000 0C38H], with the MMU as the destination. The breakpoint address comparison is ignored when the IP issued a read.physical command to the MMU. The BAR format is as follows :

---

## BREAKPOINT ADDRESS REGISTER (.MMU_BAR)  [ 00000C00 | — ]    *PRIV R/W*

| 31 | 00 |
|---|---|
| BREAKPOINT ADDRESS (VIRTUAL) | |

---

**Figure 5.4**  MMU BREAKPOINT ADDRESS REGISTER

**Operand Access Breakpoints**

If the BAR is set to trap on a particular byte,word,longword,quadword, the MMU will trap on an access to the explicit reference to that byte,word,longword,quadword, or any byte, word,longword, or quadword, access that includes that byte,word,longword,quadword. For example :

ASSUME :

1. BAR = 0000 0001
2. BCR.L = true

```
IF    (LOAD.b Rn <- 0000 0001) { explicit reference }
   OR (LOAD.w Rn <- 0000 0000) { implicit reference }
   OR (LOAD.l Rn <- 0000 0000) { implicit reference }
   OR (LOAD.q Rn <- 0000 0000) { implicit reference }
```

THEN  generate_operand_breakpoint;

## Instruction Fetch Breakpoint

The MMU WILL support VA breakpoint on instruction fetches for thefollowing situations :

1. Breakpoint trap on fetch of an integer instruction(or IP/FP pair) that is on an even longword boundry as a result of sequential program flow or a branch to an even address.(Breakpoint set to an even lword address)

2. Breakpoint trap on fetch of an integer instruction thay is on an odd longword boundry as a result of sequential program flow or a branch to an odd address(Breakpoint set to odd lword address). If an errant program branches to the floating point half of a IP/FP instruction pair and a breakpoint is set to that odd longword address, a breakpoint trap is generated.

3. The MMU will NOT break on an IP/FP instruction pair if the breakpoint is set to an odd longword and the fetch PC is to the even longword address. This restriction is due to pin limitations of the MMU.

### 5.2      Cache Probes

The AT architecture supports a write probe instruction. The write probe mechanism provides a means for the OS to non-destructively *touch* virtual memory, checking all access priviledges and data residency, without updating physical memory. The probe instruction will not alter the OS mapping tables in any way(i.e the used ond modified bits will not be set if currently reset). This is primarily used for atomic updates of multi-element data structures( the structure must be modified as a whole or not at all). These *critical* data structures are usually accessed under bus lock. The write probe does not allocate entries in the data cache. The write probe **never updates physical memory in any way.**

The source register of the write probe could be the black hole register(R31). The IP may be stalled, awaiting the probe's completion. The probe operation involves :

> Walking the tables : The MMU walks the OS mapping tables in search of one. If none
> is found or an access violation is detected, a trap is signalled to the IP(either region/
> segment/page fault or access violation) and the MMU SR is updated
> accordingly. If a translation is found, the primary and secondary TBs will be updated and the
> stalled is released.

### 5.3      Read Physical

It is often necessary for the OS to 'walk the tables' in software to retrieve an object's PMAPe. This involves successive virtual-to-physical(V-to-P) translation and physical-to-virtual(P-to-V) translation procedure calls to yield the desired PMAPe. This is a very time consuming process. Therefore, the MMU will assist in this process by supplying a means to access physical memory directly, bypassing the TBs

and caches.   This is done by issuing the **read.physical** instruction.   This instruction is a **priviledged** instruction.

A V-to-P operation would involve, physically accessing memory with the address of the SMAPe found in the RMAPe.  Once the SMAPe is read, the PMAPe is retrieved by physically accessing memory with the address of the PMAPe found in the SMAPe. By implementing the read.physical instruction, we have streamlined the software V-to-P process with little expense to the hardware.  This mechanism is also useful if the OS wishes to read data at which time only the physical address is known. Other uses may exist.

When the IP issues a read.physical command to the MMU, the EA on the EASRC bus is passed directly to the BIF as a   load.nolock.nocache request, bypassing the translation buffer(no translation or access checking is performed). The BIF should not use the VPN is this type of reference for invalidating/or updating its duplicate tag stores.  The IP is stalled by asserting MMU_EVALID until the read is received. Once received, the returned data is sent directly to the IP and is not allocated in the data cache. The breakpoint address comparison is ignored when the IP issues a read.physical command to the MMU. However, all other traps will pertaining to that reference will be issued if need be(i.e bur errors, alignment problems, etc).

For: mageau.adv_tech.r_d.7D27
Document: ch6
Last saved on: Tue Oct 20 16:14:36 1987
Printed on: Fri Feb 19 10:08:41 1988


paperheight 3264
papermargin 30
copies 1
language imPRESS
jamresistance on
jobheader on

IMAGEN Printing System, Version 2.2, Serial #84:10:19
Page images processed: 53
Pages printed: 53

Paper size (width, height):
  2560, 3264
Document length:
  391668 bytes

---

## Chapter 6

---

# Functional Operation

## 6.0 Functional Operation

There are six fundamental data paths internal to the MMU gate array. The partitioning is centered about the six major busses that the MMU uses to interface to the other AT CPU components : the IP, FP, and BIF. Logically, the fundamental data paths can be classified into two distinct categories, those which deal with operand references and instruction references.

Each data path and its control , is ultimately responsibility for validating all cache requests. Each funtional unit retains enough state gracefully recover from d-stream or i-stream perturbations that result from TB and cache misses. Additionally, each unit is responsible for signaling traps whenever necessary.

Since current ASIC and SRAM technologies necessitate a two cycle cache access, a two-stage pipeline(cache access pipeline) has been incorporated into the Icache and Dcache access path to give the *illusion* of a single cycle cache access by overlapping cache access with data cache tag/access checking from the cache access in the previous cycle. The pipeline states are called the ACCess and the EXCeption stage.

These pipelines can be thought of as an extension to the IP's F_unit and E_unit pipelines. LOAD/STORE and MTRR/MFPR instructions have a pipeline depth of 5, two stages are overlapped with the MMU cache access pipeline stages. The relationship between the IP's and MMU's pipeline are described below.

| Pipeline Stage | IP Name | MMU Name |
| --- | --- | --- |
| Instruction Fetch | IF | ACC (Icache ACCess) |

The instruction fetch stage is reponsible for fetching the next instruction from the instruction cache. The IP will request an instruction from the instruction cache every cycle, unless an internal resource collision or an external stall is detected, by placing the appropriate PC on the PCSRC bus which is available in the PCREG in the ACCESS stage. The requested instruction is made available on the INST bus for subsequent loading into the IPs' instruction register(IR). The IP selects the source of the instruction, either the Icache or the prefetch buffer, by asserting the appropriate levels on IP_PREIR_SEL and PC2(

see Figure 4.3). The current operating mode of the IP is relayed to the MMU by the state of **IP_SUPER** which is piped forward in the MMU for priviledge checking(**EXC_SUPER**).

There exists, internal to the MMU, a copy of the contents of the instruction fetch address in the **PCREG**, called **ACC_PC**. **ACC_PC** is a virtual address. This address is used to access the **ITB** to determine the validity(hit/miss) of this reference and, subsequently, the virtual address translation(PPN) and the protection of the given reference. Also in this cycle, The **ITB** PPN is compared against the physical address tag that is available on the **ITAG** bus to determine cache entry validity(hit/miss). Due to severe timing limitations, the prioirization of the potential exceptions is not carried out until the next cycle.

**Operand Fetch/Decode          OF/DE                    EXC (Icache EXCeption)**

Upon receipt of the requested instruction, the IP proceeds by decoding the instruction. At this time, if the IP determines that the fetched instruction is a memory-referencing instruction : LOAD, STORE, or MxPR, it will assert **IP_EREQ** to arbitrate for the **EASRC** bus for use in the next cycle. Also, if the IP detects any internal resource collisions, **IP_ISTALL** is asserted to stall the FP and MMU until the collision is resolved. A similar interface exist between the FP, IP, MMU to handle FP related resource collisions. The FP stalls the MMU and IP by asserting **FP_ISTALL**.

Coincident with the IP instruction decode, the MMU completes exception prioritization. If a problem was found, the appropriate stall or trap sequencing is initiated. Minimally, the MMU will negate **MMU_IVALID** in this cycle to indicate to the IP the requested instruction was in error and should not propagate any further in the IP, FP, MMU pipelines until the exception is resolved. The MMU may also assert **MMU_PCSRC_BUSY**, if the PCSRC bus is needed ·to resolve the exception, or **MMU_ITRAP**, if an unresolvable exception(Fetch Trap) is detected. The MMU will ignore the state of **IP_ISTALL**, **FP_ISTALL**, and **IP_EREQ**, whenever **MMU_IVALID** is negated or **MMU_PCSRC_BUSY** is asserted or **MMU_ITRAP** is asserted.

**Effective Address Calculation      EX/EA**

For memory referencing instructions, this stage is used to compute the effective address. If the previous arbitration was in favor of the IP, the IP presents a data cache request to the MMU by placing the effective address on the **EASRC** bus, cache operation type on **IP_CACHE_OP[3:0]**, operand size on **IP_SIZE[1:0]** and the MXPR destination, if applicable, on **IP_MXPR_SEL[1:0]**.

Since the EASRC bus is shared between the IP, MMU, and BIF, and the IP is the lowest priority requestor, it is possible that the bus may be in use at the time the IP requests use of the bus. If this condition arises, the MMU will assert **MMU_EASRC_BUSY** to signal the IP that it lost in the arbitration. The assertion of this signal has the effect of stalling the IP until the bus becomes free again. The MMU is the default master and the BIF is the highest priority requestor of the **EASRC** bus.

**Data Cache Access                DC                    ACC (Dcache ACCess)**

The data cache stage is responsible for retreiving the data, requested in the EX cycle, from the **DATA** bus. The address placed on the **EASRC** bus in the EA cycle is now available in the **EAREG**. For STORE

and MTPR instruction, this data is written into the data cache or passed along to the MMU, respectively. For LOAD of MFPR instructions, the data is sent to the IP at the end of this cycle.

There exists, internal to the MMU, a copy of the contents of the operand address in the EAREG, called ACC_EA. ACC_EA is a virtual address. This address is used to access the DTB to determine the validity(hit/miss) of this reference and, subsequently, the virtual address translation(PPN) and the protection of the given reference. Also in this cycle, The DTB PPN is compared against the physical address tag that is available on the DTAG bus to determine cache entry validity(hit/miss). Due to severe timing limitations, the prioirization of the potential exceptions is not carried out until the next cycle.

**Writeback Load Result**        **WL**           **EXC (Dcache EXCeption)**

The writeback load result stage is responsible for writing LOAD/MFPR data into the IP register file. Piped forward STORE state is save in this stage in the event of an MMU exception/stall. Only memory accesses have this stage.

This is also the cycle where the MMU returns status regarding the previous cache access. The MMU completes exception prioritization in this cycle. If a problem was found, the appropriate stall or trap sequencing is initiated. Minimally, the MMU will negate MMU_EVALID in this cycle to indicate to the IP the requested data was in error and should not propagate any further in the IP, FP, MMU pipelines until the exception is resolved. Note, however, this data is still written into the destination register in the IP register file. The MMU may also assert MMU_EASRC_BUSY, if the EASRC bus is needed to resolve the exception, or MMU_ETRAP, if an unresolvable exception(Execute Trap) is detected.

**Tag Formation Register(CDATA)**

The Tag Formation stage is less rigidly defined than any of the above stages. This stage is inherently valid whenever a cache/TB miss is detected. The intention of this stage is to merge STORE miss tag updates for back-to-back STOREs to the same cache line. If write miss merging is possible, both STORE miss tag updates may be performed in one cycle, thereby reducing the STORE miss latency by one cycle. This memory sequence occurs frequently for string copy operations, register unloading on context switch and procedure calling. Also when a STORE miss is followed by a LOAD to the same cache line, a LOAD miss may be avoided if between the previous state of the tag valid bits and the byte valid bits being updated by the STORE cover the bits being requested by the LOAD.

This register is also used to supply the Dcache tag with an cleared tag for external Dcache/TB invalidate requests. MMU_EASRC_BUSY is asserted whenever the BIF takes control to issue a Dcache/TB invalidate. MMU_EASRC_BUSY stalls affect the IP or MMU only when either device needs use of the EASRC bus. Dcache accesses that are in their ACC and EXC stage when a Dcache/TB invalidate is posted are allowed to progress, unless a miss or exception is detected. Again, if neither memory reference misses or traps, no address recirculation is required after the invalidation process completes; thereby, probabilistically, reducing/eliminating invalidate stall latency. However, if a miss is detected on either of these references, then the usual exception signaling to the IP is maintained.

## 5.1    Data Path Elements

**Figure 6.0** – AT MMU ADDRESS PATH BLOCK DIAGRAM CPU BLOCK DIAGRAM : consists of three *major buses: EASRC, PCSRC, PA.*

**Figure 6.1** – AT MMU CACHE TAG DATA PATH :  *Tag information is passed between the caches and the MMU over the DTAG and ITAG buses.*

## 5.2 Operand Access

The IP initiates a data cache requests when it decodes an integer LOAD or STORE instruction. It also, on behalf of the FP, initiates a data cache request for FLOADs and FSTOREs. The data cache support reads and writes of one to eight bytes of data in a single processor cycle.

The operand fetch control logic is comprised of the necessary logic to support the operand address translation, data cache reads and writes and any problems that may arise as a result of an operand reference. The ultimate responsibility of this logic is to validate all operand references. The MMU operand access pipeline always retains enough state in order to gracefully recover from d-stream perturbations that result from TB and cache misses. A list of the possible stalls and exceptions the MMU may encounter on an operand access are :

| Stalls | Exceptions |
|---|---|
| STORE Miss | Breakpoint detected |
| LOAD Miss | Write protection violation |
| DTLB Miss | Supervisor priviledge violation |
| Local TLB invalidates | Unaligned Address error |
| Cache inhibited LOAD | Region/Segment/Page Fault |
| Cache inhibited STORE | Load bus No Response |
| Forced LOAD miss | Load ECCU |
| Forced STORE miss | Load.lock access violation(lock-on-lock) |
| EASRC Bus Busy | Tbl. Walk Load No Response |
| DTLB/PMAPe M Bit Update | Tbl. Walk Load ECCU |
| Write Buffer Full | |
| PASRC Collision(store/inv) | |
| LOAD.(un)lock | |
| STORE.unlock | |
| External TB/Dcache Invalidates | |
| STORE.probe | |
| LOAD.physical | |

## Table 5.7 Operand Access Stalls and Exceptions

## 5.2.1 DECODE(OF) Stage

During the OF stage of instruction execution, the IP determines whether or not to arbitrate for the EASRC bus for use in a subsequent cycle. It does so if the decoded instruction is a LOAD, STORE, or a MxPR. The IP requests the bus from the MMU by asserting IP_EREQ(IP Early Request). However, timing contrians the IP from merging fetch stall information into this signal. The IP/MMU interface includes a signal called IP_ISTALL which signifies the current state of the I_unit pipeline, either stalled or not and IP_IMUX_CTRL which tells the MMU whether or not the IP is fetching from the cache or the prefetch buffer. The combination of these three signals will allow the MMU to determine if the IP *really* needs the EASRC bus the next cycle.

As mentioned earlier, the arbitration priority, lowest to highest, is : IP, MMU, BIF. The decision of ownership is *announced* in the EA stage based on the requests made in the OF stage.

## 5.2.2 EA Stage

During the EA phase, the winner of the EASRC bus arbitraion is usually known. Since the BIF is the highest priority requestor, it is guaranteed to be the EASRC bus master in the cycle subsequent to its request. No special signaling is required. The MMU is the default owner. The IP on the other hand, determines the result of the arbitration by sampling MMU_EASRC_BUSY. If asserted, the IP EASRC output buffers are tristated and the IP stalls(execute stall). The following state diagram highlights the EASRC bus arbitration process.

IP_REQ := IP_EREQ & IP_ISTALL & IP_IMUX_CTRL

Fig 5.6 EASRC Arbitration

When the IP finally gains control of the EASRC bus, it presents the effective address of the operand, the size of the operand, the operation type on the EASRC bus, IP_OPSIZE[1:0], IP_CACHE_OP[3:0] lines, respectively(Refer to section 6.1 – Data cache interface signals, for a detailed desription of these signals and their encoding). This information is loaded into the EAREG and the ACC stage of the MMU pipeline at the end of this cycle.

## 5.2.3 ACCESS(ACC) Stage

The actual cache read/write takes place during the ACC phase of a data cache access. Also, a partial tag comparison is made in this cycle. This implies that the DTLB is accessed in the ACC cycle and the proper set, containing the VA translation(PPN), is selected for comparison with the data cache physical tag. The ACC stage reflects the state of the operand reference currently in progress.

The ACC stage state is composed of the current operand address(CURRENT_EA), current operand size(CURRENT_SIZE), and the current cache operation type(CURRENT_OP) and any pending EASRC bus request. The source of this information is the EASRC bus, IP_SIZE, and IP_CACHE_OP, and IP_EREQ respectively. From this information, the MMU can determine the validity of the cache access(i.e. data cache or TB miss, access violation, etc..) in the subsequent cycle. In some cases(e.g access violations, unaligned address error, DTLB miss, force cache miss), faults are detected before the end of the ACC stage, but, signalling is delayed until the EXC stage to maintain a consistent model for trap reporting.

Since the MMU is the default master, the MMU will regain control of the EASRC bus in this stage if there are not any pending IP or BIF EASRC bus requests. If the CURRENT_OP is a STORE the MMU will recirculate the write miss virtual address and prepare the cache tag to be updated. If the CURRENT_OP is a LOAD, the Secondary TB miss address is recirculated and the cache is prepared for a TB lookup. These actions are done so that , probabilistically, the MMU could shave a cycle out of write miss or DTLB miss by assuming one of these two conditions will occur. If a write miss is not detected, the MMU will simply rewrite the tag. If a DTLB miss does not happen, the MMU will ignore the secondary TB tag it fetched.

### 5.2.4 EXCEPTION(EXC) Stage

Any stalls or exceptions resulting from the DTLB lookup or the data cache tag comparison are signalled in the second phase of cache access called, the EXCEPTION(EXC) stage. The EXC stage contains the state of a potentially faulting data cache reference.

The EXC stage state is composed of the *missed* operand address(MISS_EA), the *missed* operand size(MISS_SIZE), and the *missed* cache operation type(MISS_OP). This pipeline stage is fed directly from the previous pipeline stage, the ACC stage. Additionally, the result of the access check is saved in a register(DCHECK), which includes the CURRENT_EA/MISS_EA comparison result(write.miss merge) and the the physical address of the operand accessed is saved in the DPA(data physical address) register. This stage contains all the necessary information to complete a cache access check, to issue a request to the physical memory/I/O subsystem, if needed, to aid in stall recovery, and to signal any detected exceptions to the IP.

If the virtual address translation is in the DTLB(DTLB Hit),no access violations are deteced, the operand is in th data cache(Dcache Hit), and there are not any higher priority requestor for the EASRC bus, the IP and MMU pipeline progress, undisturbed. The operand transfer is considered *valid*. Normal Pipeline operation looks like this :

```
Instruction            1     2     3     4     5     6    Cycle      Program :
                                                                     i    : LOAD
           MMU     |    |     |     |ACC|EXC|                         i+1 : STORE
    i       IP   · | IF | OF  | EA  |DC |WL |

                       |  IF | OF  | EA  |ACC|EXC|
    i+1                 |    |     |     |DC |WL |
```

## Fig 5.7 Normal Pipeline Operation

Cycle                    Activity

1                      IP fetches instruction i [LOAD].

2                      IP requests use of EASRC Bus [asserts IP_EREQ] for instruction i .
                       IP fetches instruction i+1 [STORE]

3                      MMU gives bus to IP [negates MMU_EASRC_BUSY] for instruction i
                       IP presents data cache request [EASRC, IP_CACHE_OP,IP_SIZE] for instruction i.
                       IP requests use of EASRC Bus [asserts IP_EREQ] for instruction i+1.
                       MMU loads data cache request info for inst. i info into ACC stage at end of this
cycle.

4                      IP receives operand [from DATA bus] for instruction i from data cache.
                       MMU [ACC stage] begin checking instruction i access for validity.
                       MMU gives bus to IP [negates MMU_EASRC_BUSY] for instruction i+1.
                       IP presents data cache request[EASRC,IP_CACHE_OP,IP_SIZE ] for instruction i+1.

5                      MMU[EXC stage ] signals access for instruction i is valid [asserts MMU_EVALID]
                       IP transmits operand [on DATA bus] for instruction i+1 for write into data cache.
                       MMU[ACC stage] begins checking instruction i+1 access for validity.
6                      MMU[EXC stage ] signals access for instruction i+1 is valid [asserts MMU_EVALID]

The following psuedo-code details the kinds and cause of stalls and exceptions that can be detected by
the EXC stage.

### 5.2.5 Write Miss Merge(WMM) Stage

If a write miss is detected or an invalidate request is posted, the MMU will have asserted
MMU_EASRC_BUSY in the EXC(invalidates actually can happen in any cycle) stage. This type of stall has
the effect of stalling any instruction in its EA stage, while any other instruction in its DC or WL stage
progress. At the time the write miss was detected(WL of i), a LOAD(i+1) or STORE(i+1) could be in its DC
phase. It is useful to save the status of that cache access, rather than rerun that reference, after the
write miss service, to regain the access state of i+1. This state makes up the WMM stage.

### 5.3 Operand Access Exception Processing

### 5.3.1 Data read-miss

A read miss occurs whenever the data cache tag does not match the virtual address translation or when
the tag matches but the proper byte valid bits are not set properly. For example, if the IP reads byte 0 of a
cache line and all the valid bits for that line, except for byte 0, are set, a miss occurs even if the data
cache tag matches the virtual address translation.

When one of the above conditions exists, the MMU stalls the requesting processor and its the data cache
pipeline, by asserting MMU_EASRC_BUSY and negating MMU_EVALID. The MMU then gains control of the
EASRC, DATA, DTAG busses in preparation for the susequent cache allocation. The BIF supplies the
virtual address of the missed operand by placing it on the physical address bus, enabling the
PASRC-to-EASRC bus transceivers and also supplies the necessary cache control for the actual cache
allocation. A read request for two quadwords is made to the BIF if the missed reference was an integer

LOAD. The MMU supplies the physical address of the missed reference with the read request. Eight quadwords are fetched if the missed reference was a floating point LOAD on a 64-byte boundry. When the data becomes available to the MMU, the BUS IC notifies the MMU by placing the code for READ_MISS_DATA_AVAIL on the MEM_RESP control lines and places the requested data on the DATA bus. The MMU will also recirculate EASRC(2:0) and IP_SIZE(1:0) of the missed reference, during the allocation process. The new data and tag(supplied by the MMU) are written into the cache while the BIF increments the refill address on EASRC by 8. In the next cycle, the BIF writes the second quadword and associated taq into the data cache. As soon as the data requested by the IP/FP comes across the DATA bus, MMU_EVALID is asserted in the following cycle to indicate to the IP/FP that the requested data is available. When cache allocation is complete, the MMU conditionally restores the state of the EAREG by testing the CURRENT_OP field in the ACCESS_EA stage of the MMU pipeline. If a cache request was made in the cycle following the cache access that missed, CURRENT_EA, which contains the virtual address of the subsequent cache access, in the ACCESS_EA pipeline is placed on the EASRC bus to be loaded into the EAREG. Additionally, the MMU recirculates IP_CACHE_OP, IP_SIZE(for the external control PAL's benefit) of the reference, to restore the memory pipeline. The MMU then negates MMU_EVALID and the IP/FP pipelines continues with valid data.

The MMU and BIF always exchanges ownership of the EASRC bus when the MMU during the last line of the allocation. IF an ECCC error occurs on the last line of the cache allocation, the MMU will give the EASRC bus back to the BIF. The BIF then recirculates the address of the last cache line. Once valid data becomes available, the BIF must hold the address, control , and data one additional cycle for the new valid data. If an ECCU or bus error is detected, the BIF again holds the address, control, and data for additional cycle and the MMU will invalidate the bad line in the second cycle the address is held.

Cycle ——→

| | 1 | 2 | 3 | | | | | | | | | |
|---|---|---|---|---|---|---|---|---|---|---|---|---|
| EA | I | I+1 | I+2 | I+2 | I+2 | I+2 | I+2 | I+2 | I+2 | I+2 | I+2 | I+3 |
| ACC | | I | I+1 | I+1 | I+1 | I+1 | I+1 | I+1 | I+1 | I+1 | I+1 | I+2 |
| EXC | | | I | I | I | I | I | I | I | I | I | I+1 |
| EASRC(2:0) | IP I | IP I+1 | MMU I | MMU I | MMU I | MMU I | MMU I | MMU I | MMU I | MMU I+1 | IP I+2 | IP I+3 |
| EASRC(15:03) | IP I | IP I+1 | MMU I | MMU I | MMU I | MMU I | BIF miss1 | BIF miss1 | BIF miss2 | MMU I+1 | IP I+2 | IP I+3 |
| DTAG | cache I-1 | cache I | MMU I+1 | MMU I | MMU I | MMU I | MMU I | MMU I | MMU I | MMU I | cache I+1 | cache I+2 |
| DATA | cache I-1 | cache I | BIF NONE | BIF NONE | BIF NONE | BIF NONE | BIF NONE | BIF NONE | BIF miss1 | BIF miss2 | cache I+1 | cache I+2 |
| CACHE CONTROL — Tag / Data | RD RD | RD RD | RD RD | WR WR | WR WR | WR WR | WR WR | WR WR | WR WR | WR WR | RD RD | WR WR |
| IP_CACHE_OP | RD I | RD I+1 | WR I+2 | WR I+2 | WR I+2 | WR I+2 | WR I+2 | WR I+2 | WR I+2 | WR I+2 | WR I+2 | WR I+3 |
| IP_SIZE | IP I | IP I+1 | MMU I | MMU I | MMU I | MMU I | MMU I | MMU I | MMU I | MMU I+1 | IP I+2 | IP I+3 |
| MMU_DCACHE_CMD | NOP | NOP | WR I | WR I | WR I | WR I | WR I | WR I | WR I | RD I+1 | NOP | NOP |
| BIF_DCACHE_CMD | NOP | NOP | NOP | NOP | NOP | WR I | WR I | WR I | WR I | NOP | NOP | NOP |
| PASRC(29:00) | | . | MMU I | | | | BIF miss1 | BIF miss1 | BIF miss2 | | | |
| MMU_CMD | | | RD I | | | | | | | | | |
| BIF_RESP | | | | | | ARB nop | ARB nop | ARB nop | ARB avail | ARB avail | nop | nop |
| MMU_EASRC_BUSY | | | | | | | | | | | | |
| MMU_EVALID | | | | | | | | | | | | |
| MMU_ETRAP | | | | | | | | | | | | |

Fig. 5.8 Read Miss Resource Schedule

## Read Miss Timing - MISS1 the requested operand

Fig 5.9 Read Miss Timing Diagram

September 8, 1986              Rev 3.0              Apollo Confidential

## ECCC Error during fill(first word)

Fig 5.10 Read Miss – ECCC Error(first word)

Program :
i    : LOAD
i+1  : LOAD

## ECCC Error on last word of fill

Fig 5.11 Read Miss - ECCC Error(last word)

0

.

## ECCU Error during fill

Fig 5.12 Read Miss – ECCU Error

Fig 5.13 Read Miss Sequencer

### 5.3.2 Data write-miss

A write miss occurs whenever the data cache tag does not match the virtual address translation or when the tag matches and proper byte valid bits are not set properly. For example, if the IP writes byte 0 of a cache line and all the valid bits for that line, except for byte 0, are set, a miss occurs even if the data cache tag matches the virtual address translation.

If a write miss occurs, MMU_EASRC_BUSY is asserted to *conditionally* stall the IP/FP. The storing processor is not needed to service the write miss because the data is written into the cache(write allocated) before the miss is detected. The IP/FP need only stall if it needs to make a cache request while MMU_EASRC_BUSY is asserted. This conditional stall mechanism allows write miss serving to overlap instruction execution, thereby potentially increasing processor performance. If the processor does not make a cache request until after the write miss has been serviced, no penalties for missing would be incurred.

In addition, any cache reference that is beyond its EA stage of execution will proceed. This implies the possibility of having two memory references in their EXCeption stage at one time. The MMU can minimize the write miss penalty(cycles) for back-to-back cache references to the same cache line by merging the cache access state of the two memory references and updating/invalidating the cache tag accordingly with only one cache tag write cycle. Generally, since any memory reference beyond its EA stage of execution proceeds, the additional information gained allows the MMU more accurately determine when to recirculate(rerun) a cache reference. Cache references are usually rerun when two back-to-back cache references miss and are not to the same cache line.

Write miss servicing involves updating the data cache tag and valid bits appropriately. If the tag does not match the virtual address translation(physical address), the data cache tag is updated with the correct physical address and valid bits. If the data cache tag matches, but, the valid bits are not set properly, then the valid bits must be updated. The valid bits in the tag must at least match the bytes being written to by the processor to be considered set properly.

Write miss servicing begins by the MMU taking control of the EASRC, DATA, and DTAG busses. Once in control, the MMU places MISS_EA[15:03] onto the EASRC bus. The new physical address tag and valid bits are written into the cache in the next cycle. The MMU then checks CURRENT_OP to see if there are any pending cache requests. If so, the MMU recirculates CURRENT_EA onto the EASRC bus if that reference misses and was to a different cache line. Once CURRENT_EA is loaded into the EAREG, E_BUSY is negated and normal processor activity resumes.

The following figures highlight various cache sequences and their effect on the IP/FP. Refer to APPENDIX A, for additional write miss stall pipeline flows.

Cycle ——→

STORE R1 -> 1000
STORE R2 -> 2000
STORE R3 -> 3000

| | 1 | 2 | 3 | | | | | | | | | |
|---|---|---|---|---|---|---|---|---|---|---|---|---|
| EA | I | I+1 | I+2 | I+2 | I+2 | I+3 | | | | | | |
| ACC | | I | I+1 | | | I+2 | I+3 | | | | | |
| EXC | | | I | I+1 | | | I+2 | | | | | |
| EASRC(2:0) | IP I | IP I+1 | MMU I | MMU I+1 | IP I+2 | IP I+3 | | | | | | |
| EASRC(15:03) | IP I | IP I+1 | MMU I | MMU I+1 | IP I+2 | IP I+3 | | | | | | |
| DTAG | cache I-1 | cache I | cache I+1 | MMU I | MMU I+1 | cache I+2 | | | | | | |
| DATA | cache I-1 | cache I | cache I+1 | cache ??? | cache ??? | cache I+2 | | | | | | |
| CACHE CONTROL  Tag Data | RD RD | RD WR | RD WR | WR NOP | WR NOP | RD WR | | | | | | |
| IP_CACHE_OP | WR I | WR I+1 | WR I+2 | WR I+2 | WR I+2 | RD I+3 | | | | | | |
| IP_SIZE | IP I | IP I+1 | MMU I | MMU I+1 | IP I+2 | IP I+3 | | | | | | |
| MMU_DCACHE_CMD | NOP | NOP | WR I | WR I+1 | NOP | NOP | | | | | | |
| BIF_DCACHE_CMD | NOP | NOP | NOP | NOP | NOP | NOP | | | | | | |
| PASRC(29:00) | | | MMU I | MMU I+1 | | MMU I+2 | | | | | | |
| MMU_CMD | | | WR I | WR I+1 | | WR I+2 | | | | | | |
| BIF_RESP | | | | | | | | | | | | |

MMU_EASRC_BUSY

MMU_EVALID

MMU_ETRAP

Fig 5.14 Write Miss Resource Schedule

September 8, 1986

Rev 3.0

-93-

Program :

*Store.miss R1 -> 1000*
*Store.hit   R2 -> 1000*
*Store.hit  R3 -> 2000*
           *-or-*
*Store.miss R1 -> 1000*
*Store.hit   R2 -> 2000*
*Store.hit   R3 -> 3000*

Fig 5.14a Write Miss Flows

Program :

*Store.miss R1 -> 1000*
*Store.miss R2 -> 2000*
*Store.hit  R3 -> 2000*

Fig 5.14b Write Miss Flows

## Write Miss

Fig 5.15 Write Miss Timing Diagram

Program :
i   : Store.miss
i+1 : STORE.hit
i+2 : STORE.hit

EMPTY = MMU EASRC PIPE EMPTY
RECIRC = MMU RECIRCULATES I + 1 ADDR
INV = INVALIDATE ENTRY I
UPD = UPDATE ENTRY
C = CACHEABLE ENTRY
SAME = I AND I+1 ARE TO SAME CACHE LINE

THIS STATE DIAGRAM ASSUME THAT THE DEFAULT
EASRC MUX LEG IS FOR WRITE MISS.

Fig 5.16 Write Miss Sequencer

### 5.3.3 DTLB-miss

A primary data TLB(DTLB) miss occurs whenever the address on EASRC[31:16] does not match the virtual address tag in the DTLB or if that entry's valid bit is not set or if we are trying to write to a page that hasn't been modified yet. If a miss occurs, MMU_EASRC_BUSY is asserted and MMU_EVALID is negated which stalls the IP/FP/MMU pipelines. The MMU then gains control of the EASRC, DATA, and DTAG busses for subsequent secondary TLB check and potential table walk.

Once the MMU gains control over the above mentioned busses, it places the MISS_EA[24:12] field of the EXCEPTION pipeline onto EASRC bus to read the secondary TB. The secondary TB entry is then checked and loaded into the DTLB. Timing necessitates a minimum two cycle secondary TLB check. Once cycle is saved if the secondary TLB tag and data are loaded into the DTLB before the secondary TLB entry is checked. If the secondary TLB tag matches MISS_EA[28:25] and RMAPe[29:12] and the entry's valid bit is set, a secondary TLB hit occured and the data that was loaded into the DTLB is valid. If a miss occurs, the MMU must walk the tables to seek out the correct translation.

There is only one primary TB and Secondary TB(table walker) miss sequencer which is shared by both the d-stream and the i-stream. DTLB misses have priority over ITLB misses. The miss sequencing proceeds identically for ITLB as is for DTLB misses, except that XXX_PC addresses are used in the miss sequencing.

## DTLB Miss – Secondary TB Hit

Fig. 5.17 DTLB Miss

TBMISS = DTLB MISD
BUSY = TB MISS SEQUENCER NEEDS BUS
VALID = DATA VALID
RECIRC = RECIRC MISS_EA(24:12)
RECIRC1 = RECIRC MISS_EA(15:03)
RECIRC2 = RECIRC CURRENT_EA(15:03)
HIT = SECONDARY TB HIT
EMPTY = NOTHING IN MMU EASRC PIPE

SINCE TB MISS IS KNOWN IN THE
ACC STAGE, WE CAN USE THAT TO
OUR ADVANTAGE BY SETTING UP THE
EASRC MUX IN THE EXC STAGE TO
POINT TO TB MISS ADDR.

MODIFY THIS TO HANDLE ITLB MISS
SEQUENCING.

ASSUME MISS, ACCESS RMAP AND
PREPARE TO CHECK IT IF MISS.

Fig. 5.18 DTLB Miss Sequencer

### 5.3.4 Secondary TB-miss - Table Walk

If a secondary TLB miss was encountered, the MMU must walk the in-memory virtual memory page tables to retrieve the correct virtual-to-physical address translation. To prepare for the potential secondary TLB update, MISS_EA[24:12] is continually recirculated on the EASRC bus. The data cache RAMs are then disabled and the BUS IC's DATA bus drivers are enabled so page table data may be read from memory.

The first level of page tables resides on the MMU IC in the RMAP register. The RMAP is indexed by MISS_EA[31:29]. If RMAP[31:29] is valid, the table walk continues by accessing the SMAPs. If RMAP[31:29] is invalid, a region fault occured and a trap is signalled to the IP.

The MMU accesses the appropriate SMAPe by issuing a read longword request for the SMAPe at address RMAPe[MISS_EA(31:29)] || MISS_EA[28:19]. The BUS IC notifies the MMU the data is available by placing the code for READ_MISS_DATA_AVAIL on the MEM_RESP control lines and placing the requested data on the DATA bus. Once available, the data is loaded into the IN_DATA register in the MMU IC. The desciptor is valid if the valid bit is set. If invalid, a segment fault trap is signalled to the IP. If valid, the MMU proceeds to check for access violations. A write access violation occurs if MISS_OP = store and SMAPe.WA = 0. A supervisor priviledge vilation occurs if MISS_EA.SUPER = 0 and SMAPe.S = 1. Access violations only occur when the descriptor is valid. If an access violation is detected, a write protection violation trap or supervisor priviledge violation trap, respectively, is signlalled to the IP. If no violations are

found and the entry is not an indirect descriptor, SMAPe.S, SMAPe.X and SMAPe.WA are saved for later use. If the descriptor is valid and no access violations were detected and is not indirect, the address of the PMAPe, SMAPe[29:12] || MISS_EA[18:12], is placed on the physical address bus and a read longword request is made to the BUS IC. The MMU is notified of the arrival of data in the manner described above.

IF SMAPe.I = 1 and the descriptor is valid, the descriptor points to another SMAPe. If indirect, SMAPe[29:02] is placed on the physical address bus and a longword read request is made to the BUS IC and when the data is returned, the checking process repeats as desribed above.

Once available, the descriptor is checked for validity and any possible access violations. If invalid, a page fault trap generated. A write protection violation occurs if MISS_OP = store and PMAPe.WP = 1. If a write protection violation is detected, a write protection access violation trap is generated. Access violations only occur when the desciptor is valid. If the entry is valid and no access violations were found, PMAPe[29:12] contains the new virtual-to physical address translation. Also, PMAPe.C, PMAPe.WP, PMAPe.M are saved for later use.

IF PMAPe.I = 1 and the descriptor is valid, the descriptor points to another PMAPe. If indirect, PMAPe[29:02] is placed on the physical address bus and a longword read request is made to the BUS IC and when the data is returned, the checking process repeats as desribed above.

IF the PMAPe is valid and direct, the used and modified bits are checked to determine if the PMAPe needs updating. IF (PMAPe.V = 1 AND PMAPe.M = 0 AND EXCEPTION_EA.CACOP = store AND SMAPe.WA = 1 AND PMAPe.WP = 0), then PMAPe.M must be set. If (PMAPe.V = 1 AND (PMAPe.U1 = 0 OR PMAPe.U2 = 0) AND (EXCEPTION_EA.CACOP = load OR EXCEPTION_EA.CACOP = store) then both PMAPe.U1 and PMAPe.U2 must be set. To update a PMAPe, the MMU issues a read longword with lock request to the BUS IC for the PMAPe. After data is received the MMU must check the PMAPe again because another processor could have sneaked in and changed the state of the PMAPe since it last saw it. The checking repeats as descibed above. If the PMAPe still needs updating, the MMU places the modified PMAPe on the data bus and issues a write longword with unlock request to te BUS IC. If the desciptor no longer needs updating, the MMU simply gives up the lock by issuing a read unlock request.

Once the MMU has aquired a valid PMAPe and the necessary PMAPe updates are performed, the MMU can form the new TB tag and data. The TB data store is composed of PMAPe[29:12]. The protection bits of both primary and secondary TB tags are made up of SMAPE.S, SMAPe.X, PMAPe.M, PMAPe.C, and an MMU generated valid bit. The primary TLB virtual address tag is MISS_EA[31:15]. The secondary TB virtual address tag is composed of RMAPe[MISS_EA(31:29)] and MISS_EA[28:25].

After the TLB are updates, the MMU must completely rerun the cache access in which the miss was detected. If the missed access was a STORE operation, only tag need be checked. If a LOAD or FETCH, the data must sent to the IP/FP(negate E_BUSY) and the tag must be checked. If a cache miss occurs, cache allocation must be completed before control can be given back to the IP/FP.

If a TB invalidate interrupts the TB miss service, the entire table walk process must be repeated.

If any OS page table faults are detected, the MMU must clean up the data cache before it allow the processor to continue with trap sequencing if the missed operation or the subsequent operation were STORE operations. This is due to the fact that the data cache is always updated in the ACCESS phase of a store access. The MMU must invalidate the cache entry's pointed to by CURRENT_EA and MISS_EA if either was a STORE operation. If this weren't done, invalid data would be left in the data cache. The primary TLB entry pointer to by MISS_EA[14:12] must also be invalidated because it was updated earlier, assuming the secondary TLB check would result in a hit.

All access violations and OS page table faults generate traps and update the MMU STATUS REGISTER accordingly.

Fig 5.19 Table Walker State Diagram

### 5.3.5 Exceptions

Traps which occur because of memory reference access are known only after said instruction has changed processor state (i.e. the instruction is in it's WL stage). These are denoted "execute" traps. Current instruction execution is suspended and the execute trap immediately serviced. Two outstanding memory operations which have progressed past their EX stage can be in progress at the time of the execute trap. Instruction continue is applied to these memory reference instructions. Instruction restart is applied to any instruction in the pipeline which did not complete it EX stage. Any instruction in it's WE stage at the time of the execute trap will complete.

An MMU execute exception will execute stall the pipeline in the cycle the exception is signaled. In the subsequent cycle, the IP will signal an execute trap and begin service of the exception. An execute trap unconditionally generates an execute stall. Likewise, an MMU fetch exception will fetch stall the pipeline in the cycle the exception is signaled. In the subsequent cycle, the IP will signal a fetch trap. All MMU execeptions are signaled by the MMU for on cycle and captured and held by the IP. A fetch trap unconditonally generates a fetch stall.

The assertion of IP_TRAP_DISP tells the MMU to flush its operand access pipeline, so that potentially trapping references in the shadow of the currently trapping reference does not signal a trap(trap-on-trap).

## Exception detected at cache access time

Program :
i   : LOAD
i+1 : LOAD

Fig 5.21 ETRAP Pipeline Flow

Functional Operation                                                                                    6-27

| Cycle | Activity |
|---|---|

1          IP fetches instruction i [LOAD].

2          IP requests use of EASRC Bus [asserts IP_EREQ] for instruction i .
           IP fetches instruction i+1 [LOAD]

3          MMU gives bus to IP [negates MMU_EASRC_BUSY] for instruction i
           IP presents data cache request [EASRC, IP_CACHE_OP,IP_SIZE] for instruction i.
           IP requests use of EASRC Bus [asserts IP_EREQ] for instruction i+1.
           MMU loads data cache request info for inst. i info into ACC stage at end of this
cycle.

4          IP receives operand [from DATA bus] for instruction i from data cache.
           MMU [ACC stage] begin checking instruction i access for validity.
           MMU gives bus to IP [negates MMU_EASRC_BUSY] for instruction i+1.
           IP presents data cache request[EASRC,IP_CACHE_OP,IP_SIZE ] for instruction i+1.

5          MMU regains ownership of EASRC bus[asserts MMU_EASRC_BUSY].
           MMU[EXC stage] signals access for instruction i is invalid [negates MMU_EVALID]
           MMU detects access violation for instruction i's access[asserts MMU_ETRAP].
           IP will not load data for instruction i+1 because of stall.
6          IP asserts IP_ISTALL in response to trap. MMU stalls.
           MMU asserts MMU_EVALID and negates MMU_ETRAP.

7          IP negates IP_ISTALL and asserts IP_TRAP_DISP to signify the beginning of
           trap dispatch.
           IP_TRAP_DISP tells MMU to flush its pipeline[mark CURRENT_EA/PC as NOP].
           MMU pipeline continues.

8          IP fetches first instruction of trap code[IF stage]

## Exception detected during miss processing

Fig 5.22 ETRAP Pipeline Flow(during miss, TBL walk, etc.)

| Cycle | Activity |
|---|---|
| 1 | IP fetches instruction i [LOAD]. |
| 2 | IP requests use of EASRC Bus [asserts IP_EREQ] for instruction i .<br>IP fetches instruction i+1 [LOAD] |
| 3 | MMU gives bus to IP [negates MMU_EASRC_BUSY] for instruction i<br>IP presents data cache request [EASRC, IP_CACHE_OP,IP_SIZE] for instruction i.<br>IP requests use of EASRC Bus [asserts IP_EREQ] for instruction i+1.<br>MMU loads data cache request info for inst. i info into ACC stage at end of this cycle. |
| 4 | IP receives operand [from DATA bus] for instruction i from data cache.<br>MMU [ACC stage] begin checking instruction i access for validity.<br>MMU gives bus to IP [negates MMU_EASRC_BUSY] for instruction i+1.<br>IP presents data cache request[EASRC,IP_CACHE_OP,IP_SIZE ] for instruction i+1. |
| 5 | MMU regains ownership of EASRC bus[asserts MMU_EASRC_BUSY].<br>MMU[EXC stage] signals access for instruction i is invalid [negates MMU_EVALID]<br>MMU initiates miss sequencing.<br>IP will not load data for instruction i+1 because of stall. |

| 6 to n-5 | Miss processing taking place. |
|---|---|
| n-4 | MMU detects exception for instruction i's access[asserts MMU_ETRAP].<br>MMU negates MMU_EVALID. |
| n-3 | IP asserts IP_ISTALL in response to trap. MMU stalls.<br>MMU asserts MMU_EVALID and negates MMU_ETRAP. |
| n-2 | IP negates IP_ISTALL and asserts IP_TRAP_DISP to signify the beginning of trap dispatch.<br>IP_TRAP_DISP tells MMU to flush its pipeline[mark CURRENT_EA/PC as NOP].<br>MMU pipeline continues. |
| n-1 | IP fetches first instruction of trap code[IF stage] |

## 5.4 Instruction Access

An instruction is fetched from the instruction cache or the 1-deep, instruction prefetch buffer, when the IP and FP instruction pipelines are not stalled(Refer to IP and FP functional spec for information pertaining to internal IP/FP generated stalls). The instruction cache/prefetch buffer combination supports one or two instruction dispatch per processor cycle.

The instruction fetch control logic is comprised of the necessary logic to support the instruction address translation, instruction cache fetches and any problems that may arise as a result of an instruction reference. The ultimate responsibility of this logic is to validate all instruction cache references. The MMU instruction access pipeline always retains enough state in order to gracefully recover from i-stream perturbations that result from TB/cache misses and IP/FP generated stalls. A list of the possible stalls and exceptions the MMU may encounter on an instruction access are :

| Stalls | Exceptions |
|---|---|
| Fetch Miss | Breakpoint detected |
| Forced fetch miss | Write protection violation |
| ITLB Miss | Supervisor priviledge violation |
| ITLB/PMAPe M bit Update | Fetch No response |
| PCSRC Bus Busy(invalidates) | Fetch ECCU |
| | Region/Segment/Page Fault |
| | Execute Violation |
| | Translate No response |
| | Translate ECCU |

### Table 5.8 Instruction Access Stalls and Exceptions

### 5.4.1 ACCESS(IF) Stage

The IP/FP will fetch at least one instruction from the Icache/Iprefetch buffer every cycle if no internal stalls are detected. However, the Icache, is not necessarily accessed every cycle, even if the IP/FP are not

stalled(IP_ISTALL and FP_ISTALL negated). This happens when the IP fetches an instruction from an odd longword from the i-stream. From the IP's perspective, odd longword instruction are fetched from the prefetch buffer, and, therefore do not utilize the cache. The IP asserts IP_IMUX_CTRL when it is fetching from the prefetch buffer. In summary, a fetch request is being made if IP_ISTALL, FP_ISTALL, and IP_IMUX_CTRL are negated.

Since the PCSRC bus is shared by the IP,MMU and BIF, it is possible that he PCSRC bus may be busy when the IP needs it. The PCSRC bus arbitraiton priority from lowest to highest is : IP, MMU, BIF. If the bus is busy, the IP/FP is notified in the subsequent cycle(EXC).

The actual cache fetch takes place during the ACC phase of a instruction cache access. Also, a partial tag comparison is made in this cycle. This implies that the ITLB is accessed in the ACC cycle and the proper set, containing the VA translation(PPN), is selected for comparison with the instruction cache physical tag. The ACC stage reflects the state of the instruction reference currently in progress.

The ACC stage state is composed of the current instruction address(CURRENT_PC), and the state of CURRENT_REQ(This tell the MMU whether or not to recirculate CURRENT_PC if that instruction fetch was interrupted by an invalidate or miss). The source of this information is the PCSRC bus, IP_ISTALL, FP_ISTALL,and IP_IMUX_CTRL. From this information, the MMU can determine the *validity* of the cache access(i.e. instruction cache or TB miss, access violation, etc..) in the subsequent cycle. In some cases(e.g access violations, ITLB miss, force cache miss), faults are detected before the end of the ACC stage, but, signalling is delayed until the EXC stage to maintain a consistent model for trap reporting.

### 5.4.2 EXCEPTION(OF) Stage

During the EXC(OF) phase, the winner of the PCSRC bus arbitraion is known. Since the BIF is the highest priority requestor, it is guaranteed to be the PCSRC bus master in the cycle subsequent to its request. No special signaling is required. The IP is the default owner. The IP determines the result of the arbitration in a manner, different, than EASRC bus arbitration. If the bus is not given to the IP, the MMU would have already asserted MMU_PCSRC_BUSY to disabled the IP's output buffer. Additionally, the MMU negates, in the EXC stage, MMU_IVALID, to signify the fetched instruction was in error. When the bus become free, the MMU must recycle the instruction cache request. The following state diagram highlights the PCSRC bus arbitration process.

IP_REQ := $\overline{\text{IP\_ISTALL}}$ & $\overline{\text{IP\_IMUX\_CTRL}}$ & $\overline{\text{FP\_ISTALL}}$

Fig. 5.23 PCSRC Arbitration

The following psuedo-code details the kinds and cause of stalls and exceptions that can be detected by the EXC stage.

## 5.5 Instruction Access Exception Processing

### 5.5.1 Instruction read-miss

A fetch miss occurs whenever the instruction cache tag does not match the virtual address translation or when the tag matches and valid bit is not set.

When one of the above conditions exists, the MMU stalls the requesting processor and its the data cache pipeline, by asserting MMU_PCSRC_BUSY and negating MMU_IVALID. The MMU then gains control of the EASRC and ITAG busses in preparation for the susequent cache allocation. The BIF supplies the virtual address of the missed operand by placing it on the physical address bus, enabling the PASRC-to-PCSRC bus transceivers. A read request for four quadwords is made to the BIF. The MMU supplies the physical address of the missed reference with the read request. When the data becomes available to the MMU, the BUS IC notifies the MMU by placing the code for INST_MISS_DATA_AVAIL on the MEM_RESP control lines and places the requested data on the INST bus. The BIF writes the new data and tag(SUPPLIED BY MMU) into the cache while the BIF increments the refill address on PCSRC by 8. In the next cycle, the BIF writes the second quadword and associated taq into the instruction cache and so on. As soon as the instruction requested by the IP/FP comes across the INST bus, MMU_IVALID is asserted in the following cycle to indicate to the IP/FP that the requested instruction is available and remains asserted throughout the rest of the fill. When cache allocation is complete, the MMU restores the state of the PCREG with CURRENT_EA and IP_IMUX_CTRL, the address of the Icache reference(either from cache or prefetch buffer) that followed the missed reference. The MMU then negates MMU_PCSRC_BUSY and the IP/FP pipelines continues with valid data.

The MMU and BIF always exchanges ownership of the PCSRC bus when the MMU during the last line of the allocation. IF an ECCC error occurs on the last line of the cache allocation, the MMU will give the PCSRC

bus back to the BIF. The BIF then recirculates the address of the last cache line. Once valid data becomes available, the BIF must hold the address,control, and data one additional cycle. If an ECCU or bus error is detected, the BIF again holds the address and data for additional cycle and the MMU will invalidate the bad line in the second cycle the address is held.

Cycle ⟶

| | 1 | 2 | 3 | | | | | | | | | |
|---|---|---|---|---|---|---|---|---|---|---|---|---|
| IF | I | I+1 | I+1 | I+1 | I+1 | I+1 | I+1 | I+1 | I+1 | I+1 | I+1 | I+2 |
| OF | | I | I | I | I | I | I | I | I | I | I | I+1 |
| IP_IMUX_CTRL | IP | IP | MMU | MMU | MMU | MMU | MMU | MMU | MMU | MMU | MMU | IP |
| PCSRC(16:02) | IP I | IP I+1 | MMU I | MMU I | MMU I | MMU I | BIF miss1 | BIF miss2 | BIF miss3 | BIF miss4 | MMU I+1 | IP I+2 |
| ITAG | | cache I | cache I+1 | MMU I | MMU I | MMU I | MMU I | MMU I | MMU I | MMU I | MMU I | cache I+1 |
| INST | | cache I | cache I+1 | BIF NONE | BIF NONE | BIF NONE | BIF NONE | BIF I | BIF I | BIF I | BIF I | cache I+1 |
| CACHE CONTROL Tag / Data | RD RD | RD RD | RD RD | RD RD | RD RD | RD RD | WR WR | WR WR | WR WR | WR WR | WR WR | RD RD |
| BIF_DCACHE_CMD | NOP | NOP | NOP | NOP | NOP | WR I | WR I | WR I | WR I | WR I | NOP | NOP |
| PASRC(29:00) | MMU | MMU | MMU I | MMU | MMU | MMU | MMU | MMU | MMU | MMU | MMU | MMU |
| MMU_CMD | | | RD I | | | | | | | | | |
| BIF_RESP | NOP | NOP | NOP | NOP | | ARB | ARB | ARB avail | ARB avail | ARB avail | ARB avail | |

MMU_PCSRC_BUSY ⌐‾‾‾‾‾‾‾‾‾‾‾‾‾‾‾‾‾‾‾‾‾‾‾‾‾⌐

MMU_IVALID ‾‾⌐_____⌐‾‾

MMU_ITRAP ‾‾‾‾‾‾‾‾‾‾‾‾‾‾‾‾‾‾‾‾‾‾‾‾‾‾‾‾‾‾‾‾‾‾‾

Fig. 5.24 Fetch Miss Resource Schedule

## Instruction Cache Miss Timing

Fig 5.25 Fetch Miss Timing

## Instruction Cache Miss Timing – ECCC on first line

Fig 5.26 Fetch Miss – ECCC Error(first word)

## ECCC Error on last word of fill

Fig 5.27 Fetch Miss — ECCC Error(last word)

Program :
i    : LOAD
i+1 : LOAD

## ECCU Error on last word of fill

Fig 5.28 Fetch Miss – ECCU Error(last word)

EMPTY = MMU PCSRC PIPE EMPTY
RECIRC = MMU RECIRCULATES I + 1 ADDR
AVAIL = RECEIVED DATA FROM BIF
NOP = DATA NOT AVAILABLE YET, WAIT
ERROR = ECCC OR TIMOUT
DONE = N-1 ALLOC. DATA
WIP = WRITE IN PIPE( I + 1)
REQ_DATA = REQUESTED DATA

INSTRUCTION SEQUENCE :
I : INST1(MISSES)
I+1 : INST2

$NOGO = \overline{(\overline{DONE}\ \&\ \overline{REQ\_DATA}\ \&\ \overline{ERROR})} + \overline{AVAIL}$

$TVAR = \overline{(\overline{ERROR}\ \&\ DONE\ \&\ NOP)} + \overline{DONE}$

† MMU invalidates bad miss data

## Fig 5.29 Fetch Miss Sequencer

### 5.5.2 ITLB-miss

Since there is only one primary and secondary(Table walker) miss sequencer, all i-stream TB misses are directed to these state machines. All that is needed for the instruction side of things is a small state

machine that waits for the master TB miss sequencer, then, after the TB miss service is complete, the local ITLB miss state machine will recirculate the address of the instruction fetch that preceeded the missed fetch. If an error is found during the TB miss processing, the local state machine will signal the trap to teh IP.

ITBMISS = ITLB MISS
BUSY = TB MISS SEQUENCER NEEDS BUS
VALID = INST VALID
RECIRC1 = RECIRC MISS PC(16:03)
RECIRC2 = RECIRC CURRENT PC(16:03)
FOUND = TRANSLATION FOUND
ERROR = ERROR SERVICING TB MISS

Fig. 5.30 ITLB Miss Sequencer

## 5.5.3 Secondary TB-miss

Refer to Section 5.4.4.

## 5.5.4 Exceptions

MMU Fetch Exceptions/Checks consist of instruction pagefault, instruction access violation, instruction breakpoint or instruction translation parity error. All MMU Fetch traps are signaled by the MMU in the same way and serviced by the IP in the same manner. The IP will not dispatch the instruction in Dec_IR if the MMU signals a fetch exception/check. A reservation table indicating MMU Fetch Exception/Check trap activity is on a subsequent page.

If the MMU signals a fetch trap on an instruction. the three instructions prior to the instruction that trapped complete before the trap is serviced. The IP internally generates a fetch stall. The IP asserts IP_Istall. The IP waits for the MMU's operand access pipeline to drain. If an execute trap occurs it will be serviced immediately overriding the current fetch trap. Once the IP's pipeline quieces , the highest priority trap is taken and an entry point is generated. 'Memory Descriptor' state and the PSQ are frozen. If an execute trap is taken, the functionality is identical to that of the MMU execute exceptions/checks case. If no execute traps are detected, the IP will then assert IP_TRAP_DISP, upon trap entry. This will cause the MMU to purge its instruction access pipeline, so no inadvertant traps are generated.

## Exception detected at cache access time

Instruction     1    2    3    4    5    6    Cycle

i    IP    | IF | OF | ••• | OF$_{br1}$ | IF$_t$ OF$_{br2}$ | OF$_t$ |

i+1      | IF | ••• | OF$_{br1}$ | IF$_t$ OF$_{br2}$ | OF$_t$ |

PCSRC_BUSY

IVALID

ITRAP

IP_ISTALL

TRAP_DISP

Program :
i    : LOAD
i+1 : LOAD

### Fig. 5.31 ITRAP Pipeline Flow

| Cycle | Activity |
|---|---|
| 1 | IP fetches instruction i [LOAD].<br>MMU begins checking instruction i fetch for validity [ ACC stage] |
| 2 | IP fetches instruction i+1 [LOAD].<br>MMU completes access checking for instruction i fetch [EXC stage].<br>MMU signals to IP that previous fetch was invalid [negates MMU_IVALID]<br>MMU detects exception [ asserts MMU_ITRAP ].<br>Instruction i+1 is not loaded into the IP instruction register because of stall. |
| 3 | IP asserts IP_ISTALL in response to trap. MMU stalls.<br>MMU asserts MMU_IVALID and negates MMU_ITRAP. |
| 4 | IP negates IP_ISTALL and asserts IP_TRAP_DISP to signify the beginning of trap dispatch.<br>IP_TRAP_DISP tells MMU to flush its instruction pipeline [mark CURRENT_PC as NOP].<br>MMU pipeline continues. |
| 5 | IP fetches first instruction of trap code [IF stage] |

## Exception detected during miss processing

Fig. 5.32 ITRAP Pipeline Flow

1          IP fetches instruction i [LOAD].
           MMU begins checking instruction i fetch for validity [ ACC stage]

2          IP fetches instruction i+1 [LOAD].
           MMU completes access checking for instruction i fetch [EXC stage].
           MMU signals to IP that previous fetch was invalid [negates MMU_IVALID]
           MMU detects exception [ asserts MMU_ITRAP ].
           Instruction i+1 is not loaded into the IP instruction register because of stall.

3          MMU regains control over PCSRC bus to initiate miss processing. [ asserts
           MMU_PCSRC_BUSY].

n-4        MMU detects exception during miss processing.
           MMU asserts MMU_IVALID and negates MMU_ITRAP.
           IP is given use of PCSRC bus [ MMU negates MMU_PCSRC_BUSY].

n-3        IP asserts IP_ISTALL in response to trap. MMU stalls.

n-2        IP negates IP_ISTALL and asserts IP_TRAP_DISP to signify the beginning of

Functional Operation

trap dispatch.
IP_TRAP_DISP tells MMU to flush its pipeline[mark CURRENT_PC invalid].
MMU pipeline continues.

n-1    IP fetches first instruction of trap code[IF stage]

## 5.6 Invalidation

### 5.6.1 External Data Cache Invalidates

If a remote processor or I/O device writes into memory which is also contained in a local data cache, that entry must be invalidated so the local processor will always contain a *fresh* copy of the data that is in memory. When the BUS IC detects a write on the bus which is contained in the local data cache, an invalidate data cache request is posted to the MMU by placing the code for a data cache invalidate on the INV_REQ control lines.

In the cycle following the invalidate request, the EASRC and DTAG busses are given up to the MMU, and the BUS IC places the invalidate address on the EASRC bus. Also, MMU_EASRC_BUSY is asserted to conditionally stall the IP/FP. In the next cycle, the invalidate address is loaded into the EAREG and that cache entry is invalidated by clearing the byte valid bit of that entry. Also, the MMU recirculates CURRENT_EA[15:03] onto the EASRC bus if CURRENT_OP indicated that a IP/FP cache operation was interrupted. In the next cycle, control is given back to the IP/FP if needed and MMU_EASRC_BUSY is negated.

In the event an invalidate request is issued in the ACC stage of a STORE, a PASRC resource collision occurs. Since the invalidate has higher priority than the STORE, the MMU must negated MMU_EVALID to stall the IP and the MMU pipelines so the address of that STORE is not lost. Once the invalidate is completed, MMU_EVALID is asserted, and normal pipeline activity continues. The BIF must also track this stall since it has already been given the data for this STORE and is awaiting the address and command.

If an invalidate comes between the write miss update of two different memory references, the second write miss tag should not merge new valid bits with the previous state of the valid bits, rather, the valid bits should be cleared or at best, updated to reflect only the bytes that were being written to.

The following figures highlight the effect of invalidates on the IP and MMU piplienes. Refer to APPENDIX B, for additional invalidate pipeline diagrams.

Fig. 5.33a Invalidate Flows

Fig. 5.33b Invalidate Flows

## Dcache Invalidate

Fig. 5.34 Dcache Invalidate Timing(IF)

–119–

## Dcache Invalidate

Fig. 5.35 Dcache Invalidate Timing(OF)

## Dcache Invalidate

Fig. 5.36 Dcache Invalidate Timing(EA)

## Dcache Invalidate

Fig. 5.37 Dcache Invalidate Timing(DC)

### 5.6.2 External Instruction Cache Invalidates

If a processor or I/O device writes into memory which is also contained in a local instruction cache, that entry must be invalidated so the local processor will always contain a *fresh* copy of the data that is in memory. When the BUS IC detects a write on the bus which is contained in the local data cache, an invalidate instruction cache request is posted to the MMU by placing the code for a data cache invalidate on the INV_REQ control lines.

In the cycle following the invalidate request, the PCSRC and ITAG busses are given up to the MMU, and the BUS IC places the invalidate address on the PCSRC bus. Also, I_BUSY is asserted to conditionally stall the IP/FP. In the next cycle, the invalidate address is loaded into the PCREG and that cache entry is invalidated by clearing the valid bit of that entry. Also, the MMU recirculates CURRENT_PC[15:03] onto the PCSRC bus for the IP/FP cache operation that was interrupted. In the next cycle, control is given back to the IP/FP if needed and MMU_PCSRC_BUSY is negated.

## Icache Invalidate

Fig 5.38 Icache Invalidate

### 5.6.3 External TB Invalidates

External TLB invalidates are generated by a special command over the XBUS. If the BUS IC receives a TB invalidate request, it asserts the code for TB invalidate on the INV_REQ control lines. In the next cycle, the MMU takes control of the EASRC and DTAG busses and MMU_EASRC_BUSY is asserted. Also, the BUS IC places the TB invalidate address, VA(24:12), onto EASRC[15:03]. In the next cycle, the primary TB is checked for a match and the secondary TB is readied for invalidation(unconditional). If a match occurs in the primary TB, the corresponding TB entry is purged by clearing the entry's valid bit. Checking and clearing the valid bits can take up to three cycles, but the BIF need only supply the invalidate address for one cycle.If another TB invalidate comes in within this time, the BIF should convert the selective invalidate into a purge all TB invalidate request(TB invalidate overrun occured) Finally, the MMU recirculates CURRENT_EA[15:03] onto the EASRC bus if CURRENT_OP indicated that a IP/FP cache operation was interrupted. In the next cycle, control is given back to the IP/FP if needed and MMU_EASRC_BUSY is negated.

## External TB Selective Invalidate

Fig 5.39 External TB Selective Invalidate

### 5.6.4 Resource conflicts

An EASRC bus collision occurs whenver an Dcache or TB invalidate request is posted in the OF stage of an LOAD/STORE or MxPR instruction. The EASRC bus is always given up to the BIF. EASRC collisions result in at least the assertion of MMU_EASRC_BUSY.

A PCSRC bus collision occurs any time a Icache invalidate request is posted and there is not a fetch stall active. The PCSRC is always given up to the BIF. PCSRC collisions result in at least the assertion of MMU_PCSRC_BUSY.

A PASRC collision occurs whenever any invalidate requested is posted in the DC stage of a STORE/TB invalidate (assuming no forced hits) or when the MMU needs to use the PASRC bus to make an

Icache/Dcache fill request or OS mapping table descriptor fetch. Again, the PASRC bus is given up to the BIF. PASRC collision result in the assertion of MMU_EASRC_BUSY and the negation of MMU_VALID, if not already asserted.

### 5.7 Processor Register Access

MMU registers are accessed by means of MxPR instructions. All MxPR instructions have a pipeline depth of 4, from the IP's perspective, except any TB invalidate MTPR instructions. The data to written to a MMU register is actually written in the fifth cycle. Local Tb invalidate MTPR instructions are multicycle MMU operataions. A four cycle MxPR instructions will complete whether or not the preceeding instruction stalls. In the following diagram, if instruction misses, the MTPR will complete. The requested operation is encoded in the address of the MTPR reference and is decoded by the MMU.

```
Instruction        1    2    3    4      5    6    Cycle      Program :
                                                              i   : LOAD
         MMU     | IF | OF | EA |ACC|EXC|                      i+1 : MTPR
   i      IP                    |DC |WL |

                      | IF | OF | EA |ACC|
   i+1                                 |DC |
```

### Fig. 5.40 MTPR Pipeline Flows

| Cycle | Activity |
|---|---|
| 1 | IP fetches instruction i [LOAD]. |
| 2 | IP requests use of EASRC Bus [asserts IP_EREQ] for instruction i .<br>IP fetches instruction i+1 [MTPR] |
| 3 | MMU gives bus to IP [negates MMU_EASRC_BUSY] for instruction i<br>IP presents data cache request [EASRC, IP_CACHE_OP,IP_SIZE] for instruction i.<br>IP requests use of EASRC Bus [asserts IP_EREQ] for instruction i+1.<br>MMU loads data cache request info for inst. i info into ACC stage at end of this cycle. |
| 4 | IP receives operand [from DATA bus] for instruction i from data cache.<br>MMU [ACC stage] begin checking instruction i access for validity.<br>MMU gives bus to IP [negates MMU_EASRC_BUSY] for instruction i+1.<br>IP presents MTPR request[EASRC,IP_CACHE_OP,IP_SIZE ] for instruction i+1. |
| 5 | MMU[EXC stage ] signals access for instruction i is valid [asserts MMU_EVALID]<br>IP transmits operand [on DATA bus] for instruction i+1 for write into MMU registers. |

As mentioned earlier, local TB invalidates MTPRs behave differently than any other MTPR. Unlike other MTPRs, TB invalidates have no explicit destination(register). These types of MTPRs request different kinds of sequencing actions.

A Local TB invalidate MTPR will result in the assertion of MMU_EASRC_BUSY. All write buffer full and PASRC collision stalls encountered on local TB invalidates will also assert MMU_EASRC_BUSY. Since MMU_EASRC_BUSY stalls only stall instructions that wish to use the EASRC bus, memory referencing instructions that preceed the MTPR will 'pile' up in thier EXC stage. This complicates MMU control. So, to simplify the MMU hardware, all TB invalidate MTPRs must be surrounded by at least one non-memory referencing instruction. **This is an acrhitectural restriction.** With this solution, the local TB invalidate MTPRs have a pipeline depth of 4 for the IP/FP and a varying pipeline depth, depending on which TB invalidate action is being requested, for the MMU.

## Local Selective TB Invalidate

## Fig 5.XX Local TB Selective Invalidate

| Instruction | | 1 | 2 | 3 | 4 | 5 | 6 | Cycle | Program : |
|---|---|---|---|---|---|---|---|---|---|
| | MMU | | | | ACC | EXC | | | i : LOAD |
| i | IP | IF | OF | EA | DC | WL | | | i+1 : MFPR |
| i+1 | | | IF | OF | EA | ACC DC | | | |

## Fig. 5.41 MFPR Pipeline Flow

| Cycle | Activity |
|---|---|
| 1 | IP fetches instruction i [LOAD]. |
| 2 | IP requests use of EASRC Bus [asserts IP_EREQ] for instruction i . IP fetches instruction i+1 [MFPR] |
| 3 | MMU gives bus to IP [negates MMU_EASRC_BUSY] for instruction i IP presents data cache request [EASRC, IP_CACHE_OP,IP_SIZE] for instruction i. IP requests use of EASRC Bus [asserts IP_EREQ] for instruction i+1. MMU loads data cache request info for inst. i info into ACC stage at end of this cycle. |
| 4 | IP receives operand [from DATA bus] for instruction i from data cache. MMU [ACC stage] begin checking instruction i access for validity. MMU gives bus to IP [negates MMU_EASRC_BUSY] for instruction i+1. IP presents MTPR request[EASRC,IP_CACHE_OP,IP_SIZE ] for instruction i+1. |
| 5 | MMU[EXC stage ] signals access for instruction i is valid [asserts MMU_EVALID] MMU places operand [on DATA bus(31:00)] for instruction i+1 for read from MMU registers. |

## 5.8 Write Buffer Full

At indeterminate times, the write buffer becomes full due to several factors :

* Numerous successive 64 bit STOREs in the i-stream
    - The Xbus dictates that 64 bit writes take two cycles(addr/data, data).
* Higher priority bus traffic that keeps the local
    write buffer from emptying. The write buffer may become full even if

there are <64 bit STOREs in the i-stream.
* Any combination of the above.

When the write buffer becomes full, the IP/FP must not advance thier pipelines until adequate space is made available in the write buffer.

To effectively utilize the write buffer and to stall only when necessary, we have developed the following scheme. The foundation for this scheme is to have the write buffer assert WBUF_FULL when it has one slot left in the queue(in both the address and data BUS ICs) and to have one 64-bit holding(overflow) register in the DATA BUS IC. If WBUF_FULL is asserted and the MMU detects a IP/FP write request in the CURRENT_EA stage of the MMU pipeline, the MMU will assert MMU_EVALID in the EXC phase of that reference. This will cause the IP/FP to stall uncondtionally until the write buffer empties. We will have a sufficiently large write buffer so that this type of stall will not occur frequently. To illustrate this concept, refer to the following :

Fig 5.xx Write Buffer Full

Rev 4.0

October 1, 1987

Modifications and substitutions made by one of ordinary skill are considered to be with the scope of the present invention, which is not to be limited except by the claims which follow.